(19) Europäisches Patentamt
European Patent Office
Office européen des brevets

(11) EP 4 381 345 B1

(12) EUROPEAN PATENT SPECIFICATION

(45) Date of publication and mention of the grant of the patent:
**27.05.2026 Bulletin 2026/22**

(21) Application number: **22761129.0**

(22) Date of filing: **03.08.2022**

(51) International Patent Classification (IPC):
***G02F 1/1347*** *(2006.01)* ***G02F 1/139*** *(2006.01)*
***B32B 7/12*** *(2006.01)* ***B32B 17/06*** *(2006.01)*
***C09K 19/34*** *(2006.01)* ***C09K 19/60*** *(2006.01)*
***E06B 3/67*** *(2006.01)* ***E06B 9/24*** *(2006.01)*
*C09K 19/30* *(2006.01)*

(52) Cooperative Patent Classification (CPC):
**G02F 1/1396; B32B 7/12; B32B 17/06; C09K 19/3491; C09K 19/3497; C09K 19/60; C09K 19/601; E06B 3/6715; E06B 9/24; G02F 1/13475;** C09K 2019/3004; C09K 2019/3009; C09K 2019/3016; C09K 2019/3019; C09K 2019/3021; (Cont.)

(86) International application number:
**PCT/EP2022/071775**

(87) International publication number:
**WO 2023/012202 (09.02.2023 Gazette 2023/06)**

(54) **SWITCHING LAYERS FOR USE IN A WINDOW ELEMENT**

SCHALTSCHICHTEN ZUR VERWENDUNG IN EINEM FENSTERELEMENT

COUCHES DE COMMUTATION DESTINÉES À ÊTRE UTILISÉES DANS UN ÉLÉMENT DE FENÊTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2021 EP 21190139**

(43) Date of publication of application:
**12.06.2024 Bulletin 2024/24**

(73) Proprietor: **Merck Patent GmbH**
**64293 Darmstadt (DE)**

(72) Inventors:
- **JUNGE, Michael**
  **64293 DARMSTADT (DE)**
- **BEYER, Andreas**
  **64293 DARMSTADT (DE)**

(74) Representative: **Merck Patent Association**
**Merck Patent GmbH**
**64271 Darmstadt (DE)**

(56) References cited:
**WO-A1-2014/180525**
**WO-A1-2020/254219**
**JP-A- H04 214 535**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C09K 2019/3078; E06B 2009/2464; G02F 1/13471

## Description

The present invention relates to window elements which comprise two switching layers, wherein the switching layers each comprise a liquid-crystalline medium containing one or more dichroic dyes and wherein in one of the optical states both switching layers have a twisted or supertwisted nematic configuration, wherein the handedness or helicity of the twisting of one of the two switching layers is opposite in direction with respect to the other switching layer. The invention further relates to the use of the window elements for applications in buildings and vehicles with energy savings and improved comfort.

Devices for controlling or modulating the transmission of light are commonly used in display applications, but they may also be used e.g. in so-called smart windows applications. R. Baetens et al. in "Properties, requirements and possibilities of smart windows for dynamic daylight and solar energy control in buildings: A state-of-the-art review", Solar Energy Materials & Solar Cells, 94 (2010) on pages 87-105 review different dynamic smart windows. As described therein, smart windows can make use of several technologies for modulating the transmittance of light such as devices based on electrochromism, liquid crystal devices and electrophoretic or suspended-particle devices.

Light shutters and optical intensity modulators, in particular liquid crystal-based light modulators, may be used in switchable windows for architectural, automotive, railway, avionic and nautical applications.

In such devices the transmission of light may be reversibly changed wherein the intensity of incident light can be attenuated, dimmed or tinted. These devices may thus be operated in and switched between a bright state and a dark state, i.e. between a state of relatively higher light transmission and a state of relatively lower light transmission, while however preferably exhibiting little or no scattering or haze in the different states of operation.

While switching in liquid crystal-based devices between the different optical states may also be thermally controlled, it is in many cases advantageous and suitably preferred that the devices adopt the different optical states using electrical switching, where the application of voltage controls the switching. Such liquid crystal-based devices in principle employ a change in the orientation of liquid crystal (LC) molecules between two conductive electrodes by applying an electric field which results in a change of the transmittance.

In principle, several modes or configurations may be employed to provide such reversible transmission change. For twisted nematic (TN), super-twisted nematic (STN) and vertical alignment (VA) liquid crystal cells, polarizers are commonly used to control the light transmission. It is also possible to use guest-host liquid crystal cells which are based on a liquid crystal host which is doped with dichroic dye molecules. These guest-host systems can be used without any polarizers to alter the light transmission. However, in some embodiments and applications guest-host liquid crystal cells are also used in combination with at least one polarizer.

WO 2017/118465 A1 describes devices for regulating the entry of light into a room comprising a switchable layer which contains a dichroic dye-doped liquid crystalline medium and which in one of the switching states has a twisted configuration.

WO 2014/180525 A1 describes devices for regulating the passage of light, wherein the devices comprise two switching layers, in particular provided in a so-called double cell arrangement, and wherein the two switching layers each comprise a liquid-crystalline medium containing one or more dichroic dyes. In one of the embodiments the switching layers may have a twisted arrangement.

There is still a need in the art for versatile and adaptable devices for regulating the passage of light and in particular switchable windows which give effective and efficient switching performance.

An object of the present invention is therefore to provide multilayer arrangements and window elements, in particular for use in switchable or smart windows for architectural, automotive, avionic and nautical applications, which can provide favourable control of ambient light and have an advantageous performance during the operation and which can in particular give benefits in terms of the electro-optical characteristics. Further objects of the present invention are immediately evident to the person skilled in the art from the following detailed description.

The objects are solved by the subject-matter defined in the independent claims, while preferred embodiments are set forth in the respective dependent claims and are further described below.

The present invention in particular provides the following items including main aspects, preferred embodiments and particular features, which respectively alone and in combination contribute to solving the above objects and eventually provide additional advantages.

A first aspect of the present invention provides a window element, which comprises a multilayer arrangement for regulating the passage of light and which is operable in and electrically switchable between a bright state and a dark state, wherein the multilayer arrangement comprises a first switchable layer and a second switchable layer each containing a liquid-crystalline medium comprising one or more dichroic dyes and optionally one or more chiral compounds, wherein in one of the states the first switchable layer and the second switchable layer have a twisted nematic or supertwisted nematic configuration and wherein the twisting direction of one of the first and second switchable layers is clockwise and the twisting direction of the other switchable layer is anticlockwise.

According to the invention advantageous multilayer assemblies comprising two switching layers are configured,

wherein these assemblies can favourably be used in switchable windows for architectural, automotive, avionic and nautical applications. The multilayer arrangements are particularly useful and efficient in providing a change in light transmission when desired by offering switchability, in particular electrical switchability, between a bright state and a dark state.

In the present invention it was recognized that providing a combination of two switching layers in the layer arrangement of the window element can in principle give a favourably high transmission range, in particular a suitably large transmission difference between the optically bright state and the optically dark state. In addition, it was recognized that the switching performance may further be favourably influenced by providing a twisted or supertwisted configuration in one of the switching states, preferably in the dark state.

It was further recognized that each layer of the multilayer arrangement may influence or affect the optical performance of the window element, e.g. considering optical losses through unwanted reflection or unwanted absorption, and that therefore it is desirable to maintain or even enhance device effectiveness and efficiency.

It has surprisingly been found that a window element comprising a multilayer arrangement having an effective and efficient optical and in particular electro-optical performance can be obtained by including two switching layers with a twisted or supertwisted configuration which have opposite chirality or handedness, i.e. in one of the optical states, preferably in the dark state, one of the switching layers exhibits a right-handed or respectively clockwise twisting while the other switching layer exhibits a left-handed or respectively anticlockwise twisting.

Compared to the case where two switching layers having the same handedness, i.e. two layers which have both clockwise twisting or respectively two layers which have both anticlockwise twisting, it has been surprisingly found that several benefits can be obtained by providing the window elements according to the present invention which combines switching layers having opposite twisting directions.

In particular, the window element according to the invention can achieve a larger transmission difference between the optically bright state and the optically dark state, wherein especially a more effective dark state with a still lower transmission is advantageously obtainable while maintaining an excellent bright state. This is particularly useful for applications where it is desirable or even required to only allow a minimal light transmission in one of the states, e.g. to give a strongly dark or black appearance. In addition, this provision thus favourably can give an improved contrast between the bright state and the dark state. Furthermore, the window element according to the invention can give benefits in terms of the viewing angle dependence both with respect to the desired contrast and colour appearance, wherein unwanted angular dependence of the contrast or colour artefacts related to the viewing angle can be minimized or even avoided. This enables the consistent setting of the contrast and chromaticity coordinate with greater ease and gives design options, e.g. also for curved layers and substrates. Furthermore, the window element according to the invention, when being aligned by the starting directions of the twisting, can give benefits in terms of directional solar light management during daytime.

Without wishing to be bound by theory, it is believed that when two switching layers of the same chirality or handedness are provided in series and light incident on the multilayer arrangement thus passes successively through both switching layers, the desired or envisaged optical characteristics of the light are influenced and affected, e.g. in that linearly polarized components of light are unintendedly transformed into elliptical or only partially polarized components which may detract from the optical characteristics of the light ultimately exiting the window element, thus affecting the optical performance for example in terms of the transmission properties, the obtainable contrast and the viewing angle dependence. It is further believed that when light passes through two switching layers having opposite chirality or handedness as provided according to the invention one after the other, the unwanted or unintended loss in optical quality or characteristics can be minimized or even avoided, wherein by providing opposite handedness advantageously the second switching layer may compensate for unwanted optical effects or artefacts caused by the first switching layer and possibly also by further preceding other layers. This way benefits in the optical performance are obtainable, including an excellent dark state with decreased light transmission while having a large transmission range with respect to the bright state transmission.

The window element according to the invention may be provided in a facile and robust process in view of the ease of configuration and assembly.

The window element according to the invention may also give further benefits such as suitable reliability, durability and stability, e.g. with respect to electrical breakdown and light stability, in particular UV light stability, as well as a favourably low switching voltage and low energy consumption. In this respect, in accordance with the present invention liquid-crystalline media with improved chemical, physical and electro-optical properties may be favourably and advantageously used, wherein the media in particular may have a broad liquid-crystalline phase with a suitably high clearing point, a favourably high voltage holding ratio (VHR), good low-temperature stability and suitable stability for storage.

In addition, the device can show fast, efficient and uniform switching also over large device areas, which is desirable for larger windows.

The window element according to the invention is useful for regulating or modulating the passage of light, in particular for controlling the passage of sunlight. The window element is capable of undergoing reversible optical transitions, wherein such switching is fast, typically on the order of less than a second. Preferably the device can

conveniently be switched between the states by applying an electrical voltage.

Furthermore, the window element may be installed with minimum space requirement, which can offer significant advantages, e.g. in comparison to traditional awnings or blinds. The window element according to the invention may advantageously be employed in a window of an external façade of buildings, but it may also be used for cars, commercial vehicles, trains, airplanes, ships, etc.

Therefore, another aspect of the invention relates to the use of the window element according to the invention in a window of a building or a vehicle.

The window elements can be used in sustainable glazing applications in buildings and vehicles, in particular by giving energy savings with respect to lighting, cooling and/or heating and by positively impacting the lifecycle e.g. in terms of maintenance, while in addition providing improved thermal and visual comfort.

Further described herein is a set of compositions which comprises

- a first liquid-crystalline medium having a clearing point of at least 80°C and comprising one or more dichroic dyes and a stereoisomer of a chiral dopant, preferably the R-isomer, and
- a second liquid-crystalline medium having a clearing point of at least 80°C and comprising one or more dichroic dyes and another stereoisomer of said chiral dopant, preferably the S-isomer.

These sets or systems including the two separate compositions can advantageously be provided or supplied in a facile manner as the materials used respectively in the two switching layers of the window element.

Without limiting the present invention thereby, in the following the invention is illustrated by the detailed description of the aspects, embodiments and particular features, and particular embodiments are described in more detail.

The term "liquid crystal" (LC) herein preferably relates to materials or media having liquid-crystalline mesophases in some temperature ranges (thermotropic LCs). They contain mesogenic compounds.

The terms "mesogenic compound" and "liquid crystal compound" mean a compound comprising one or more calamitic (rod- or board/lath-shaped) or discotic (disc-shaped) mesogenic groups, i.e. groups with the ability to induce liquid-crystalline phase or mesophase behaviour.

The LC compounds or materials and the mesogenic compounds or materials comprising mesogenic groups do not necessarily have to exhibit a liquid-crystalline phase themselves. It is also possible that they show liquid-crystalline phase behaviour only in mixtures with other compounds. This includes low-molecular-weight nonreactive liquid-crystalline compounds, reactive or polymerisable liquid-crystalline compounds, and liquid-crystalline polymers.

A calamitic mesogenic compound is usually comprising a mesogenic core consisting of one or more aromatic or non-aromatic cyclic groups connected to each other directly or via linkage groups, optionally comprising terminal groups attached to the ends of the mesogenic core, and optionally comprising one or more lateral groups attached to the long side of the mesogenic core, wherein these terminal and lateral groups are usually selected e.g. from carbyl or hydrocarbyl groups, polar groups like halogen, nitro, hydroxy, etc., or polymerisable groups.

For the sake of simplicity, the term "liquid crystal" or "liquid-crystalline" material or medium is used for both liquid crystal materials or media and mesogenic materials or media, and vice versa, and the term "mesogen" is used for the mesogenic groups of the material.

The term "non-mesogenic compound or material" means a compound or material that does not contain a mesogenic group as defined above.

The term "chiral" in general is used to describe an object that is non-superimposable on its mirror image. By contrast, "achiral" (non-chiral) objects are objects that are identical to their mirror image. The media preferably used according to the invention exhibit chirality. This can be achieved by providing cholesteric liquid crystals, which are also known as chiral nematic liquid crystals. The terms chiral nematic and cholesteric are used synonymously herein, unless explicitly stated otherwise.

Herein, 1,4-cyclohexylene rings and 1,4-phenylene rings are depicted as follows:

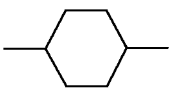 , 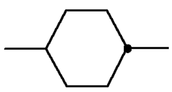 , 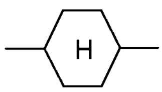 or 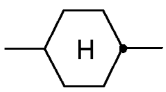 ;

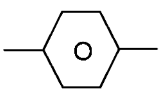 or 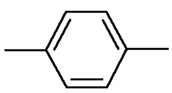 .

The cyclohexylene rings are trans-1,4-cyclohexylene rings.

Herein, unless explicitly stated otherwise, all concentrations are given in weight percent and relate to the respective complete mixture.

All temperatures are given in degrees centigrade (Celsius, °C) and all differences of temperatures in degrees centigrade. All physical properties and physicochemical or electro-optical parameters are determined and given for a temperature of 20 °C, unless explicitly stated otherwise.

For the purposes of the present invention, the term energy is taken to mean in particular energy by electromagnetic radiation in the UV-A, VIS and NIR region. In particular, it is taken to mean energy by radiation which is not absorbed or is only absorbed to a negligible extent by the materials usually used in windows, for example glass. Herein, the UV-A region is taken to mean the wavelength range from 320 to 380 nm, the VIS region is taken to mean the wavelength range from 380 nm to 780 nm and the NIR region is taken to mean the wavelength range from 780 nm to 2500 nm.

The term light is in particular taken to mean electromagnetic radiation having wavelengths from 380 nm to 780 nm. Transmission and scattering of light therefore preferably refer to the transmission and scattering of electromagnetic radiation in the spectral range from 380 nm to 780 nm.

Herein, a dichroic dye is taken to mean a light-absorbing compound in which the absorption properties are dependent on the orientation of the compound relative to the direction of polarisation of the light. A dichroic dye compound in accordance with the present invention typically has an elongated shape, i.e. the compound is significantly longer in one spatial direction, i.e. along the longitudinal axis, than in the other two spatial directions. Typically the dichroic dye is dissolved in a host liquid crystal with the purpose of absorbing light, where the dye molecule is aligned with the liquid crystal and can be oriented with the liquid crystal molecules upon application of an electric field. Preferably, the dichroic dyes used herein have an absorption maximum in the visible wavelength range. Dichroic dyes are known to the skilled person and are well described in the literature, e.g. in Liquid Crystals: Applications and Uses, Volumes 1-3, edited by Birenda Bahadur, World Scientific, 1992. Chapter 11: Dichroic Liquid Crystal Displays.

The terms "film" and "layer" include rigid or flexible, self-supporting or freestanding films or layers with more or less pronounced mechanical stability, as well as coatings or layers on a supporting substrate or between two substrates.

A window element preferably and suitably is used as a component of a window and together with for example further fittings and framing may be used to provide windows e.g. to openings in buildings or vehicles and as facades or in interior partitions.

A switchable layer can be arranged on a substrate or between two substrates. The switchable layer generally contains an active material, i.e. a material which can reversibly undergo a change which influences the optical behaviour and in particular the transmission behaviour of light passing through the layer, and is operable in different optical states and in particular is electrically switchable.

Switching according to the invention in particular means electrical switching. Electrical switching can typically be achieved by providing substrates, e.g. glass substrates or plastic substrates, with electrodes. In an embodiment electrically conductive layers are provided on the substrates, wherein the conductive layers comprise or are formed of a transparent conductive material, e.g. a transparent conductive oxide, preferably indium tin oxide (ITO) or $SnO_2$:F, in particular ITO, or a conductive polymer, or a thin transparent metal and/or metal oxide layer, for example silver. The electrically conductive layers are preferably provided with electrical connections. The voltage is preferably supplied by a battery, a rechargeable battery, a supercapacitor or an external current source, more preferably by an external current source.

According to the invention a window element is provided which comprises a multilayer arrangement, in particular multiple layers which are stacked such that starting from a surface of a first layer receiving incident light this light passes through all the layers sequentially.

The window element is operable in and electrically switchable between a bright state and a dark state, wherein in one of the states the first switchable layer and the second switchable layer have a twisted nematic or supertwisted nematic configuration. It is preferred that the switchable layers exhibit the twisted nematic or supertwisted nematic configuration in the dark state. In this case the dichroic compounds contained in the liquid-crystalline media of both switching layer are twisted and oriented such that they can absorb the light to a substantial extent and thus effectively attenuate the light transmission through the device.

The twisted nematic or supertwisted nematic configuration as provided according to the present invention can include the so-called twisted nematic (TN) mode, the so-called supertwisted nematic (STN) mode and also the reverse modes such as the vertical alignment-supertwisted nematic (VA-STN) mode.

Switching of the window element preferably refers to the switching between binary states.

According to the invention the window element comprising the switchable layers is switchable between an optically bright state and an optically dark state. In this respect, the bright state has a larger degree of light transmission compared to the dark state. Both the bright state and the dark state are preferably non-scattering or substantially non-scattering.

In the bright state the window element comprising the switchable layers according to the invention preferably has a degree of visible light transmission, determined in accordance with DIN EN410, of at least 30 %, more preferably at least 40 %, and even more preferably at least 45 %.

In the dark state the window element comprising the switchable layers according to the invention preferably has a

degree of visible light transmission, determined in accordance with DIN EN410, of less than 10 %, more preferably less than 5 %, and even more preferably less than 3 %. In a preferred embodiment, in the dark state the the window element comprising the switchable layers has a degree of visible light transmission, determined in accordance with DIN EN410, in the range from 1 % to 15 %, and more preferably in the range from 2 % to 8 %.

However, it is also possible for the switchable layers, the multilayer arrangement and the window element to have further switching states, in particular intermediate states.

In addition to a favourable optical anisotropy, the liquid-crystalline media comprised in the switchable layers according to the invention can advantageously exhibit a favourably high voltage holding ratio (VHR) in combination with good light stability and a suitably high clearing point.

Preferably, the liquid-crystalline medium contained in the first switchable layer and the liquid-crystalline medium contained in the second switchable layer each has a clearing point of 80°C or more, more preferably 90°C or more, even more preferably 100°C or more, and in particular 115°C or more. It is preferred that the media each have a clearing point in the range from 80°C to 170°C and more preferably from 100°C to 150°C.

All physical properties and physicochemical or electro-optical parameters are determined by generally known methods, in particular according to "Merck Liquid Crystals, Physical Properties of Liquid Crystals", Status Nov. 1997, Merck KGaA, Germany.

The clearing point, in particular the phase transition temperature between the nematic phase or respectively the chiral nematic or cholesteric phase and the isotropic phase, can be measured and determined by commonly known methods, e.g. using a Mettler oven or a hot-stage under a polarizing microscope. According to the invention the clearing point is preferably determined using a Mettler oven.

The high clearing point as defined can be beneficial in terms of the performance and the reliability of the multilayer arrangement and the devices which comprise the multilayer arrangement. In particular, the medium can maintain its functional properties over a suitably broad temperature range and also at elevated temperatures. This can be particularly advantageous for the use in window elements for regulating the passage of sunlight, especially when the window elements are exposed to direct or prolonged irradiation by sunlight. The high clearing point can also contribute to a favourably high degree of order of the liquid-crystalline host molecules, and hence the dichroic dye guest molecules at typical working temperatures, which can increase the obtainable contrast between the switching states.

Preferably, the magnitude of the pitch of the first switchable layer differs from the magnitude of the pitch of the second switchable layer by 25% or less and more preferably by 10% or less. It is particularly preferred that the magnitude of the pitch of the first switchable layer is the same, or substantially the same, as the magnitude of the pitch of the second switchable layer.

The provision of a similar or same magnitude of the pitch can favourably contribute to efficiently compensating unwanted optical artefacts in the layers and thus to obtaining the advantageous electro-optical characteristics of the switchable window element.

The pitch herein means the pitch p of the cholesteric helix, wherein the pitch p is the distance for the orientational axis (director) of the chiral or cholesteric LC to undergo a $2\pi$ rotation.

The pitch is preferably determined from NIR spectroscopic measurement, in particular at 20°C, of the wavelength of the selective reflection maximum $\lambda_{max}$. The pitch p is determined from the measured value of $\lambda_{max}$ using the equation $\lambda_{max} = n(\lambda_{max}) * p$, wherein $n(\lambda_{max})$ is the refractive index at $\lambda_{max}$.

It is also possible to use the wedge cell method which is known in the art to measure, in particular at 20°C, the helical twisting power HTP and to confirm the determined pitch.

The cholesteric or chiral nematic media as presently provided preferably have a relatively long pitch, in particular a pitch which gives Bragg-type reflection of greater than 780 nm, i.e. reflection of visible light by the cholesteric medium is favourably avoided or excluded.

The rotation direction of the helix, i.e. the twisting direction, may be clockwise, i.e. right-handed, or respectively anticlockwise, i.e. left-handed.

The respective handedness and helical twisting or screw-like turning are present in relation to the pathway of the incident light passing through the two switchable layers in series.

According to the invention, the chiral or cholesteric helix of the first switchable layer exhibits opposite handedness with respect to the cholesteric helix of the second switchable layer.

It is preferred that the absolute value of the dielectric anisotropy of the liquid-crystalline medium contained in the first switchable layer and the liquid-crystalline medium contained in the second switchable layer each is 2.5 or more, more preferably 3.0 or more.

Above and below, $\Delta\varepsilon$ denotes the dielectric anisotropy, wherein $\Delta\varepsilon = \varepsilon_{\parallel} - \varepsilon_{\perp}$. The dielectric anisotropy $\Delta\varepsilon$ is determined at 20°C and 1 kHz.

In a preferred embodiment the liquid-crystalline media comprised in the first and second switchable layers according to the invention have a positive dielectric anisotropy. In this case preference is given to liquid-crystalline mixtures having a dielectric anisotropy $\Delta\varepsilon$ in the range from 3 to 45, more preferably in the range from 5 to 30.

In an alternative embodiment it is however also possible to provide LC media having a negative dielectric anisotropy. In this case preference is given to liquid-crystalline mixtures having a dielectric anisotropy $\Delta\varepsilon$ in the range from -6 to -3.

According to the invention the liquid-crystalline media contained in the first and second switchable layers each contain one or more pleochroic dyes, in particular one or more dichroic dyes.

The absorption maximum of the dichroic dye or dyes optionally used in the liquid-crystalline media is not specifically limited, but it is preferred to have an absorption maximum in the yellow region (Y), magenta region (M), or cyan region (C). The dichroic dye preferably used in the liquid crystal media of the present invention may be a single compound or a combination of a plurality of dyes. When several dyes are mixed it is preferred to use a mixture of the dichroic dyes having absorption maxima in the Y, M, and C regions, respectively. Dichroic dyes are known to the person skilled in the art and are reviewed in for example Cowling, Stephen J., Liquid Crystal Dyes, in: Handbook of Liquid Crystals, Wiley-VCH Verlag GmbH & Co. KGaA (2014). Methods of displaying a full colour by mixing a yellow dye, a magenta dye and a cyan dye is specifically described in "Colour Chemistry" (by Sumio Tokita, Maruzen Company, Limited, 1982). The yellow region is the range of 430 to 490 nm, the magenta region is the range of 500 to 580 nm, and the cyan region is the range of 600 to 700 nm.

The chromophore used in the dichroic dye is not particularly limited, but it is preferred to use azo dyes, azulene dyes, anthraquinone dyes, benzoquinone dyes, napthoquinone dyes, benzothiazole dyes, benzothiadiazole dyes, thiadiazoloquinoxaline dyes, dithiobenzoquinone, perylene dyes, merocyanine dyes, azomethine dyes, phthaloperylene dyes, indigo dyes, azulene dyes, dioxazine dyes, tetrazine dyes, polythiophene dyes, naphthimidazo-4,9-dione dyes and phenoxazine dyes.

The liquid-crystalline media each preferably comprises one, two, three, four, five, six, seven, eight, nine or ten different dichroic dyes, particularly preferably two or three dichroic dyes.

Preferred dyes according to the present invention are azo dyes, perylene dyes, anthraquinone dyes, benzothiazole dyes and benzothiadiazole dyes, more preferably azo dyes and benzothiadiazole dyes and in particular benzothiadiazole dyes.

The azo dyes may contain any number of azo groups such as monoazo dyes, bisazo dyes, trisazo dyes, tetrakisazo dyes, and pentakisazo dyes, and preferably monoazo dyes, bisazo dyes, and trisazo dyes.

Cyclic structures contained in the azo dyes preferably are aryl groups and/or heteroaryl groups.

Preferred aryl groups are derived, for example, from the parent structures benzene, biphenyl, terphenyl, naphthalene, anthracene, phenanthrene, pyrene, dihydropyrene, chrysene, perylene, fluorene, indene, etc.

Preferred heteroaryl groups are, for example, 5-membered rings, such as pyrrole, pyrazole, imidazole, 1,2,3-triazole, 1,2,4-triazole, furan, thiophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, benzimidazole, benzotriazole, purine, naphthimid-azole, phenanthrimidazole, pyridimidazole, pyrazinimidazole, quinoxalinimidazole, benzoxazole, naphthoxazole, anthroxazole, phenanthroxazole, isoxazole, benzothiazole, benzothiadiazole, benzofuran, isobenzofuran, dibenzofuran, quinoline, isoquinoline, benzo-5,6-quinoline, benzo-6,7-quinoline, benzo-7,8-quinoline, benzoiso-quinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, dihydrothieno [3,4-b]-1,4-dioxin, isobenzothiophene, dibenzothiophene, benzothia-diazothiophene, or combinations of these groups.

The aryl and heteroaryl groups may also be substituted by alkyl, cycloalkyl, alkoxy, thioalkyl, alkylamino, dialkylamino, fluorine, fluoroalkyl or further aryl or heteroaryl groups.

In a preferred embodiment the liquid-crystalline media comprise one or more dichroic dyes selected from the group of compounds of the formulae Dye-1, Dye-2 and Dye-3:

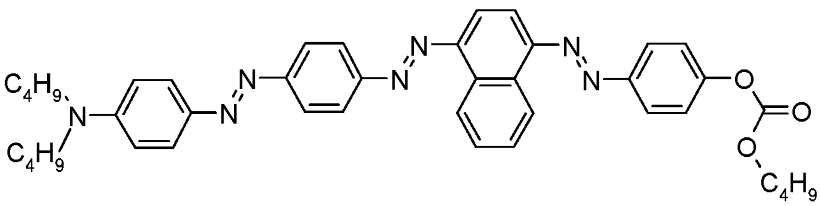

Dye-1

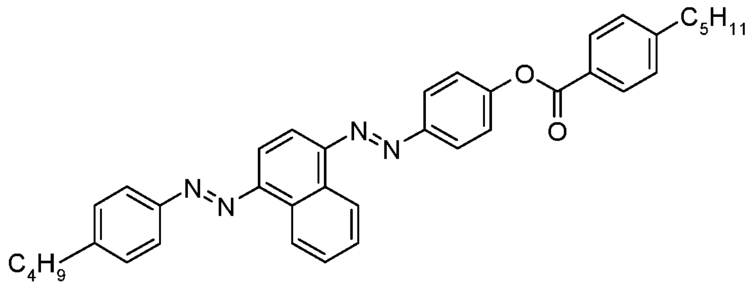

Dye-2

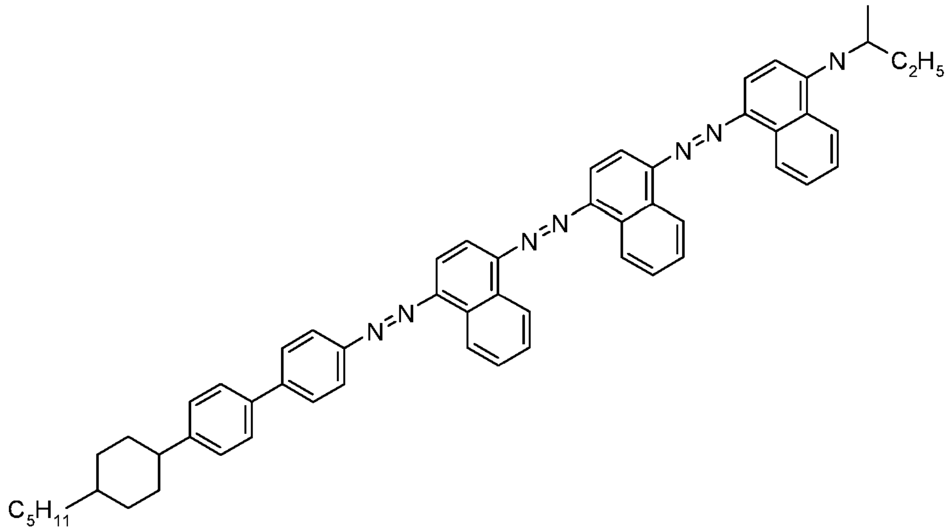

Dye-3.

In addition or alternatively, other types of dyes known to have an equivalent effect to the above-described dyes may also preferably be used.

Each of the one or more dichroic dyes is preferably present in the respective liquid-crystalline medium in a proportion of 0.005% by weight to 12.5% by weight, more preferably 0.01% by weight to 10% by weight, even more preferably 0.025% by weight to 7.5% by weight, yet even more preferably 0.05% by weight to 5% by weight, still even more preferably 0.1% by weight to 2.5% by weight and particularly preferably 0.25% by weight to 1% by weight, based on the overall weight of the entire medium.

Preferably, the one or more dichroic dyes are present in the respective liquid-crystalline medium overall in a total concentration which is in the range of 0.01% by weight to 30% by weight, more preferably 0.025% by weight to 25% by weight, even more preferably 0.05% by weight to 15% by weight, still even more preferably 0.1% by weight to 10% by weight and particularly preferably 0.5% by weight to 5% by weight.

The concentration of the dye(s) is preferably chosen such that the proper performance of the obtained modulation material is ensured, in particular in terms of the desired colour and/or dimming effects.

In an embodiment the absorption spectra of the dichroic dyes optionally contained in the medium or respectively the switchable layer preferably complement one another in such a way that the impression of a black colour arises for the eye. Preferably two or more, more preferably three or more dichroic dyes are used in the liquid-crystalline medium to preferably cover a large part of the visible spectrum. The precise way in which a mixture of dyes which appears black or grey to the eye can be prepared is known in the art and is described, for example, in M. Richter, Einführung in die Farbmetrik [Introduction to Colorimetry], 2nd Edition, 1981, ISBN 3 11-008209-8, Walter de Gruyter & Co.

In another embodiment the setting of a different colour is performed, e.g. red, green or blue.

The setting of the colour location of a mixture of dyes is described in the area of colorimetry. To this end, the spectra of the individual dyes are calculated taking into account the Lambert-Beer law to give an overall spectrum and converted into the corresponding colour locations and luminance values under the associated illumination, for example illuminant D65 for daylight, in accordance with the rules of colorimetry. The position of the white point is fixed by the respective illuminant, for example D65, and is quoted in tables, for example in the reference above. Different colour locations can be set by changing the proportions of the various dyes.

Preferably, the dichroic compounds are present in the liquid-crystalline media in solution.

The dichroic compounds preferably exhibit a high dichroic ratio, a favourable colour purity and large extinction coefficients, in particular in the VIS and/or NIR region of light, and in addition suitable lightfastness and suitable solubility in

liquid-crystalline media.

In a preferred embodiment the dichroic compounds in the LC media have absorptions that in total cover the entire visible spectrum. In this way a colour-neutral or black appearance may be obtained. Such a colour-neutral appearance may be favourable in applications where colour artefacts or residual colour should be minimized or avoided, e.g. in certain smart windows applications.

It was further found that it can be advantageous to include one or more near-infrared dyes in the composition. This provision can favourably contribute to minimizing or even avoiding residual fluorescence in the visible spectrum such that unwanted colour artefacts, e.g. a red glow, may be avoided or at least substantially reduced.

In a particularly preferred embodiment the LC media of the window element comprise at least one purple dye, at least one blue dye, at least one yellow dye, at least one red dye and at least one near-infrared dye.

The dichroic compounds preferably are positive dichroic dyes, i.e. dyes which have a positive degree of anisotropy R.

The degree of anisotropy R is determined for the LC mixture comprising the dye from the values of the extinction coefficients for parallel and perpendicular alignment of the molecules relative to the direction of the polarisation of the light.

According to the invention the degree of anisotropy R preferably is greater than 0.4, more preferably greater than 0.6, even more preferably greater than 0.7, and in particular greater than 0.8.

The absorption preferably reaches a maximum when the polarisation direction of the light is parallel to the direction of the longest molecular elongation of the dichroic compounds, and it preferably reaches a minimum when the polarisation direction of the light is perpendicular to the direction of the longest molecular elongation of the dichroic compounds.

In an embodiment the dichroic dyes are preferably selected from the dye classes indicated in B. Bahadur, Liquid Crystals - Applications and Uses, Vol. 3, 1992, World Scientific Publishing, Section 11.2.1, and particularly preferably from the explicit compounds given in the table present therein.

In a preferred embodiment the dichroic dyes are selected from azo dyes, anthraquinones, methine compounds, azomethine compounds, merocyanine compounds, naphthoquinones, tetrazines, pyrromethene dyes, malononitrile dyes, rylenes, in particular perylenes and terylenes, thiadiazole dyes, thienothiadiazole dyes, benzothiadiazoles, thiadiazoloquinoxalines, pyrromethenes and diketopyrrolopyrroles. Particular preference is given to azo compounds, anthraquinones, benzothiadiazoles, in particular as described in WO 2014/187529, diketopyrrolopyrroles, in particular as described in WO 2015/090497, rylenes, in particular as described in WO 2014/090373, and thiadiazoloquinoxaline derivatives, in particular as described in WO 2016/177449. It is particularly preferred that the dichroic dyes are selected from azo dyes, benzothiadiazoles and/or thiadiazoloquinoxalines.

Examples of particularly preferred dichroic dyes which may be present in the LC media are shown below

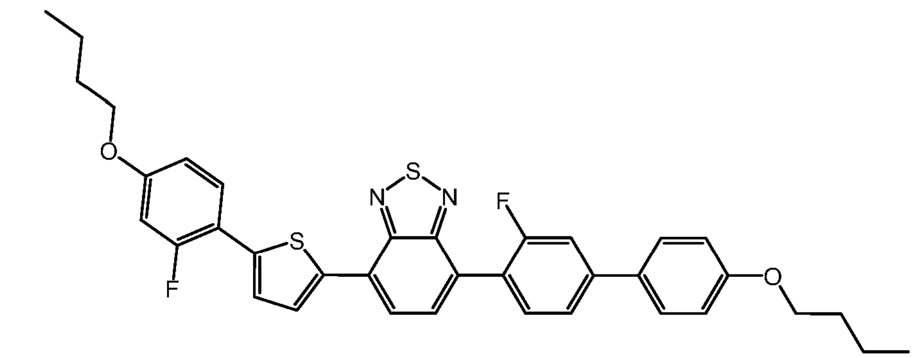

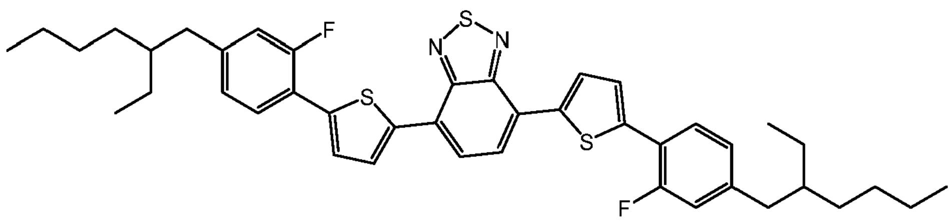

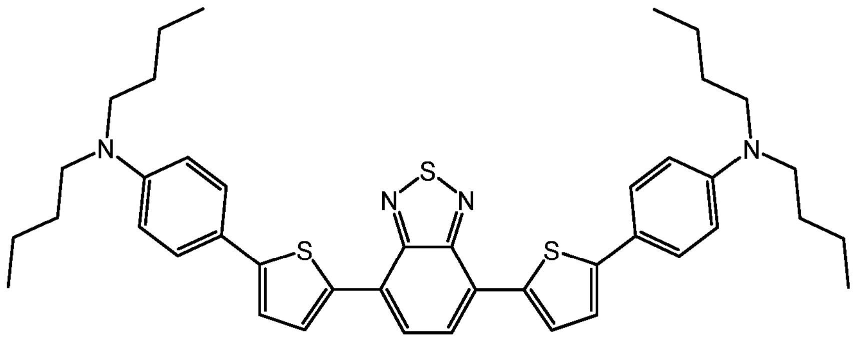

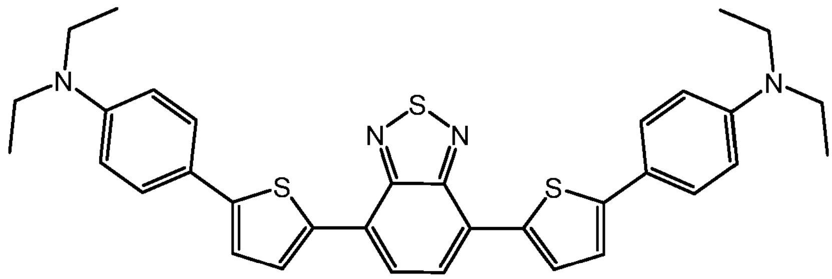

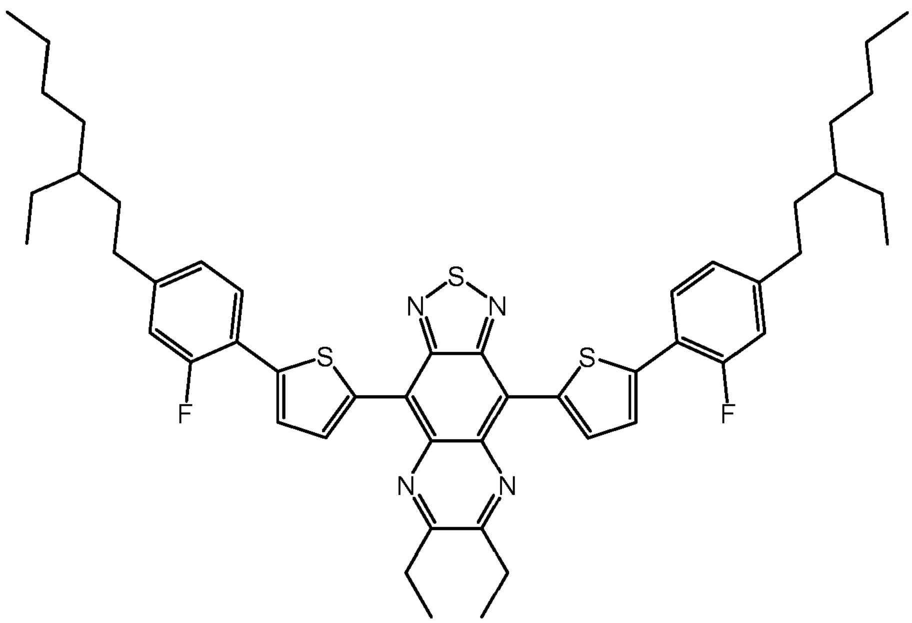

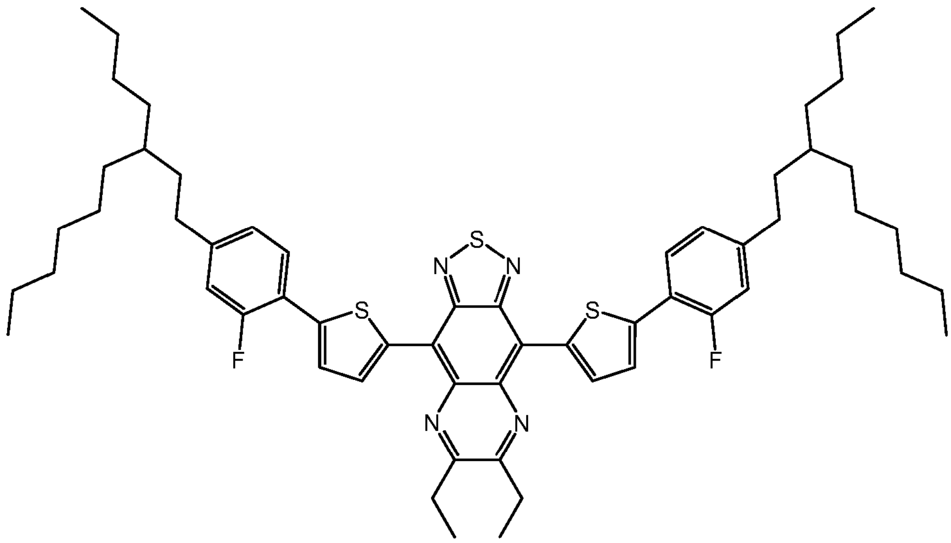

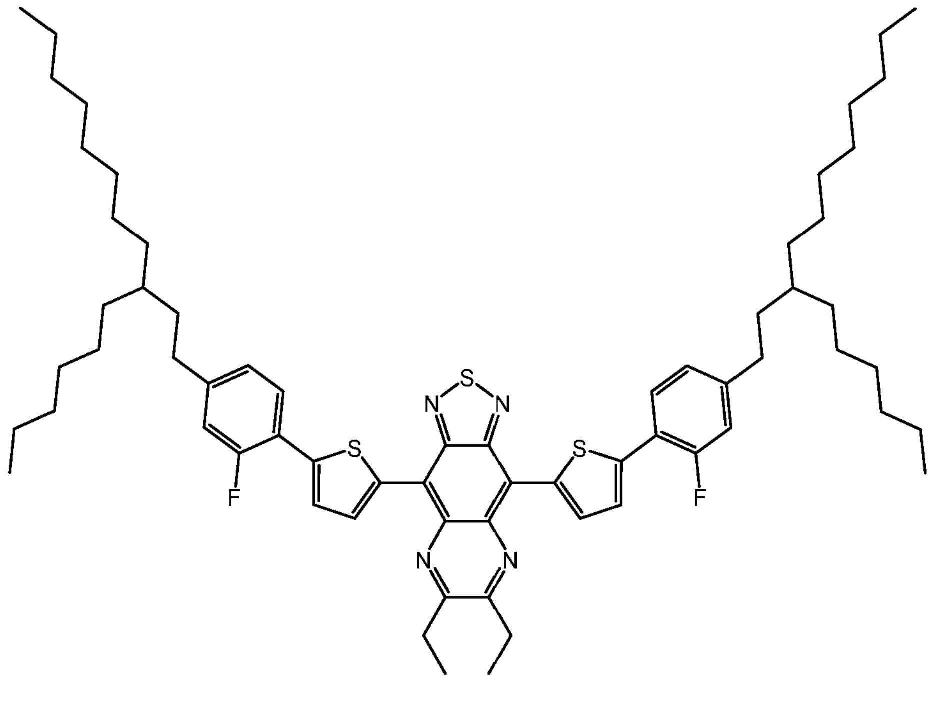

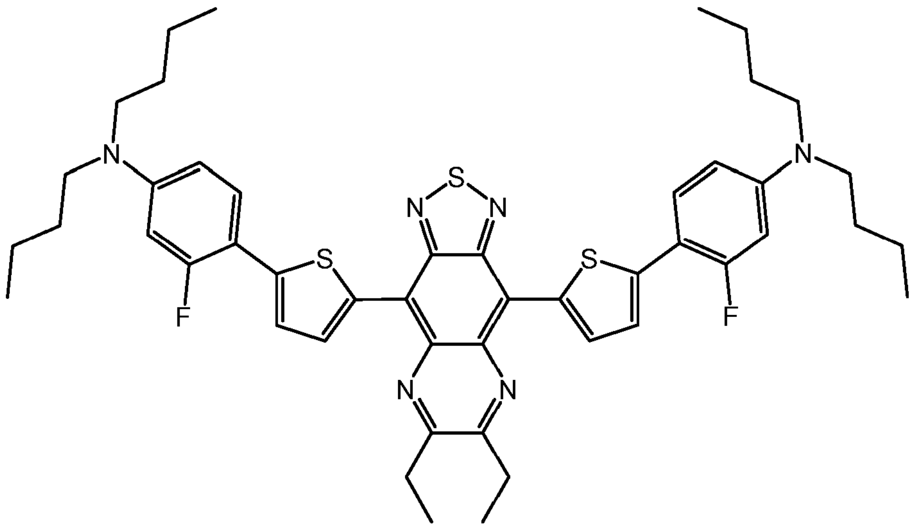

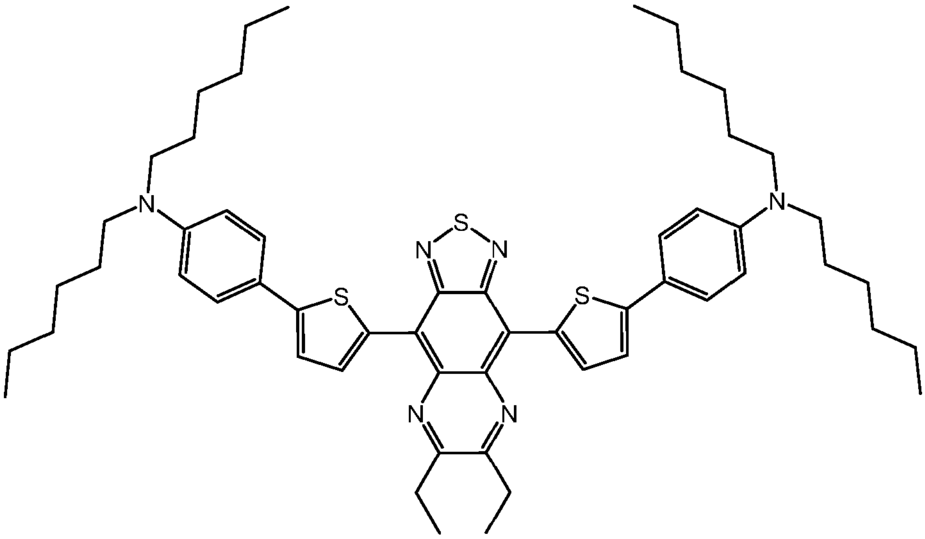

.

It is particularly preferred that the liquid-crystalline media as comprised in the first switchable layer and the second switchable layer according to the invention contains, based on the overall contents of the medium, at least 15% by weight of one or more mesogenic compounds of formula I

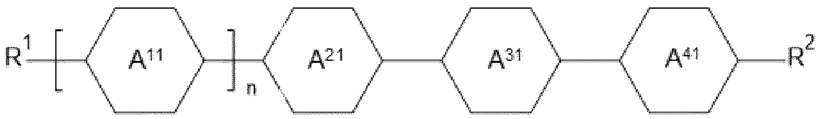 I

wherein

$R^1$ and $R^2$ denote, independently of one another, a group selected from F, Cl, $CF_3$, $OCF_3$, and straight-chain or branched alkyl or alkoxy having 1 to 15 carbon atoms or straight-chain or branched alkenyl having 2 to 15 carbon atoms which is unsubstituted, monosubstituted by CN or $CF_3$ or mono- or polysubstituted by halogen and wherein one or more $CH_2$ groups may be, in each case independently of one another, replaced by -O-, -S-, -CO-, -COO-, -OCO-, -OCOO-, -C≡C-,

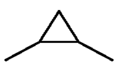, 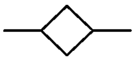, 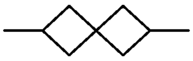, 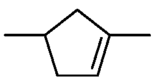 or 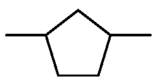

in such a manner that oxygen atoms are not linked directly to one another,

$A^{11}$ denotes

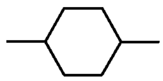 , 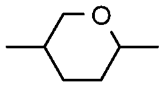 , 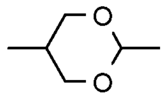 ,

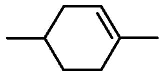 , 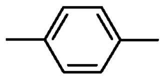 , 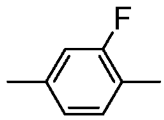 ,

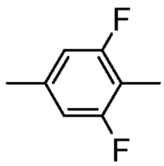 , 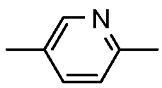 or 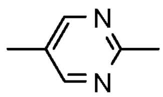 ,

n denotes 0 or 1, and

$A^{21}$ , $A^{31}$ and $A^{41}$ denote, independently of one another,

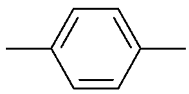 , 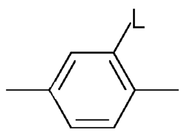 , 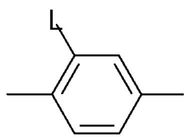 ,

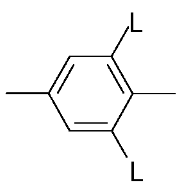 , 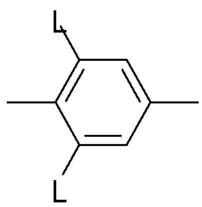 , 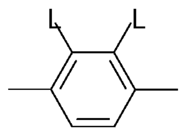 ,

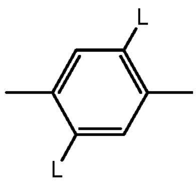 , 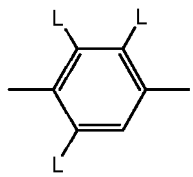 or 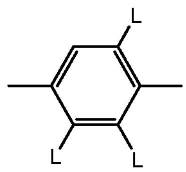

wherein L is on each occurrence, identically or differently, halogen selected from F, Cl and Br, or methyl.

In an embodiment the liquid-crystalline media each contain the one or more compounds of formula I as set forth above and below in an amount, based on the overall contents of the medium, of at least 20% by weight, preferably at least 25% by weight, more preferably at least 30% by weight and in particular at least 35% by weight.

In an embodiment the one or more compounds of formula I are contained in the respective medium in an amount, based on the overall contents of the medium, in the range from 15% by weight to 75% by weight, more preferably from 20% by weight to 65% by weight, even more preferably from 20% by weight to 55% by weight and in particular from 25% by weight to 50% by weight.

The media in the first and second switchable layers thus preferably each comprise at least one compound of formula I. In many cases it can however be beneficial and preferred that two, three or more compounds of formula I are contained in the respective medium.

Preferably the group $A^{11}$ as defined in formula I denotes

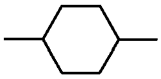 or 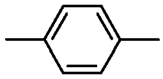 .

In another embodiment n as defined in formula I denotes 0.

In a preferred embodiment the one or more compounds of formula I are selected from compounds of formulae Ia, Ib and Ic, more preferably from compounds of formulae Ia and Ib

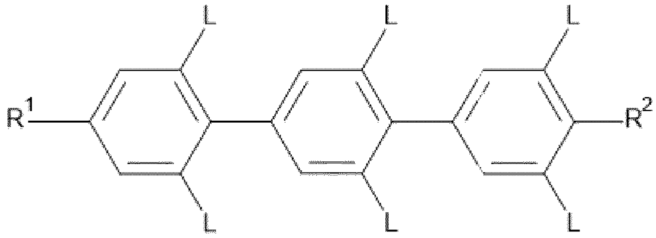

Ia

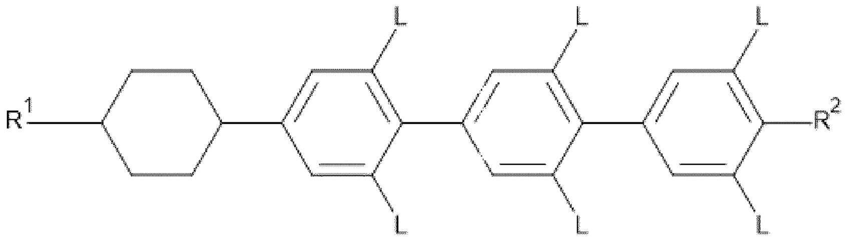

Ib

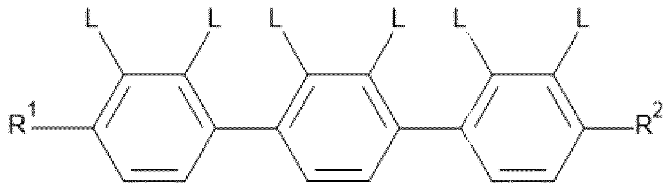

Ic

wherein

$R^1$ and $R^2$ denote, independently of one another, a group selected from F, Cl, $CF_3$, $OCF_3$, and straight-chain or branched alkyl or alkoxy having 1 to 15 carbon atoms or straight-chain or branched alkenyl having 2 to 15 carbon atoms which is unsubstituted, monosubstituted by CN or $CF_3$ or mono- or polysubstituted by halogen and wherein one or more $CH_2$ groups may be, in each case independently of one another, replaced by -O-, -S-, -CO-, -COO-, -OCO-, -OCOO- or -C≡C- in such a manner that oxygen atoms are not linked directly to one another, preferably from F, $CF_3$, $OCF_3$, straight-chain alkyl or alkoxy having 1 to 9 carbon atoms or alkenyl having 2 to 9 carbon atoms, and

L is on each occurrence, identically or differently, H or halogen selected from F, Cl and Br, preferably from F and Cl, and more preferably is on each occurrence, identically or differently, H or F.

It is particularly preferred that in case the phenylene rings of the compounds of formula I are substituted that the substituent(s) is (are) F, and furthermore that the terminal groups $R^1$ and $R^2$ do not contain Cl.

In a preferred embodiment the amount of Cl-containing compounds included in the medium is limited, preferably is limited to 55% by weight or less, based on the overall contents of the medium, more preferably to 40% by weight or less, and even more preferably to 25% by weight or less. In a particularly preferred embodiment the liquid-crystalline medium contains no Cl-containing compounds.

Accordingly it is also preferred to limit the amount of Cl-containing compounds in the component of the LC medium which consists of the compounds of formula I as set forth above and below, preferably to 55% by weight or less, based on the overall contents of compounds of formula I which are comprised in the medium, more preferably to 40% by weight or less, and even more preferably to 25% by weight or less. In a particularly preferred embodiment the one or more compounds of formula I are selected from compounds which do not contain Cl.

It is furthermore particularly preferred that at least one of the rings $A^{21}$, $A^{31}$ and $A^{41}$ according to formula I has at least one F substituent. It is furthermore particularly preferred that the rings $A^{21}$, $A^{31}$ and $A^{41}$ according to formula I together

have at least two F substituents.

In an embodiment the use of compounds containing CN in the medium is preferably limited, preferably to 75% by weight or below, more preferably to 50% by weight or below, even more preferably to 25% by weight or below and in particular to 15% by weight or below, and in a particular embodiment is completely avoided.

In addition to the one or more compounds of formula I the liquid-crystalline medium in the first switching layer preferably contains one or more further mesogenic compounds. It is preferred that these additional compounds are also added in view of contributing to or maintaining the favourable properties of the medium, e.g. a good VHR and a favourable stability.

Preferably, the liquid-crystalline media comprised in the first and second switchable layers according to the invention include, preferably in addition to the one or more compounds of formula I, one or more mesogenic compounds selected from the group of compounds of formulae II and III

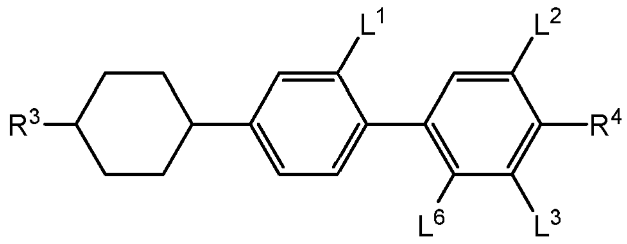

II

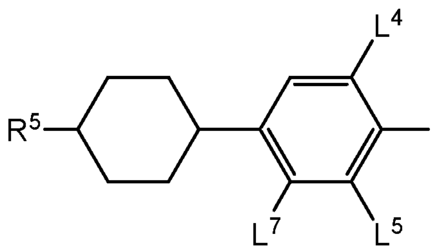

III

wherein

$R^3$, $R^4$, $R^5$and $R^6$ denote, independently of one another, a group selected from F, $CF_3$, $OCF_3$, CN, and straight-chain or branched alkyl or alkoxy having 1 to 15 carbon atoms or straight-chain or branched alkenyl having 2 to 15 carbon atoms which is unsubstituted, monosubstituted by CN or $CF_3$ or mono- or polysubstituted by halogen and wherein one or more $CH_2$ groups may be, in each case independently of one another, replaced by -O-, -S-, -CO-, - COO-, -OCO-, -OCOO-, -C≡C-,

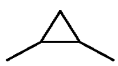, 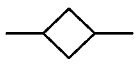, 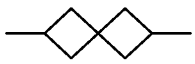, 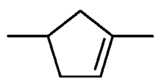 or 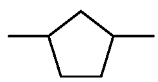

in such a manner that oxygen atoms are not linked directly to one another,

$L^1$, $L^2$, $L^3$, $L^4$ and $L^5$ denote, independently of one another, H or F, and

$L^6$ and $L^7$ denote, independently of one another, H or methyl.

In an embodiment the liquid-crystalline media each comprise one or more mesogenic compounds of formula II.

In another embodiment the liquid-crystalline media each comprise one or more mesogenic compounds of formula III.

It is preferred that the respective medium contains, based on the overall contents of the medium, at least 15% by weight of one or more mesogenic compounds of formula I, and one or more mesogenic compounds selected from the group of compounds of formulae II and III.

It is particularly preferred that the respective medium comprises one or more compounds of formula I, one or more compounds of formula II and one or more compounds of formula III as set forth above.

Preferably the liquid-crystalline media in the first and second switchable layers further comprise one or more compounds of formula IV

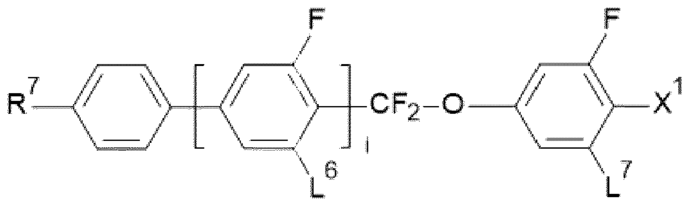

IV

wherein

| | |
|---|---|
| $R^7$ | denotes straight-chain or branched alkyl or alkoxy having 1 to 15 carbon atoms, preferably 1 to 7 carbon atoms, or straight-chain or branched alkenyl having 2 to 15 carbon atoms which is unsubstituted, mono-substituted by CN or $CF_3$ or mono- or polysubstituted by halogen and wherein one or more $CH_2$ groups may be, in each case independently of one another, replaced by -O-, -S-, -CO-, -COO-, -OCO-, -OCOO- or -C≡C- in such a manner that oxygen atoms are not linked directly to one another, |
| i | is 0, 1 or 2, |
| $L^6$ and $L^7$ | are, independently of one another, H or F, and |
| $X^1$ | denotes F, $CF_3$, $OCF_3$ or CN. |

Compounds of formula II preferably are used in the respective medium in a total concentration from 1% by weight to 45% by weight, more preferably from 5% by weight to 25% by weight.

Compounds of formula III preferably are used in the respective medium in a total concentration from 1% by weight to 45% by weight, more preferably from 5% by weight to 25% by weight.

Compounds of formula IV preferably are used in the respective medium in a total concentration from 1% by weight to 45% by weight, more preferably from 5% by weight to 25% by weight.

It is particularly preferred that the media comprise one or more compounds of formula I as set forth above and below, one or more compounds of formula II, one or more compounds of formula III and one or more compounds of formula IV.

In a particularly preferred embodiment one or more of the one or more compounds of formula I are selected from compounds of formulae I-1 and I-2

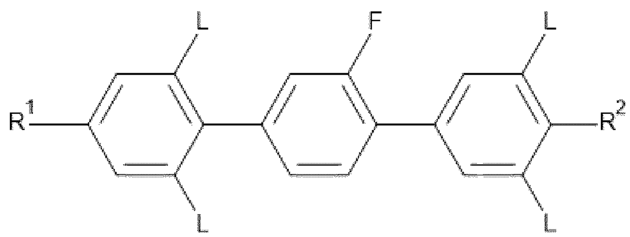

I-1

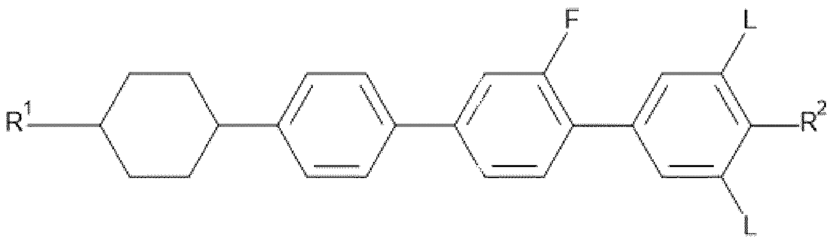

I-2

wherein

| | |
|---|---|
| $R^1$ and $R^2$ | are as defined for formula Ia above, and |
| L | is on each occurrence, identically or differently, H or F. |

Optionally the medium may comprise further liquid crystal compounds in order to adjust the physical properties. Such compounds are known in the field. The concentration of these optionally further included liquid crystal compounds in the medium is preferably from 0% by weight to 30% by weight, more preferably from 0.1% by weight to 20% by weight and most preferably from 1% by weight to 15% by weight.

In an embodiment, the respective liquid crystalline-medium as used according to the invention preferably

comprises one or more compounds selected from the group of compounds of the formulae CY, PY and AC

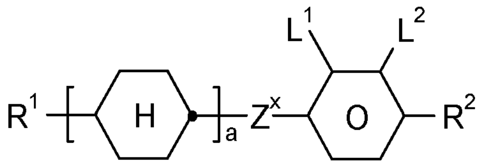

CY

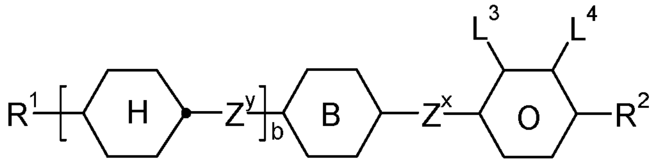

PY

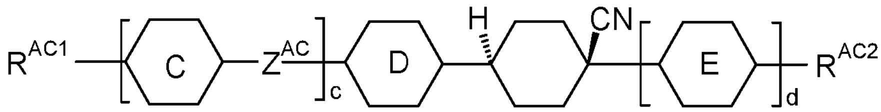

AC

wherein

a denotes 1 or 2,

b denotes 0 or 1,

c denotes 0, 1 or 2,

d denotes 0 or 1,

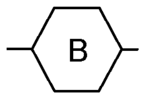

denotes

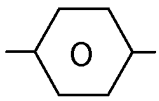

or

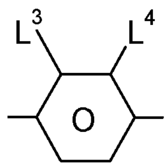

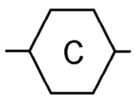

and denote

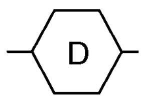

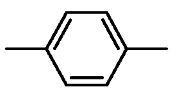

,

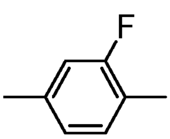

,

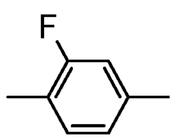

,

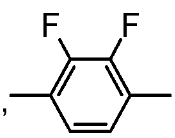

,

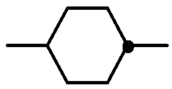, 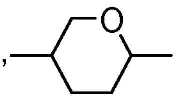, 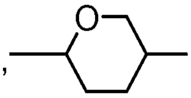,

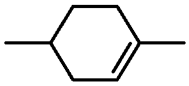 or 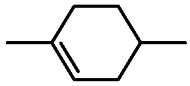,

denotes

$R^1$, $R^2$, $R^{AC1}$ and $R^{AC2}$ each, independently of one another, denote alkyl having 1 to 12 C atoms, where, in addition, one or two non-adjacent $CH_2$ groups may be replaced by

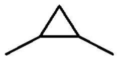, 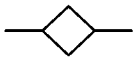, 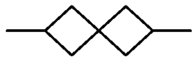, 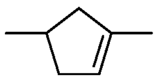, 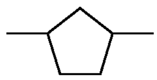,

-O-, -CH=CH-, -CO-, -OCO- or -COO- in such a way that O atoms are not linked directly to one another, preferably alkyl or alkoxy having 1 to 6 C atoms,

$Z^x$, $Z^y$ and $Z^{AC}$ each, independently of one another, denote $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ or a single bond, preferably a single bond, and

$L^{1-4}$ each, independently of one another, denote F, Cl, CN, $OCF_3$, $CF_3$, $CH_3$, $CH_2F$ or $CHF_2$, preferably F.

Preferably, both $L^1$ and $L^2$ denote F or one of $L^1$ and $L^2$ denotes F and the other denotes Cl, and both $L^3$ and $L^4$ denote F or one of $L^3$ and $L^4$ denotes F and the other denotes Cl.

It is particularly preferred that the liquid-crystalline media as used according to the invention contain the one or more compounds selected from the compounds of the formulae CY, PY and AC in an amount, based on the overall contents of the medium, of at least 20% by weight, more preferably at least 25% by weight, even more preferably at least 30% by weight, still more preferably at least 35% by weight, yet more preferably at least 40% by weight and particularly preferably at least 50% by weight.

The compounds of the formula AC are preferably selected from the group of compounds of the following formulae:

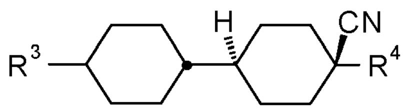

AC1

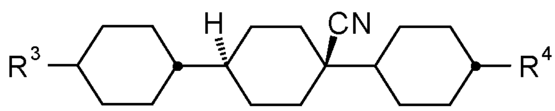

AC2

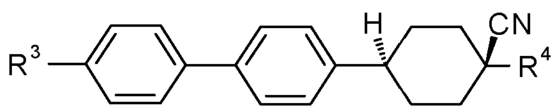

AC3

wherein $R^3$ and $R^4$ have the meanings of $R^{AC1}$ and $R^{AC2}$ as set forth above.

The liquid-crystalline media as used according to the present invention may contain further additives in usual concentrations. The total concentration of these further constituents is in the range of 0 % to 10 %, preferably 0.1 % to 6 %, based on the total mixture. The concentrations of the individual compounds used each are preferably in the range of 0.1 % to 3 %. The concentration of these and of similar additives is herein not taken into consideration for the values and ranges of the concentrations of the liquid crystal components and compounds of the liquid crystal media. Unless explicitly indicated otherwise, this also holds for the concentration of dichroic dyes optionally used in the mixtures, which are not counted when

the concentrations of the compounds respectively the components of the host mixture are specified. The concentration of the respective additives is always given relative to the final doped mixture.

Herein, unless explicitly stated otherwise, all concentrations are given in weight percent.

The liquid-crystalline media as used according to the present invention consist of several compounds, preferably of 3 to 30, more preferably of 4 to 20, and most preferably of 4 to 16 compounds. These compounds are mixed in a conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle systems, the constituents of which are ready to use mixtures themselves.

Many of the mesogenic compounds or mixtures thereof described above and below are commercially available. These compounds are either known or can be prepared by methods which are known *per se,* as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known *per se,* but are not mentioned here in greater detail.

The media according to the invention are prepared in a manner conventional *per se.* In general, the components are dissolved in one another, preferably at elevated temperature. Suitable additives or substances can be added to modify the dielectric anisotropy, the viscosity and/or the alignment of the liquid-crystalline phases.

The media may further comprise customary additives such as stabilizers, antioxidants, free radical scavengers, chain transfer agents, e.g. thioethers, and/or plasticizers.

The term "alkyl" according to the present invention preferably encompasses straight-chain and branched alkyl groups having 1 to 7 carbon atoms, particularly the straight-chain groups methyl, ethyl, propyl, butyl, pentyl, hexyl and heptyl. Groups having 2 to 5 carbon atoms are generally preferred.

An alkoxy can be straight-chain or branched, and it preferably is straight-chain and has 1, 2, 3, 4, 5, 6 or 7 carbon atoms, and accordingly is preferably methoxy, ethoxy, propoxy, butoxy, pentoxy, hexoxy or heptoxy.

The term "alkenyl" according to the present invention preferably encompasses straight-chain and branched alkenyl groups having 2-7 carbon atoms, in particular the straight-chain groups. Particularly preferred alkenyl groups are $C_2$-$C_7$-1E-alkenyl, $C_4$-$C_7$-3E-alkenyl, $C_5$-$C_7$-4E-alkenyl, $C_6$-$C_7$-5E-alkenyl and $C_7$-6E-alkenyl, in particular $C_2$-$C_7$-1E-alkenyl, $C_4$-$C_7$-3E-alkenyl and $C_5$-$C_7$-4E-alkenyl. Examples of preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Groups having up to 5 carbon atoms are generally preferred.

Fluorinated alkyl or alkoxy preferably comprises $CF_3$, $OCF_3$, $CFH_2$, $OCFH_2$, $CF_2H$, $OCF_2H$, $C_2F_5$, $OC_2F_5$, $CFHCF_3$, $CFHCF_2H$, $CFHCFH_2$, $CH_2CF_3$, $CH_2CF_2H$, $CH_2CFH_2$, $CF_2CF_2H$, $CF_2CFH_2$, $OCFHCF_3$, $OCFHCF_2H$, $OCFHCFH_2$, $OCH_2CF_3$, $OCH_2CF_2H$, $OCH_2CFH_2$, $OCF_2CF_2H$, $OCF_2CFH_2$, $C_3F_7$ or $OC_3F_7$, in particular $CF_3$, $OCF_3$, $CF_2H$, $OCF_2H$, $C_2F_5$, $OC_2F_5$, $CFHCF_3$, $CFHCF_2H$, $CFHCFH_2$, $CF_2CF_2H$, $CF_2CFH_2$, $OCFHCF_3$, $OCFHCF_2H$, $OCFHCFH_2$, $OCF_2CF_2H$, $OCF_2CFH_2$, $C_3F_7$ or $OC_3F_7$, particularly preferably $OCF_3$ or $OCF_2H$. Fluoroalkyl in a preferred embodiment encompasses straight-chain groups with terminal fluorine, i.e. fluoromethyl, 2-fluoroethyl, 3-fluoropropyl, 4-fluorobutyl, 5-fluoropentyl, 6-fluorohexyl and 7-fluoroheptyl. Other positions of fluorine are not precluded, however.

Oxaalkyl preferably encompasses straight-chain groups of the formula $C_nH_{2n+1}$-O-$(CH_2)_m$, where n and m are each, independently of one another, from 1 to 6. Preferably, n = 1 and m is 1 to 6.

Oxaalkyl is preferably straight-chain 2-oxapropyl (= methoxymethyl), 2-(= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, or 2-, 3-, 4-, 5-, 6-, 7-, 8- or 9-oxadecyl.

Halogen is preferably F or Cl, in particular F.

If one of the above mentioned groups is an alkyl group in which one $CH_2$ group has been replaced by -CH=CH-, this can be straight-chain or branched. It is preferably straight-chain and has 2 to 10 carbon atoms. Accordingly, it is in particular vinyl, prop-1- or prop-2-enyl, but-1-, -2- or but-3-enyl, pent-1-, -2-, -3- or pent-4-enyl, hex-1-, -2-, -3-, -4- or hex-5-enyl, hept-1-, -2-, -3-, -4-, -5- or hept-6-enyl, oct-1-, -2-, -3-, -4-, -5-, -6- or oct-7-enyl, non-1-, -2-, -3-, -4-, -5-, -6-, -7- or non-8-enyl, dec-1-, -2-, -3-, -4-, -5-, -6-, -7-, -8- or dec-9-enyl.

If one of the above mentioned groups is an alkyl group in which one $CH_2$ group has been replaced by -O- and one has been replaced by -CO-, these are preferably adjacent. These thus contain an acyloxy group -CO-O- or an oxycarbonyl group -O-CO-. These are preferably straight-chain and have 2 to 6 carbon atoms.

They are accordingly in particular acetyloxy, propionyloxy, butyryloxy, pentanoyloxy, hexanoyloxy, acetyloxymethyl, propionyloxymethyl, butyryloxymethyl, pentanoyloxymethyl, 2-acetyloxyethyl, 2-propionyloxyethyl, 2-butyryloxyethyl, 3-acetyloxypropyl, 3-propionyloxypropyl, 4-acetyloxybutyl, methoxycarbonyl, ethoxycarbonyl, propoxycarbonyl, butoxycarbonyl, pentoxycarbonyl, methoxycarbonylmethyl, ethoxycarbonylmethyl, propoxycarbonylmethyl, butoxycarbonylmethyl, 2-(methoxycarbonyl)ethyl, 2-(ethoxycarbonyl)ethyl, 2-(propoxycarbonyl)ethyl, 3-(methoxycarbonyl)propyl,

3-(ethoxycarbonyl)propyl or 4-(methoxycarbonyl)butyl.

If one of the above mentioned groups is an alkyl group in which one $CH_2$ group has been replaced by unsubstituted or substituted -CH=CH- and an adjacent $CH_2$ group has been replaced by CO, CO-O or O-CO, this can be straight-chain or branched. It is preferably straight-chain and has 4 to 13 carbon atoms. Accordingly, it is in particular acryloyloxymethyl, 2-acryloyloxyethyl, 3-acryloyloxypropyl, 4-acryloyloxybutyl, 5-acryloyloxypentyl, 6-acryloyloxyhexyl, 7-acryloyloxyheptyl, 8-acryloyloxyoctyl, 9-acryloyloxynonyl, 10-acryloyloxydecyl, methacryloyloxymethyl, 2-methacryloyloxyethyl, 3-methacryloyloxypropyl, 4-methacryloyloxybutyl, 5-methacryloyloxypentyl, 6-methacryloyloxyhexyl, 7-methacryloyloxyheptyl, 8-methacryloyloxyoctyl or 9-methacryloyloxynonyl.

If one of the above mentioned groups is an alkyl or alkenyl group which is monosubstituted by CN or $CF_3$, this group is preferably straight-chain. The substitution by CN or $CF_3$ is in any position.

If one of the above mentioned groups is an alkyl or alkenyl group which is at least monosubstituted by halogen, this group is preferably straight-chain and halogen is preferably F or Cl, more preferably F. In the case of polysubstitution, halogen is preferably F. The resulting groups also include perfluorinated groups. In the case of monosubstitution, the fluoro or chloro substituent can be in any desired position, but is preferably in the $\omega$-position.

Compounds containing branched groups may occasionally be of importance owing to better solubility in some conventional liquid-crystalline base materials. However, they are particularly suitable as chiral dopants if they are optically active.

Branched groups of this type generally contain not more than one chain branch. Preferred branched groups are isopropyl, 2-butyl (= 1-methylpropyl), isobutyl (= 2-methylpropyl), 2-methylbutyl, isopentyl (= 3-methylbutyl), 2-methylpentyl, 3-methylpentyl, 2-ethylhexyl, 2-propylpentyl, isopropoxy, 2-methylpropoxy, 2-methylbutoxy, 3-methylbutoxy, 2-methylpentoxy, 3-methylpentoxy, 2-ethylhexoxy, 1-methylhexoxy or 1-methylheptoxy.

If one of the above mentioned groups is an alkyl group in which two or more $CH_2$ groups have been replaced by -O- and/or -CO-O-, this can be straight-chain or branched. It is preferably branched and has 3 to 12 carbon atoms. Accordingly, it is in particular biscarboxymethyl, 2,2-biscarboxyethyl, 3,3-biscarboxypropyl, 4,4-biscarboxybutyl, 5,5-biscarboxypentyl, 6,6-biscarboxyhexyl, 7,7-biscarboxyheptyl, 8,8-biscarboxyoctyl, 9,9-biscarboxynonyl, 10,10-biscarboxydecyl, bis(methoxycarbonyl)methyl, 2,2-bis(methoxycarbonyl)ethyl, 3,3-bis(methoxycarbonyl)propyl, 4,4-bis-(methoxycarbonyl)butyl, 5,5-bis(methoxycarbonyl)pentyl, 6,6-bis(methoxycarbonyl)-hexyl, 7,7-bis(methoxycarbonyl)heptyl, 8,8-bis(methoxycarbonyl)octyl, bis(ethoxycarbonyl)methyl, 2,2-bis(ethoxycarbonyl)ethyl, 3,3-bis(ethoxycarbonyl)propyl, 4,4-bis(ethoxycarbonyl)butyl or 5,5-bis(ethoxycarbonyl)pentyl.

It is preferred that the first switchable layer and the second switchable layer each is 20 μm or below, preferably 15 μm or below and in particular 10 μm or below. Surprisingly, the favourable optical performance may also and especially be obtained in cases where the layer thickness is relatively small, giving in particular an efficient dimming in the dark state. It is particularly preferred that the first switchable layer and the second switchable layer have the same thickness, even more preferably that the same layer thickness is set in combination with the same magnitude of the pitch. This provision can favourably contribute to achieving efficient compensation of optical artefacts.

In an embodiment the switchable layers according to the invention preferably have a thickness, herein also denoted as d, in the range from 1 μm to 30 μm, more preferably from 2 μm to 25 μm, even more preferably from 3 μm to 18 μm and in particular from 4 μm to 12 μm.

To maintain a proper thickness of the switchable layers, spacers may be included within the cell gap of the switchable layers. Typically, the spacers have a spherical shape with a diameter in the range of the cell gap. For example, non-conductive spacers having a spherical shape with a predetermined diameter made of polymer or glass may be used. In some embodiments it may be useful to provide sticky spacers, i.e. spacers which have some intrinsic adhesive characteristic to better adhere to the surface. It may also be useful to use black spacers, e.g. to avoid or minimize undesired light leakage. In some embodiments it can be especially beneficial to use spacers which are black and sticky. Alternatively, the cell thickness may be set or maintained by other suitable means, e.g. by using column spacers. The column spacers may also be formed to give compartments, thus optionally allowing for free-cuttable structures. In some embodiments the switching layers may thus comprise segregated compartments which each contain the liquid crystalline medium, e.g. using rectangular or honeycomb structures.

The liquid-crystalline media in the first and second switchable layers can preferably exhibt a suitable optical anisotropy $\Delta n$, which is also known as the birefringence. In a preferred embodiment the liquid-crystalline media comprised in the first and second switchable layers exhibit an optical anisotropy $\Delta n$, determined at 20°C and 589 nm, in the range of from 0.03 to 0.30, more preferably from 0.04 to 0.20 and even more preferably from 0.05 to 0.13.

Above and below, $\Delta n$ denotes the optical anisotropy, wherein $\Delta n = n_e - n_o$, and the optical anisotropy $\Delta n$ is determined at 20°C and a wavelength of 589.3 nm.

It is particularly preferred that for each of the first and second switchable layers the following relationship applies

$$d * \Delta n < 3.0\ \mu m$$

in which d is the respective thickness of each of the switching layers and Δn is the optical anisotropy, in particular determined at 589.3 nm and 20°C, of the liquid-crystalline medium respectively contained in each of the switching layers.

It has surprisingly been found that setting an upper limit to the product of layer thickness and optical anisotropy as defined can favourably contribute to obtaining an excellent dark state while in addition providing a large switching range.

It is even more preferred that for each of the first and second switchable layers $d * \Delta n < 2.0$ μm, and in particular $d * \Delta n < 1.5$ μm.

In a further embodiment the first and second switchable layers are provided such that for both layers respectively $d * \Delta n$ is 3.0 μm or more, for example in the range from 3.0 μm to 7.0 μm. It has been found that also for larger layer thicknesses further performance benefits can be obtained, e.g. by compensating or mitigating device variance or deviation, for example with respect to unwanted cell thickness or gap variations or cell substrate imperfections or irregularities such as glass waviness.

The window element which includes the two liquid-crystal based switching layers, in particular so-called dye-doped or guest-host liquid-crystalline switching layers, is provided to produce an overall reduction in the light intensity when desired or required, i.e. to give the switching capability for light attenuation or light dimming, while haze is kept to a minimum or even avoided.

The switchable window element thus has a layer structure comprising at least two switchable layers, wherein the first and second switchable layers each comprise one or more dichroic dyes, preferably containing the same dye(s). The window element can be arranged and configured in different ways, in particular in terms of the electrode configuration, the optional provision of alignment layers and types thereof as well as the liquid-crystalline material, wherein however the window element is provided such that it gives the switching capabilities for light dimming in the multilayer arrangement and an overall change in the transmittance.

In particular, the first switchable layer and the second switchable layer can be provided separately or individually in so-called cells, which are then combined and configured as a so-called double cell, in particular by bonding using e.g. lamination or an adhesive. In this case each cell comprises two substrates. Alternatively, the first and second switchable layers may be provided in stack, wherein both switchable layers share a common substrate which is arranged in between the switchable layers.

Therefore, in an embodiment the multilayer arrangement of the window element comprises in this order

- a first transparent substrate,
- a first electrode layer,
- a first alignment layer,
- the first switchable layer,
- a second alignment layer,
- a second electrode layer,
- a second transparent substrate,
- optionally a bonding, adhesion or lamination layer,
- a third transparent substrate,
- a third electrode layer,
- a third alignment layer,
- the second switchable layer,
- a fourth alignment layer,
- a fourth electrode layer, and
- a fourth transparent substrate.

In this embodiment two switchable optical cells are combined to form a so-called double cell, wherein the double cells have twisted or supertwisted switching layer exhibiting opposite twisting directions.

The provision of a bonding, adhesion or lamination layer is preferred, giving improved mechanical stability and by suitably matching the refractive indices decreasing possible optical losses. The electrode layers are preferably and advantageously arranged as transparent conductive layers.

In this case the first switching layer and the second switching layer are each interposed between two transparent substrates each respectively supporting an electrode which preferably is arranged as a transparent conductive layer, wherein preferably the transparent conductive layers are respectively embedded between two transparent dielectric layers, such as silicon oxide or silicon nitride layers, and wherein alignment layers are further provided which are in direct contact with the switching layers.

In an alternative embodiment the multilayer arrangement of the window element comprises in this order

- a first transparent substrate,
- a first electrode layer,

- a first alignment layer,
- the first switchable layer,
- a second alignment layer,
- a second electrode layer,
- a second transparent substrate,
- a third electrode layer,
- a third alignment layer,
- the second switchable layer,
- a fourth alignment layer,
- a fourth electrode layer, and
- a third transparent substrate,

wherein the second alignment layer and the second electrode layer are disposed or arranged on a first surface of the second transparent substrate and wherein the third electrode layer and the third alignment layer are disposed or arranged on a second surface of the second transparent substrate.

The switchable optical cells as described above are electrically switchable, wherein in the presence or respectively in the absence of an electric field the switchable layers have a twisted configuration or a supertwisted configuration, wherein in particular in the dark state the switchable layer material exhibits a twisted nematic phase or respectively a supertwisted nematic phase.

It is preferred that alignment or orientation layers, e.g. made of polyimide (PI), are provided on the substrates. It is particularly preferred that electrically conductive layers and alignment layers are provided together on the substrates. In this case the orientation layer or alignment layer is provided on top of the conductive layer such that the alignment layer is contacting the LC medium. The alignment layers, preferably polyimide layers, may be arranged such that they provide, in particular at the interface, homogeneous or planar orientation or alternatively homeotropic orientation of the molecules of the liquid-crystalline medium.

In an embodiment rubbed polyimide is used on both substrates having a difference in direction, in particular a difference in direction of 90° or approximately 90°, as used in the so-called twisted nematic (TN) geometry. In some embodiments so-called pre-tilt angles can be set and obtained as desired. In the TN configuration, the twist angle is typically 90° or approximately 90°. Alternatively the configuration can be set in the super-twisted nematic (STN) configuration, where the twist angle exceeds 90° and is typically ranging from above 90° to 270°. However, it is also possible that the present STN configuration exhibits a twist angle which exceeds 270°. For this STN configuration it is particularly preferred that the twist angle is 180° or approximately 180°.

Preferred configurations for the first and second switchable layers are the TN configuration, the STN configuration, the vertical alignment-twisted nematic (VA-TN) configuration and the vertical alignment-supertwisted nematic (VA-STN) configuration. In this respect, for TN and VA-TN the twist angle may range from greater 0° to including 90°, and for STN and VA-STN the twist angle exceeds 90°.

Preferably, the first, second, third and fourth alignment layers comprise polyimide, preferably are made of rubbed polyimide.

It is particularly preferred, especially for the TN configuration, that the rubbing directions of the second alignment layer and the third alignment layer are orthogonal to each other. This provision can favourably contribute to an overall optimized or at least increased efficiency to attenuate both parallel and perpendicular polarization components of the light.

Alternatively, it is however also possible that the angle between the rubbing directions of the second alignment layer and the third alignment layer is different from 90°, e.g. closer to 0° and in particular 0°.

It is also possible to provide passivation or barrier layers on the substrates, alternatively but also in addition to alignment layers, e.g. passivation layers comprising silicon oxide or silicon nitride, preferably consisting of silicon oxide or silicon nitride. In case both a passivation layer and an alignment layer are provided on a substrate they are arranged such that the alignment layer is topmost, i.e. is contacting the LC medium.

It is preferred that the liquid-crystalline media contained in the first switchable layer and the second switchable layer each comprise one or more chiral compounds. The liquid-crystalline media thus preferably are cholesteric or chiral nematic media.

In addition to the provision of the alignment layers, the chiral compounds can contribute to reliably setting the desired twisting as well as the desired twisting directions in the switchable layers.

It is particularly preferred that the liquid-crystalline medium contained in the first switchable layer and the liquid-crystalline medium contained in the second switchable layer each comprises a chiral dopant, preferably a chiral dopant having a relatively high helical twisting power (HTP), e.g. a medium to high HTP. This provision allows the addition of the chiral compound(s) to the media in low concentrations.

It is preferred that the liquid-crystalline media contained in the first and second switchable layers each comprise the chiral dopant in a concentration of 0.01% by weight to 5% by weight, more preferably from 0.03% by weight to 2.50% by

weight and even more preferably from 0.05% by weight to 1.00% by weight.

According to the invention, the twisting directions in the first and second switchable layers are opposite to each other. The chiral compounds are accordingly chosen such that the twisting in one of the layers is set to be clockwise and the twisting in the other layer is set to be anticlockwise.

In a preferred embodiment the respective chiral dopants used in the two switchable layers are stereoisomers of each other, in particular enantiomers. In a particularly preferred embodiment the two switchable layers contain the R-isomer and respectively the S-isomer of a chiral dopant. It is also possible to use suitable or corresponding diastereomers. It is particularly preferred that the dopant concentration for each of the isomers respectively used in the media is the same. This provision can facilitate the preparation of both liquid-crystalline media in that they may be identical except for the chirality of the chiral dopant, i.e. the isomeric or enantiomeric form. Using the corresponding isomers or enantiomers in the same concentration can also favourably contribute to achieving an effective and efficient compensation of the unwanted optical artefacts.

In this respect, it is particularly preferred that the two switchable layers have the same thickness, and that the two media contain the same dichroic dyes preferably in the same concentrations and contain enantiomers of the same chiral dopant preferably in the same concentration.

A chiral or cholesteric medium can be prepared, for example, by doping a nematic LC medium with a chiral dopant having a high twisting power. The pitch p of the induced cholesteric helix is then given by the concentration c and the helical twisting power HTP of the chiral dopant in accordance with equation (1):

$$p = (HTP\ c)^{-1} \qquad (1).$$

It is also possible to use two or more dopants, for example in order to compensate for the temperature dependence of the HTP of the individual dopants and thus to achieve small temperature dependence of the helix pitch. For the total HTP ($HTP_{total}$) then approximately equation (2) holds:

$$HTP_{total} = \sum_i c_i\, HTP_i \quad (2)$$

wherein $c_i$ is the concentration of each individual dopant and $HTP_i$ is the helical twisting power of each individual dopant.

The liquid-crystalline media in the first and second switchable layers preferably contain one or more chiral compounds and in particular chiral dopants. The chiral dopants preferably have a high absolute value of the HTP and can generally be added in relatively low concentrations to mesogenic base mixtures, and also dye-doped mixtures, and have good solubility in the achiral component. If two or more chiral compounds are employed, they may have the same or opposite direction of rotation and the same or opposite temperature dependence of the twist.

Preferably, the one or more chiral compounds respectively contained in the liquid-crystalline media comprised in the first switchable layer and the second switchable layer have an absolute value of the helical twisting power of 5 $\mu m^{-1}$ or more, more preferably of 10 $\mu m^{-1}$ or more and even more preferably of 15 $\mu m^{-1}$ or more, preferably in the commercial liquid-crystal mixture MLC-6828 from Merck KGaA. Particular preference is given to chiral compounds having an absolute value of the helical twisting power (HTP) of 20 $\mu m^{-1}$ or more, more preferably of 40 $\mu m^{-1}$ or more, even more preferably of 60 $\mu m^{-1}$ or more, and most preferably in the range of 80 $\mu m^{-1}$ or more to 260 $\mu m^{-1}$ or less, preferably in the commercial liquid-crystal mixture MLC-6828 from Merck KGaA.

In an embodiment the one or more chiral compounds are contained in the liquid-crystalline medium in an amount, based on the overall contents of the medium, of 2% by weight or less, more preferably 1% by weight or less.

In a preferred embodiment of the present invention, the chiral component consists of two or more chiral compounds which all have the same sign of the HTP. The temperature dependence of the HTP of the individual compounds may be high or low. The temperature dependence of the pitch of the medium can be compensated by mixing compounds having different temperature dependence of the HTP in corresponding ratios.

Suitable chiral dopants are known in the art, some of which are commercially available, such as, for example, cholesteryl nonanoate, R/S-811, R/S-1011, R/S-2011, R/S-3011, R/S-4011, R/S-5011, B(OC)2C*H-C-3 or CB15 (all Merck KGaA, Darmstadt, Germany).

Particularly suitable chiral dopants are compounds which contain one or more chiral radicals and one or more mesogenic groups, or one or more aromatic or alicyclic groups which form a mesogenic group with the chiral radical.

Suitable chiral radicals are, for example, chiral branched hydrocarbon radicals, chiral ethanediols, binaphthols or dioxolanes, furthermore mono- or polyvalent chiral radicals selected from the group consisting of sugar derivatives, sugar alcohols, sugar acids, lactic acids, chiral substituted glycols, steroid derivatives, terpene derivatives, amino acids or sequences of a few, preferably 1-5, amino acids.

Preferred chiral radicals are sugar derivatives, such as glucose, mannose, galactose, fructose, arabinose and dextrose; sugar alcohols, such as, for example, sorbitol, mannitol, iditol, galactitol or anhydro derivatives thereof, in

particular dianhydrohexitols, such as dianhydrosorbide (1,4:3,6-dianhydro-D-sorbide, isosorbide), dianhydromannitol (isosorbitol) or dianhydroiditol (isoiditol); sugar acids, such as, for example, gluconic acid, gulonic acid and ketogulonic acid; chiral substituted glycol radicals, such as, for example, mono- or oligoethylene or propylene glycols, wherein one or more $CH_2$ groups are substituted by alkyl or alkoxy; amino acids, such as, for example, alanine, valine, phenylglycine or phenylalanine, or sequences of from 2 to 5 of these amino acids; steroid derivatives, such as, for example, cholesteryl or cholic acid radicals; terpene derivatives, such as, for example, menthyl, neomenthyl, campheyl, pineyl, terpineyl, isolongifolyl, fenchyl, carreyl, myrthenyl, nopyl, geraniyl, linaloyl, neryl, citronellyl or dihydrocitronellyl.

Suitable chiral radicals and mesogenic chiral compounds are described, for example, in DE 34 25 503, DE 35 34 777, DE 35 34 778, DE 35 34 779 and DE 35 34 780, DE 43 42 280, EP 01 038 941 and DE 195 41 820.

Preferable chiral compounds used according to the present invention are selected from the following groups of compounds.

In an embodiment preference is given to dopants selected from the group consisting of compounds of the following formulae A-I to A-III:

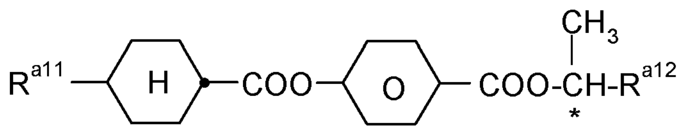

A-I

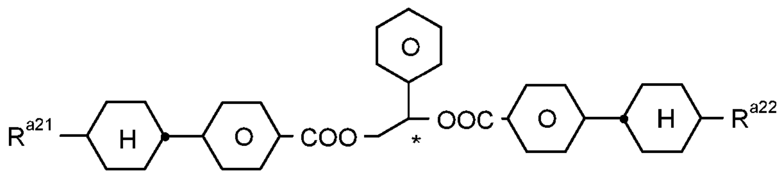

A-II

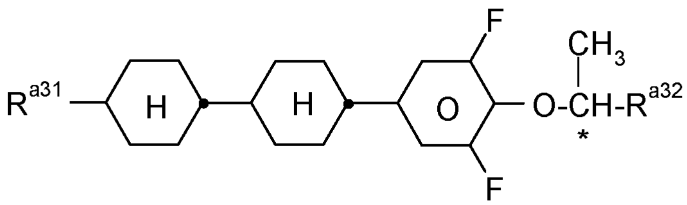

A-III

in which

$R^{a11}$ and $R^{a12}$, independently of one another, are alkyl, oxaalkyl or alkenyl having from 2 to 9, preferably up to 7, carbon atoms, and $R^{a11}$ is alternatively methyl or alkoxy having from 1 to 9 carbon atoms, preferably both are alkyl, preferably n-alkyl,

$R^{a21}$ and $R^{a22}$, independently of one another, are alkyl or alkoxy having from 1 to 9, preferably up to 7, carbon atoms, oxaalkyl, alkenyl or alkenyloxy having from 2 to 9, preferably up to 7, carbon atoms, preferably both are alkyl, preferably n-alkyl,

$R^{a31}$ and $R^{a32}$, independently of one another, are alkyl, oxaalkyl or alkenyl having from 2 to 9, preferably up to 7, carbon atoms, and $R^{a11}$ is alternatively methyl or alkoxy having from 1 to 9 carbon atoms, preferably both are alkyl, preferably n-alkyl.

Particular preference is given to chiral dopants selected from the group consisting of the compounds of the following formulae:

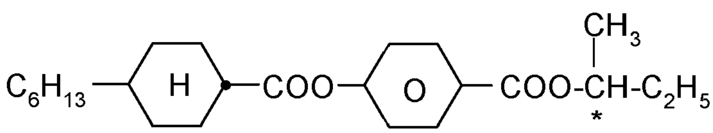

A-I-1

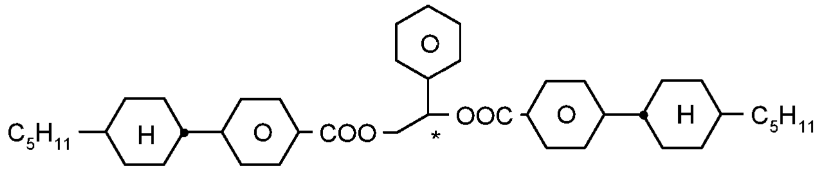

A-II-1

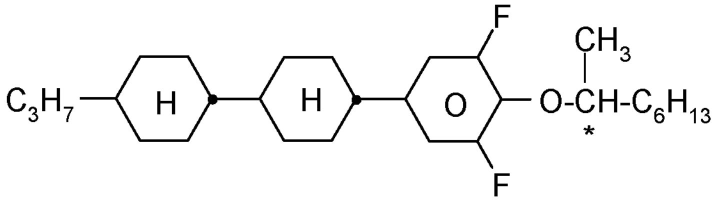

A-III-1

Further preferred dopants are derivatives of isosorbide, isomannitol or isoiditol of the following formula A-IV

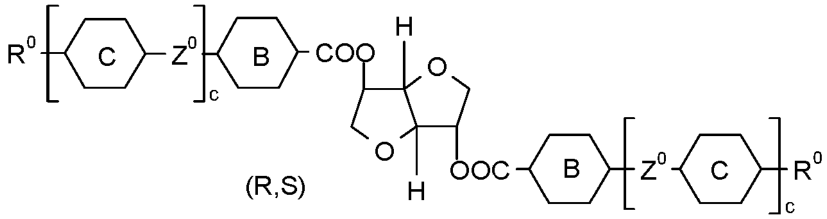

A-IV

in which the group

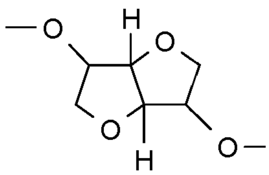

is

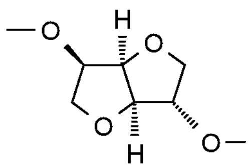

(dianhydrosorbitol),

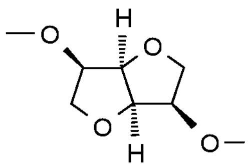

(dianhydromannitol),

or

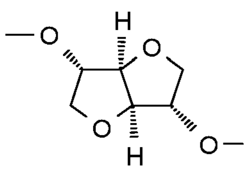

(dianhydroiditol),

preferably dianhydrosorbitol,

and chiral ethanediols, such as, for example, diphenylethanediol (hydrobenzoin), in particular mesogenic hydrobenzoin derivatives of the following formula A-V

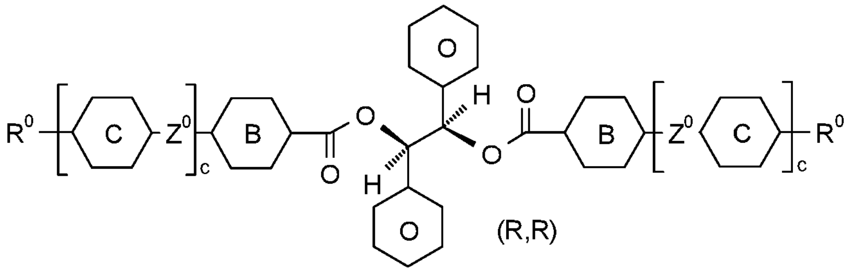

A-V

including the (R,S), (S,R), (R,R) and (S,S) enantiomers, which are not shown,

in which

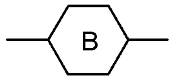

and

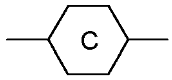

are each, independently of one another, 1,4-phenylene, which may also be mono-, di- or trisubstituted by L, or 1,4-cyclohexylene,

L is H, F, Cl, CN or optionally halogenated alkyl, alkoxy, alkylcarbonyl, alkoxycarbonyl or alkoxycarbonyloxy having 1-7 carbon atoms,

c is 0 or 1,

$Z^0$ is -COO-, -OCO-, $-CH_2CH_2-$ or a single bond, and

$R^0$ is alkyl, alkoxy, alkylcarbonyl, alkoxycarbonyl or alkylcarbonyloxy having 1-12 carbon atoms.

Compounds of formula A-IV are described in WO 98/00428. Compounds of the formula A-V are described in GB-A-2,328,207.

In another embodiment particularly preferred chiral dopants are chiral binaphthyl derivatives, as described in WO 02/94805, chiral binaphthol acetal derivatives, as described in WO 02/34739, chiral TADDOL derivatives, as described in WO 02/06265, and chiral dopants having at least one fluorinated bridging group and a terminal or central chiral group, as described in WO 02/06196 and WO 02/06195.

Particular preference is given to chiral compounds of formula A-VI

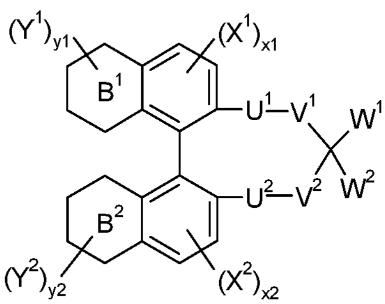

A-VI

in which

$X^1$, $X^2$, $Y^1$ and $Y^2$ are each, independently of one another, F, Cl, Br, I, CN, SCN, $SF_5$, straight-chain or branched alkyl having from 1 to 25 carbon atoms, which may be monosubstituted or polysubstituted by F, Cl, Br, I or CN and in which, in addition, one or more non-adjacent $CH_2$ groups may each, independently of one another, be replaced by -O-, -S-, -NH-, $NR^0$-, -CO-, -COO-, -OCO-, -OCOO-, -S-CO-, -CO-S-, -CH=CH- or -C≡C- in such a way that O and/or S atoms are not bonded directly to one another, a polymerisable group or cycloalkyl or aryl having up to 20 carbon atoms, which may optionally be monosubstituted or polysubstituted by halogen, preferably F, or by a polymerisable group,

$x^1$ and $x^2$ are each, independently of one another, 0, 1 or 2,

$y^1$ and $y^2$ are each, independently of one another, 0, 1, 2, 3 or 4,

$B^1$ and $B^2$ are each, independently of one another, an aromatic or partially or fully saturated aliphatic six-membered ring in which one or more CH groups may be replaced by N atoms and one or more non-adjacent $CH_2$ groups may be replaced by O and/or S,

$W^1$ and $W^2$ are each, independently of one another, $-Z^1-A^1-(Z^2-A^2)_m-R$, and one of the two is alternatively $R^1$ or $A^3$, but both are not simultaneously H, or

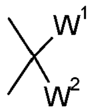

is

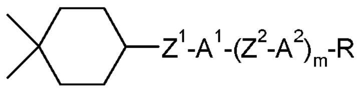 or

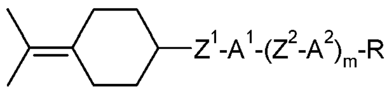 ,

$U^1$ and $U^2$ are each, independently of one another, $CH_2$, O, S, CO or CS,

$V^1$ and $V^2$ are each, independently of one another, $(CH_2)_n$, in which n is 0 1 2 3, 4, or 5, and in which one or more non-adjacent $CH_2$ groups may be replaced by O and/or S, and one of $V^1$ and $V^2$ and, in the case where

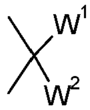

is

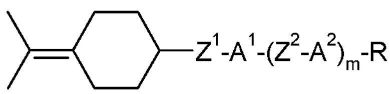 ,

both are a single bond,

$Z^1$ and $Z^2$ are each, independently of one another, -O-, -S-, -CO-, -COO-, -OCO-, -O-COO-, $-CO-NR^0-$, $-NR^0-CO-$, $-O-CH_2-$, $-CH_2-O-$, $-S-CH_2-$, $-CH_2-S-$, $-CF_2-O-$, $-O-CF_2-$, $-CF_2-S-$, $-S-CF_2-$, $-CH_2-CH_2-$, $-CF_2-CH_2-$, $-CH_2-CF_2-$, $-CF_2-CF_2-$, -CH=N-, -N=CH-, -N=N-, -CH=CH-, -CF=CH-, -CH=CF-, -CF=CF-, -C≡C-, a combination of two of these groups, where no two O and/or S and/or N atoms

are bonded directly to one another, preferably -CH=CH-COO-, or -COO-CH=CH-, or a single bond,

$A^1$, $A^2$ and $A^3$ are each, independently of one another, 1,4-phenylene, in which one or two non-adjacent CH groups may be replaced by N, 1,4-cyclohexylene, in which one or two non-adjacent $CH_2$ groups may be replaced by O and/or S, 1,3-dioxolane-4,5-diyl, 1,4-cyclohexenylene, 1,4-bicyclo[2.2.2]octylene, piperidine-1,4-diyl, naphthalene-2,6-diyl, decahydronaphthalene-2,6-diyl or 1,2,3,4-tetrahydronaphthalene-2,6-diyl, where each of these groups may be monosubstituted or polysubstituted by L, and in addition $A^1$ is a single bond,

L is a halogen atom, preferably F, CN, $NO_2$, alkyl, alkoxy, alkylcarbonyl, alkoxycarbonyl or alkoxycarbonyloxy having 1-7 carbon atoms, in which one or more H atoms may be replaced by F or Cl,

m is in each case, independently, 0, 1, 2 or 3, and

R and $R^1$ are each, independently of one another, H, F, Cl, Br, I, CN, SCN, $SF_5$, straight-chain or branched alkyl having from 1 or 3 to 25 carbon atoms respectively, which may optionally be monosubstituted or polysubstituted by F, Cl, Br, I or CN, and in which one or more non-adjacent $CH_2$ groups may be replaced by -O-, -S-, -NH-, -$NR^0$-, -CO-, -COO-, -OCO-, -O-COO-, -S-CO-, -CO-S-, -CH=CH- or -C≡C-, where no two O and/or S atoms are bonded directly to one another, or a polymerisable group.

Particular preference is given to chiral binaphthyl derivatives of the formula A-VI-1

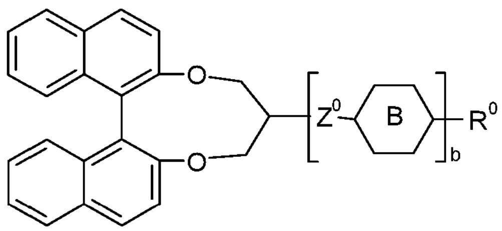

A-VI-1

in particular those selected from the following formulae A-VI-1a to A-VI-1c:

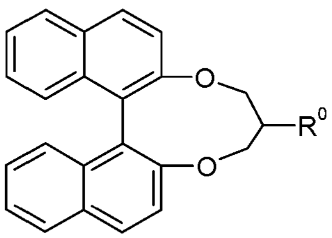

A-VI-1a

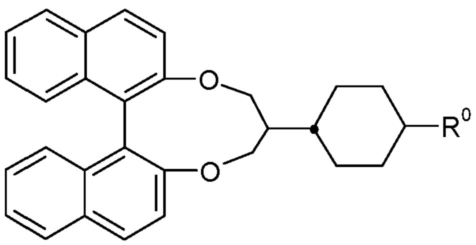

A-VI-1b

A-VI-1c

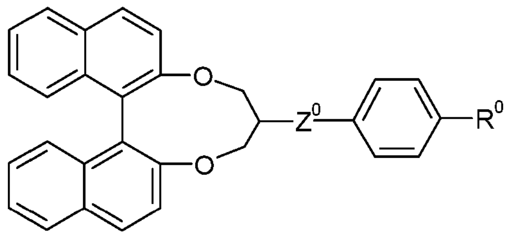

in which B and $Z^0$ are as defined for formula A-IV, and $Z^0$ more preferably is -OCO- or a single bond,

$R^0$ is as defined for formula A-IV or H or alkyl having from 1 to 4 carbon atoms, and
b is 0, 1 or 2.

Particular preference is furthermore given to chiral binaphthyl derivatives of the formula A-VI-2

A-VI-2

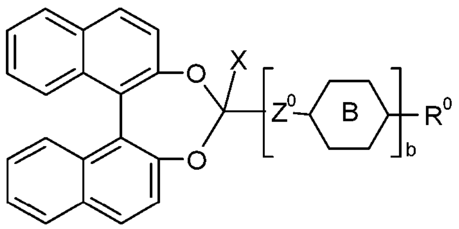

in particular to those selected from the following formulae A-VI-2a to A-VI-2f:

A-VI-2a

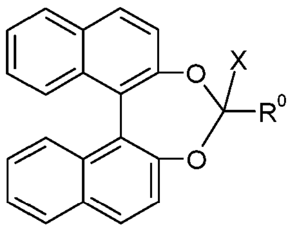

A-VI-2b

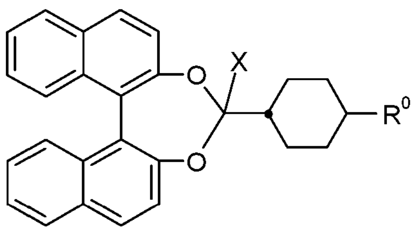

A-VI-2c

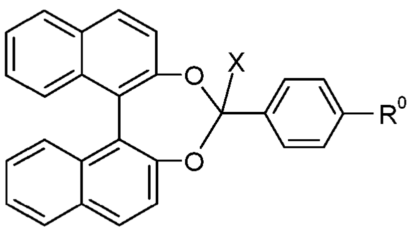

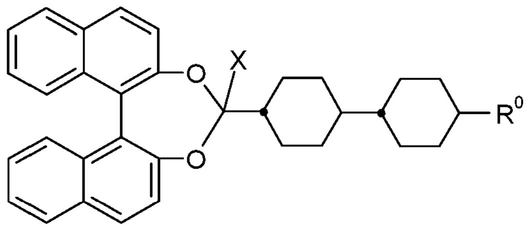

A-VI-2d

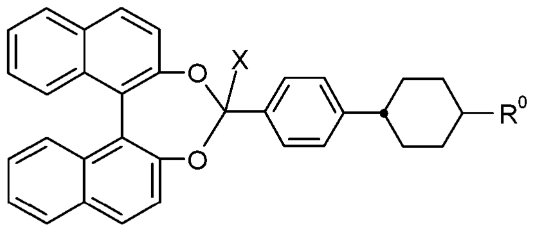

A-VI-2e

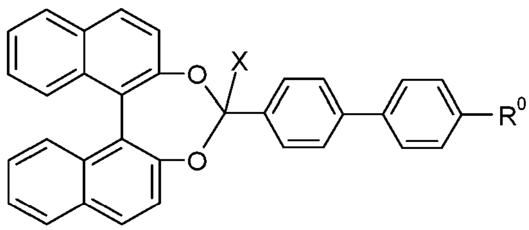

A-VI-2f

**in which** $R^0$ is as defined for formula A-VI, and X is H, F, Cl, CN or $R^0$, preferably F.

In a particularly preferred embodiment, the liquid-crystalline medium contained in one of the first and second switchable layers comprises the compound R-5011 and the liquid-crystalline medium contained in the other switchable layer comprises the compound S-5011, both shown in Table F below. It is particularly preferred that R-5011 and S-5011 are respectively the only chiral compounds contained in the media.

In another particularly preferred embodiment, the liquid-crystalline medium contained in one of the first and second switchable layers comprises the compound S-811 and the liquid-crystalline medium contained in the other switchable layer comprises the compound R-811, both shown in Table F below. It is particularly preferred that S-811 and R-811 are respectively the only chiral compounds contained in the media.

In an embodiment it is preferred that for each of the first and second switchable layers the following relationship applies

$$p * \Delta n < 20.0 \ \mu m$$

in which p is the respective pitch of each of the switching layers and $\Delta n$ is the optical anisotropy, in particular determined at 589.3 nm and 20°C, of the liquid-crystalline medium respectively contained in each of the switching layers. It is even more preferred that for each of the first and second switchable layers $p * \Delta n < 15.0$ μm, still more preferably $p * \Delta n < 10.0$ μm and in particular $p * \Delta n < 5.0$ μm.

The LC media contained in the switching layers preferably and favourably exhibit a high reliability and a high electric resistivity. The LC media also preferably and favourably exhibit a high voltage holding ratio (VHR), see S. Matsumoto et al., Liquid Crystals 5, 1320 (1989); K. Niwa et al., Proc. SID Conference, San Francisco, June 1984, p. 304 (1984); T. Jacob and U. Finkenzeller in "Merck Liquid Crystals - Physical Properties of Liquid Crystals", 1997. The VHR of an LC medium according to the invention is preferably ≥ 85 %, more preferably ≥ 90 %, even more preferably ≥ 95 % and particularly preferably ≥ 98 %. Unless described otherwise, the measurement of the VHR is carried out as described in T. Jacob, U. Finkenzeller in "Merck Liquid Crystals - Physical Properties of Liquid Crystals", 1997.

In a preferred embodiment the window element does not include a polariser. It was found that even without the use of any polariser a favourable electro-optical performance, e.g. with respect to the switching contrast and transmission attenuation, in particular by providing the two switching layers and the dye-doped LC material and in particular the one or more dichroic dyes as presently defined.

The LC host medium for the guest-host mixtures, in particular the nematic host mixture, as used in the first switchable layer and the second switchable layer can be the same or different. It is however preferred that the LC host medium for the guest-host mixtures as used in the first switchable layer and the second switchable layer is the same,

considering that this simplifies the material provision. Likewise, it is preferable to use the same dichroic dyes, preferably in the same concentrations.

In principle, a suitable host mixture for use in the switching element is any dielectrically negative or positive LC mixture which is suitable for use in conventional VA, TN, STN, VA-STN, IPS or FFS displays.

Suitable LC mixtures are known in the art and are described in the literature. LC media for VA displays having negative dielectric anisotropy are described in for example EP 1 378 557 A1.

Suitable LC mixtures having positive dielectric anisotropy which are suitable for LCDs and especially for IPS displays are known, for example, from JP 07-181 439 (A), EP 0 667 555, EP 0 673 986, DE 195 09 410, DE 195 28 106, DE 195 28 107, WO 96/23 851, WO 96/28 521 and WO2012/079676.

Preferred embodiments of the liquid-crystalline media having negative or positive dielectric anisotropy according to the invention are indicated below.

In a preferred embodiment of the present invention the LC medium used in the switching layers of the window element contains an LC host mixture with positive dielectric anisotropy. Accordingly, in further preferred embodiments the mesogenic media according to the invention comprise components selected from the following items a) and b):

a) Mesogenic medium which comprises one or more compounds selected from the group of compounds of the formulae IIA to VIII as set forth below, in particular of the formulae IIA and IIIA

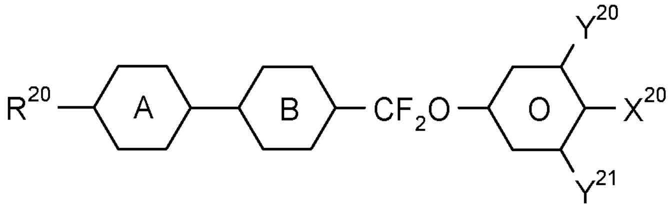

IIA

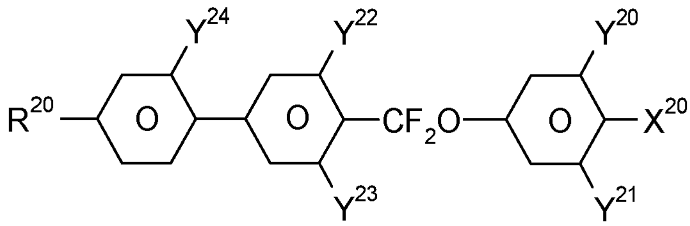

IIIA

wherein

$R^{20}$ each, identically or differently, denote a halogenated or unsubstituted alkyl or alkoxy radical having 1 to 15 C atoms, where, in addition, one or

$X^{20}$ more $CH_2$ groups in these radicals may each be replaced, independently of one another, by -C≡C-, $-CF_2O-$, -CH=CH-, -O-,

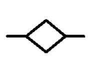 , 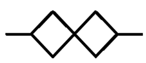 ,

-CO-O- or -O-CO- in such a way that O atoms are not linked directly to one another, each, identically or differently, denote F, Cl, CN, $SF_5$, SCN, NCS, a halogenated alkyl radical, a halogenated alkenyl radical, a halogenated alkoxy radical or a halogenated alkenyloxy radical, each having up to 6 C atoms, and

$Y^{20-24}$ each, identically or differently, denote H or F;

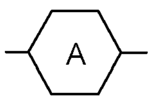 and 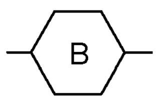

each, independently of one another, denote

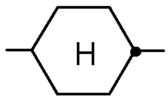 , 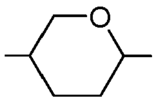 or 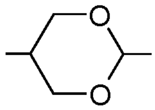 .

The compounds of the formula IIA are preferably selected from the following formulae:

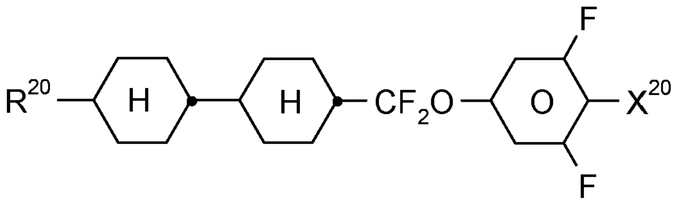
IIAa

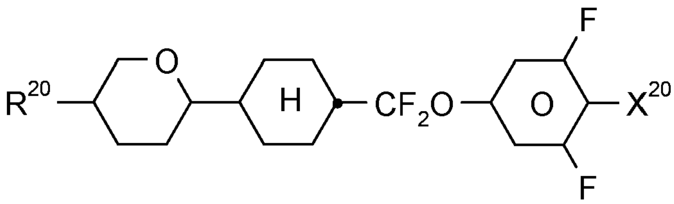
IIAb

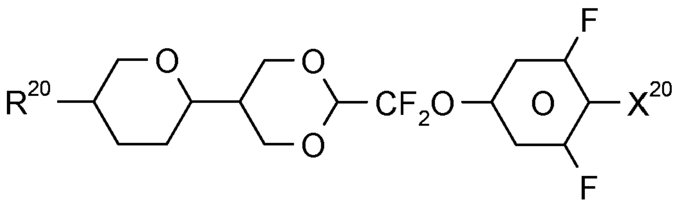
IIAc

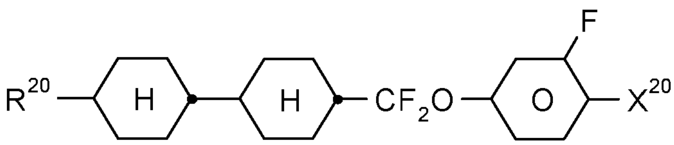
IIAd

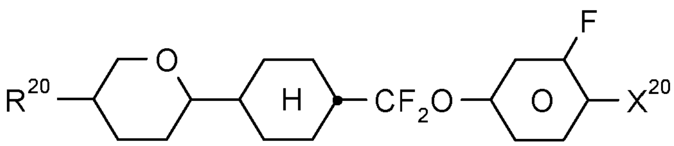
IIAe

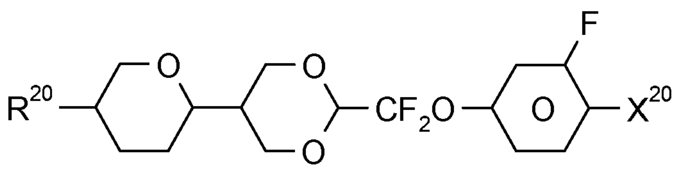
IIAf

wherein $R^{20}$ and $X^{20}$ have the meanings indicated above.

$R^{20}$ preferably denotes alkyl having 1 to 6 C atoms. $X^{20}$ preferably denotes F. Particular preference is given to compounds of the formulae IIAa and IIAb, in particular compounds of the formulae IIAa and IIAb wherein X denotes F.

The compounds of the formula IIIA are preferably selected from the following formulae:

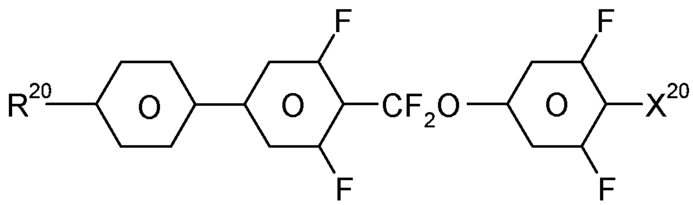

IIIAa

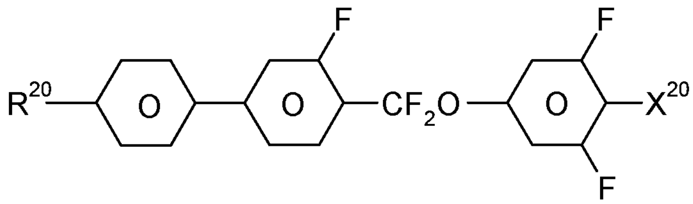

IIIAb

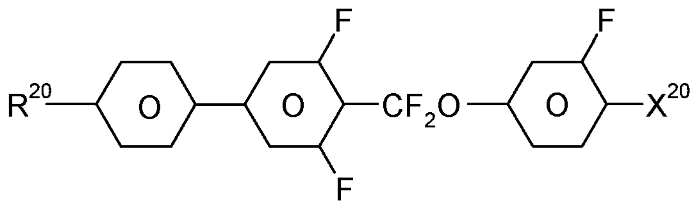

IIIAc

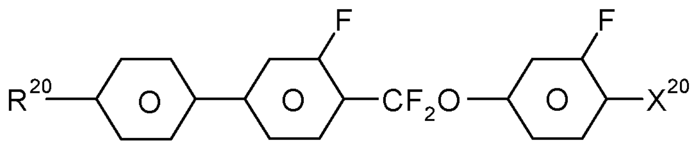

IIIAd

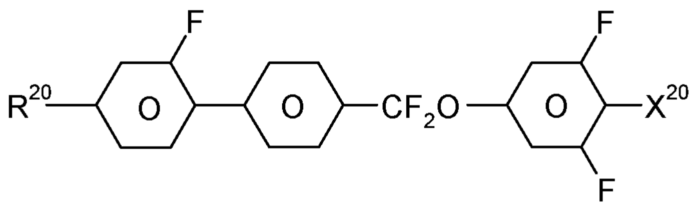

IIIAe

wherein $R^{20}$ and $X^{20}$ have the meanings indicated above.

$R^{20}$ preferably denotes alkyl having 1 to 6 C atoms. $X^{20}$ preferably denotes F. Particular preference is given to compounds of the formulae IIIAa and IIIAe, in particular compounds of the formula IIIAa.

In a further embodiment the liquid-crystal media comprise one or more compounds selected from the compounds of formulae IIIA-1-b to IIIA-1-h

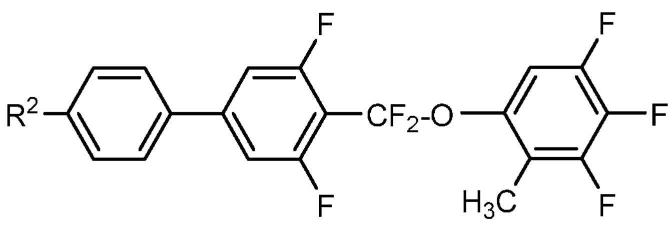

IIIA-1-b

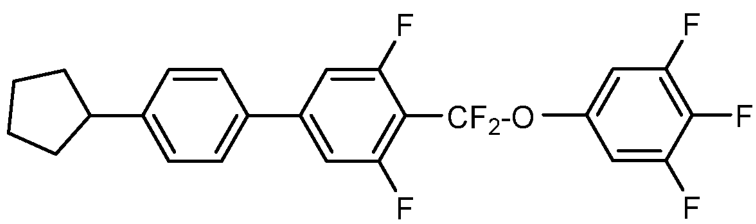

IIIA-1-c

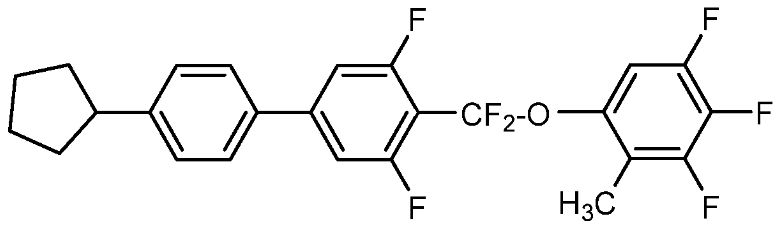

IIIA-1-d

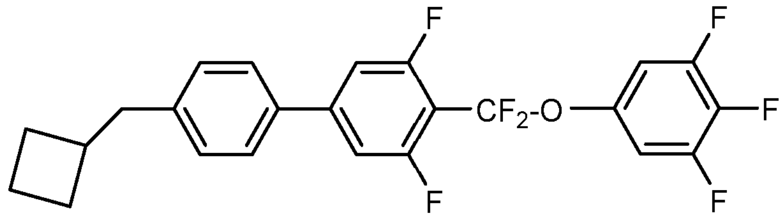

IIIA-1-e

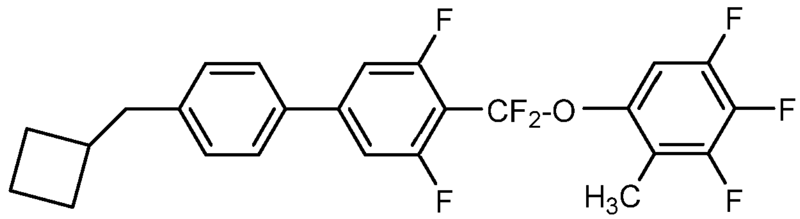

IIIA-1-f

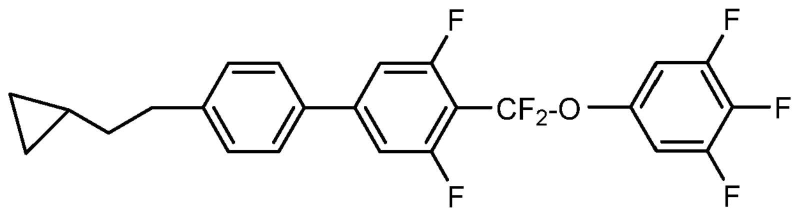

IIIA-1-g

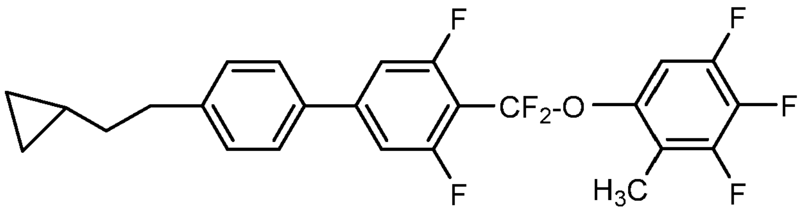

IIIA-1-h,

wherein $R^2$ has the meaning of $R^{20}$ as given in formula IIIA.

b) Mesogenic medium alternatively or additionally comprising one or more compounds selected from the following formulae:

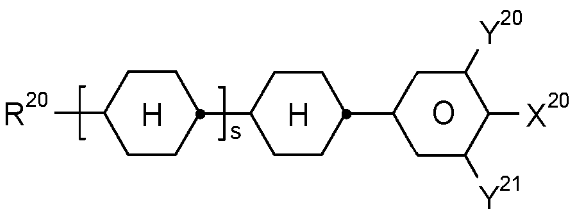

IVA

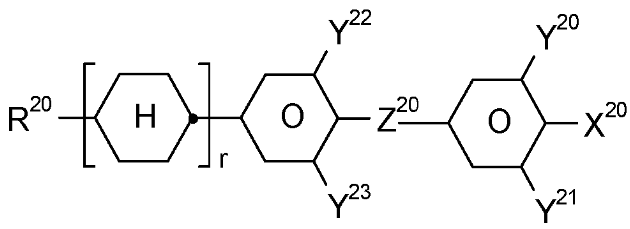

V

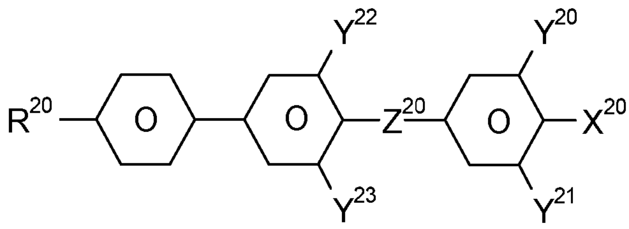

VI

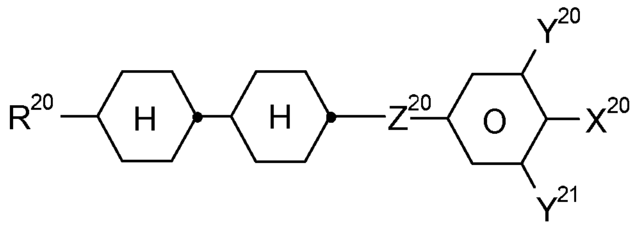

VII

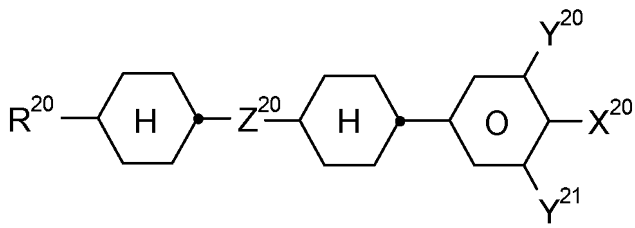

VIII

wherein

| | |
|---|---|
| $R^{20}$, $X^{20}$ and $Y^{20-23}$ | have the meanings indicated above, and |
| $Z^{20}$ | denotes $-C_2H_4-$, $-(CH_2)_4-$, -CH=CH-, -CF=CF-, $-C_2F_4-$, $-CH_2CF_2-$, $-CF_2CH_2-$, $-CH_2O-$, $-OCH_2-$, -COO- or $-OCF_2-$, in formulae V and VI also a single bond, in formulae V and VIII also $-CF_2O-$, |
| r | denotes 0 or 1, and |
| s | denotes 0 or 1; |

- The compounds of the formula IVA are preferably selected from the following formulae:

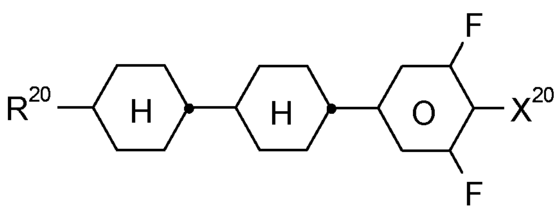

IVAa

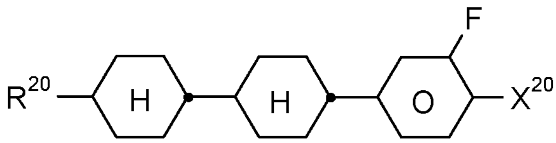

IVAb

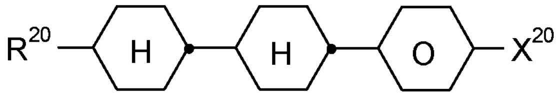

IVAc

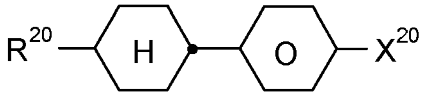

IVAd

wherein $R^{20}$ and $X^{20}$ have the meanings indicated above.

$R^{20}$ preferably denotes alkyl having 1 to 6 C atoms. $X^{20}$ preferably denotes F, CN or $OCF_3$, furthermore $OCF=CF_2$ or Cl.

- The compounds of the formula V are preferably selected from the following formulae:

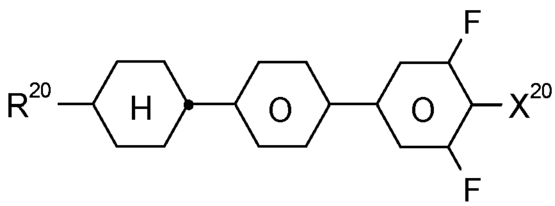

Va

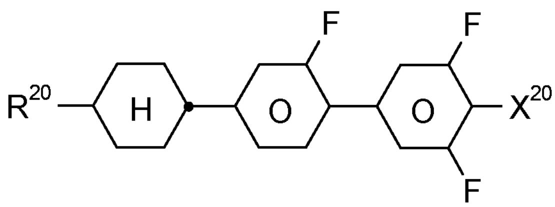

Vb

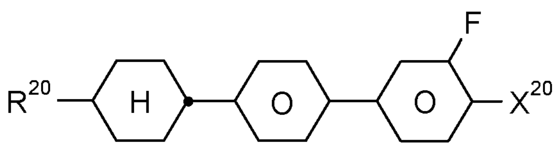

Vc

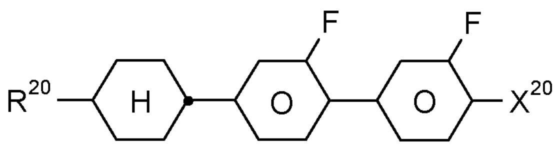

Vd

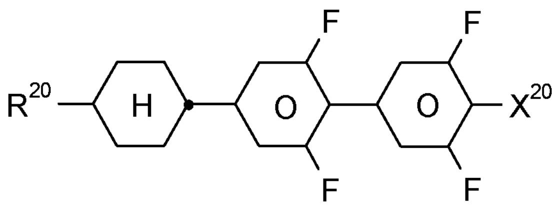

Ve

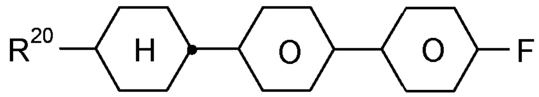

Vf

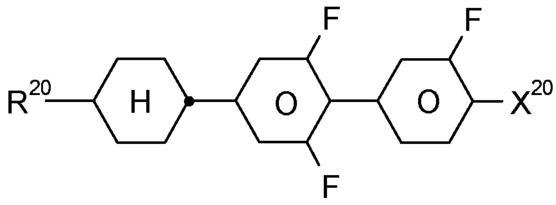

Vg

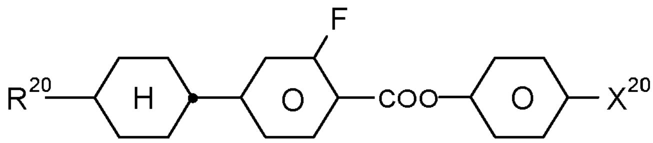

Vh

wherein $R^{20}$ and $X^{20}$ have the meanings indicated above.

$R^{20}$ preferably denotes alkyl having 1 to 6 C atoms. $X^{20}$ preferably denotes F and $OCF_3$, furthermore $OCHF_2$, $CF_3$, $OCF=CF_2$ and $OCH=CF_2$.

- The compounds of the formula VI are preferably selected from the following formulae:

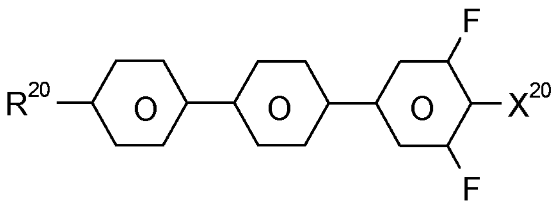

VIa

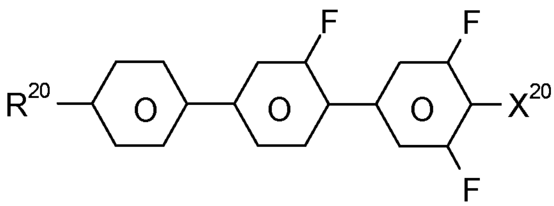

VIb

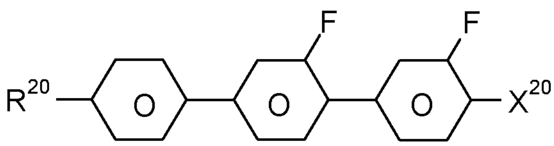

VIc

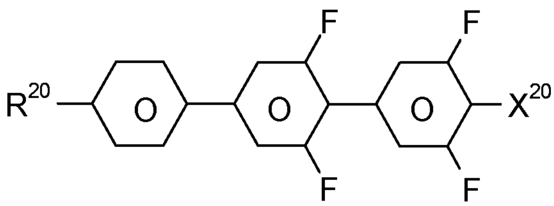

VId

wherein $R^{20}$ and $X^{20}$ have the meanings indicated above.

$R^{20}$ preferably denotes alkyl having 1 to 6 C atoms. $X^{20}$ preferably denotes F, furthermore $OCF_3$, $CF_3$, $CF=CF_2$, $OCHF_2$ and $OCH=CF_2$;

- The compounds of the formula VII are preferably selected from the following formulae:

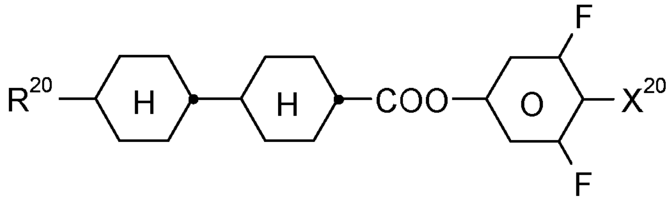

VIIa

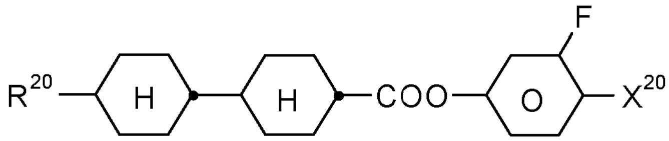

VIIb

wherein $R^{20}$ and $X^{20}$ have the meanings indicated above.

$R^{20}$ preferably denotes alkyl having 1 to 6 C atoms. $X^{20}$ preferably denotes F, furthermore $OCF_3$, $OCHF_2$ and $OCH=CF_2$.

The liquid-crystalline media can in addition include suitable additives and auxiliary materials, e.g. stabilizers and quenchers.

It is preferred that the liquid-crystalline media as used in the first and second switchable layers contain no polymerisable compounds, in particular no polymerisable mesogenic compounds.

The LC media according to the invention are prepared in a manner conventional *per* se. In general, the components are dissolved in one another, preferably at elevated temperature. The mixing is preferably carried out under inert gas, for example under nitrogen or argon. The optional dyes are subsequently added, preferably at elevated temperature, more preferably at above 40°C and particularly preferably at above 50°C. In general, the desired amount of the components used in smaller amount is dissolved in the components making up the principal constituent. It is also possible to mix solutions of the components in an organic solvent, for example in acetone, toluene, chloroform or methanol, and to remove the solvent again, for example by distillation, after mixing.

The window element preferably has a size of greater than 0.5 $m^2$, more preferably greater than 1 $m^2$, and even more preferably greater than 3 $m^2$. In an embodiment the window element has an area in the range of 0.10 $m^2$ to 10 $m^2$, and more preferably in the range of 0.5 $m^2$ to 10 $m^2$.

The window element according to the invention allows light to pass through it. It can be favourably used and included in windows, glazing units, including insulating glazing units, facade elements, room dividers, separating walls and the like and it can be used therein as the element which provides the different switching states on demand and thus anti-glare control as desired.

The window element as a switchable device can be used to regulate or modulate the passage of light from an exterior space into an interior space, e.g. into the interior of a building such as a residential building, an office building or a building used for commercial purposes, or vehicles. The window element can also be used to regulate or modulate the passage of light from an interior space into another interior space, in particular in structural elements which separate different functional areas or rooms.

The window elements and also the windows as a whole which include the window elements preferably do not comprise any light sources. Thus, any light transmitted through the window stems from an external light source such as the sun or a home lighting apparatus, in particular the sun.

According to the invention the state of the switchable layers and the window element is controlled using an electric field which is applied by means of electrodes. The electrodes are preferably transparent electrodes which are arranged on the substrates in the form of a coating. The coating is commonly applied to the substrate side or surface which is facing the switching layer.

Preferably, the electrodes are not patterned and/or structured so that they are contiguous. Thus, the entire switchable area is addressed and switched at the same time by applying an electric field. In alternative embodiments the electrodes may be patterned to form individually addressable areas which may be switched independently from other areas by applying an electric field. In this case, the electrodes are preferably patterned such that 2 to 500 independently addressable areas are present. Such patterns may e.g. be useful to generate transmission gradients across the device area.

Preferably, for ease of electronic driving the switching voltages to switch the first and second switchable layers can be matched. Favourably comparatively low switching voltages may be useful and effective, wherein preferably

switching voltages of 48 V or less are used.

In the window element, preferably in the window including the window element which controls and regulates the passage of light, the switchable layers and the optional further layers may be suitably arranged and bonded, e.g. by lamination or using adhesives, but also separated by using for example one or more interjacent substrates or sheets, panes or panels, wherein optionally panes may be further separated by a vacuum or a gas filled space.

In an embodiment the multilayer arrangement is assembled in an insulating glazing unit, where layers are inter alia separated by a vacuum or a gas filled space and where optionally one or more of the substrates or carrier panes, in particular one or more glazing sheets, have a low-e coating. Lamination or adhesion materials may include e.g. ionoplast, ethylene vinyl acetate (EVA), polyvinyl butyral (PVB) or polyurethane, e.g. thermo-plastic polyurethane (TPU), or optically clear adhesive.

The switchable layers according to the invention can be arranged between substrates, in particular transparent substrates. The substrates may comprise, preferably consist of, glass or a polymer.

Suitable glass materials include, for example, float glass or downdraw glass. The glass may also have been subjected to a pre-processing step like tempering, toughening and/or coating or sputtering. The glass can be, for example, soda-lime glass, borosilicate glass or aluminosilicate glass. In an embodiment an alkali-free glass or a chemically strengthened glass is used. Suitable alkali-free glass includes borosilicate glass or aluminosilicate glass, which has low alkali content or even no alkali content in the glass recipe. Such glass is, for example, available under the tradename Eagle 2000 glass or EAGLE XG slim glass from Corning and under the tradename AF32 or BOROFLOAT from Schott. Suitable chemically strengthened glass is, for example, available under the tradename Gorilla from Corning and under the tradename Dragontrail from Asahi Glass Corporation (AGC).

Suitable polymer materials include, for example, polyethylene terephthalate (PET), polyethylene naphthalate (PEN), polyvinylbutyral (PVB), polymethyl methacrylate (PMMA), polycarbonate (PC), polyimide (PI), COP (cyclic olefin polymers) or TAC (triacetylcellulose).

In a particularly preferred embodiment glass substrates are used. In an alternative embodiment plastic substrates are used.

Preferably alignment layers are used in the devices according to the invention, wherein the alignment layers can be any desired layers known to the person skilled in the art for this purpose. Preference is given to polyimide layers, particularly preferably layers comprising rubbed polyimide. In an embodiment planar alignment is provided, where more preferably a slight pretilt angle may be set. In an alternative embodiment homeotropic alignment is provided, where more preferably high pretilt angles are set.

In a preferred embodiment, the device according to the invention is a constituent of a window, more preferably a window component comprising at least one glass surface, particularly preferably a component of an insulated glazing unit.

The window element may suitably be integrated into the window, for example by lamination or gluing, e.g. using optically clear adhesive, preferably lamination to panes or glazing units.

In an embodiment the window element, and in particular also the window, only comprise the first and second switchable layers as switchable layers.

In an alternative embodiment, in addition to the first and second switchable layers, the multilayer arrangement may also comprise one or more further switchable layers. In a particular embodiment the multilayer arrangement contains a third switchable layer, wherein the third switchable layer is switchable between an optically clear state and a scattering state. In this case it is preferred that this switchable layer of the scattering type contains a liquid-crystalline medium having a so-called polymer stabilized cholesteric texture (PSCT).

Window here is taken to mean in particular a structure in a building, a car, a commercial vehicle, a boat, a train, an airplane and so on which comprises a frame and at least one substrate or pane, e.g. a plastic substrate or a glass pane, surrounded by this frame. In a preferred embodiment, in particular for architectural applications, the window preferably comprises a heat-insulating frame and two or more glass panes, i.e. multipane insulating glass.

According to a preferred embodiment, the device according to the invention is applied directly to a glass surface of a window, e.g. by lamination, particularly preferably in the interspace between two glass panes of multipane insulating glass.

The window element according to the invention or the window in which the window element can be integrated, e.g. arranged as a switchable glazing unit and in particular an insulated glazing unit, preferably comprises one or more layers which block UV light. In particular, the window element preferably comprises one or more layers which do not allow, or only do so to a very small proportion, the passage of light having a wavelength of less than 350 nm, preferably extending to less than 360 nm, particularly preferably even extending to less than 380 nm. In addition, low emissivity (low-e) coating may preferably be applied to one or more of the sheets.

The window and in particular the window element may also include one or more antireflection layers or coatings.

In case a lamination layer is present it is preferred that a lamination layer is used which is UV blocking, wherein preferably the laminate is facing the light source.

The window can be part of a building, a container, a vehicle or another substantially closed space. The use of the

window element for inside spaces which are subjected to strong insolation and/or strongly varying insolation from an outside place is particularly preferred.

In the present invention and especially in the following Examples, the structures of the mesogenic compounds are indicated by means of abbreviations, also called acronyms. In these acronyms, the chemical formulae are abbreviated as follows using Tables A to C below. All groups $C_nH_{2n+1}$, $C_mH_{2m+1}$ and $C_lH_{2l+1}$ or $C_nH_{2n-1}$, $C_mH_{2m-1}$ and $C_lH_{2l-1}$ denote straight-chain alkyl or alkenyl, preferably 1-E-alkenyl, each having n, m and l C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 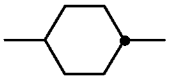 | | |
| **P** | 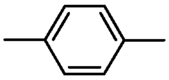 | | |
| **D** | 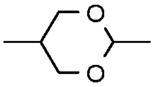 | **DI** | 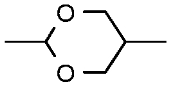 |
| **A** | 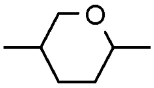 | **AI** | 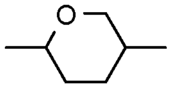 |
| **G** | 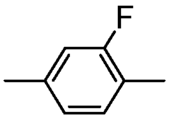 | **GI** | 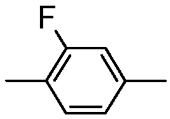 |
| **U** | 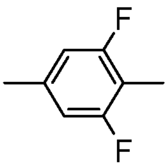 | **UI** | 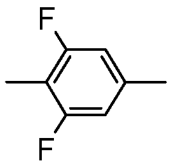 |
| **Y** | 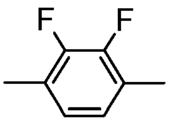 | | |
| **M** | 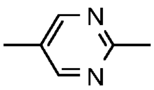 | **MI** | 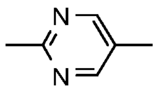 |
| **N** | 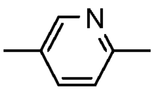 | **NI** | 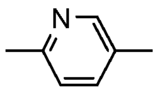 |
| **Np** | 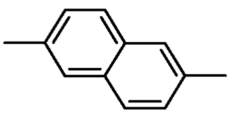 | **dH** | 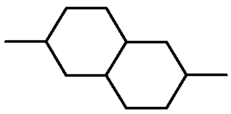 |
| **N3f** | 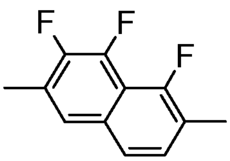 | **N3fI** | 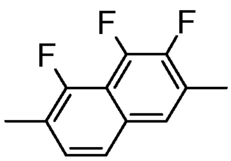 |

(continued)

| | | | |
|---|---|---|---|
| **tH** | 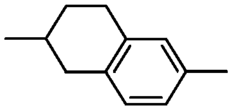 | **tHI** | 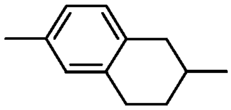 |
| **tH2f** | 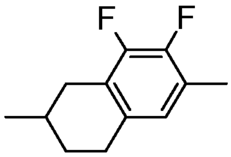 | **tH2fI** | 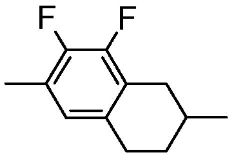 |
| **K** | 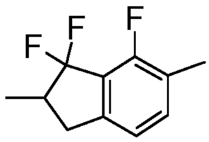 | **KI** | 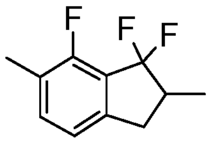 |
| **L** | 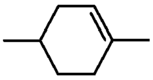 | **LI** | 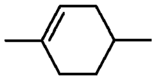 |
| **F** | 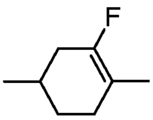 | **FI** | 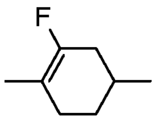 |
| **Nf** | 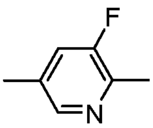 | **NfI** | 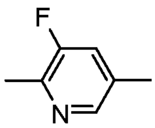 |

**Table B: Linking groups**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Table C: End groups**

| **Left-hand side** | | **Right-hand side** | |
|---|---|---|---|
| | | **Used alone** | |
| **-n-** | $C_nH_{2n+1}-$ | **-n** | $-C_nH_{2n+1}$ |
| **-nO-** | $C_nH_{2n+1}-O-$ | **-On** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-$ $C_nH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-Cl-** | Cl- | **-Cl** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O$ - | **-OM** | $-OCFH_2$ |

(continued)

| Left-hand side | | Right-hand side | |
|---|---|---|---|
| | | **Used alone** | |
| **-DO-** | $CF_2HO$ - | **-OD** | $-OCF_2H$ |
| **-TO-** | $CF_3O$ - | **-OT** | $-OCF_3$ |
| **-FXO-** | $CF_2$=CH-O- | **-OXF** | -O-CH=$CF_2$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |
| | **Used together with one another and with others** | | |
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n and m each denote integers, and the three dots "..." are placeholders for other abbreviations from this table.

The following table shows illustrative structures together with their respective abbreviations. These are shown in order to illustrate the meaning of the rules for the abbreviations. They furthermore represent compounds which may be preferably used.

## Table D: Illustrative structures

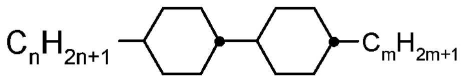

**CC-n-m**

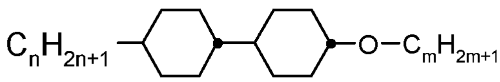

**CC-n-Om**

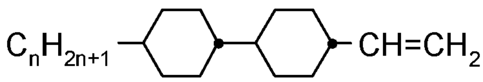

**CC-n-V**

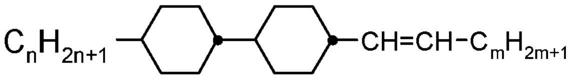

**CC-n-Vm**

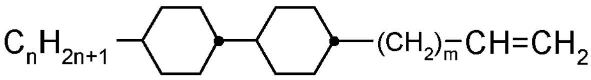

**CC-n-mV**

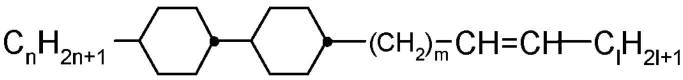

**CC-n-mVl**

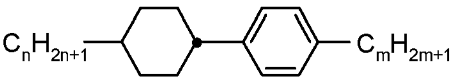

**CP-n-m**

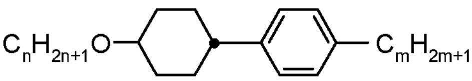

**CP-nO-m**

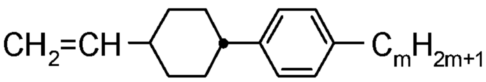

**CP-V-m**

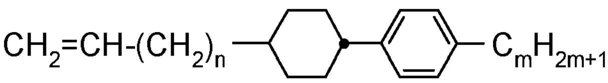

**CP-Vn-m**

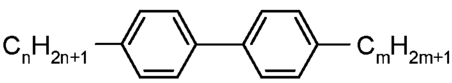

**PP-n-m**

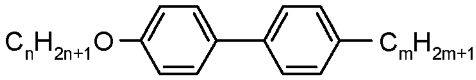

**PP-nO-m**

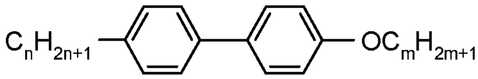

**PP-n-Om**

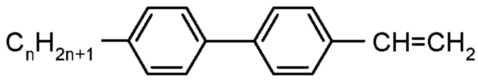

**PP-n-V**

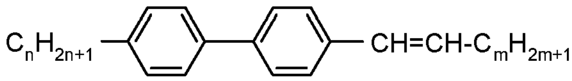

**PP-n-Vm**

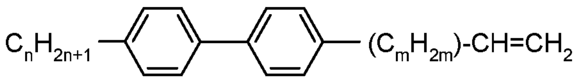

**PP-n-mV**

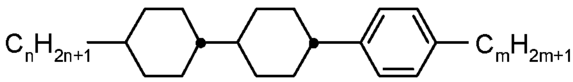

**CCP-n-m**

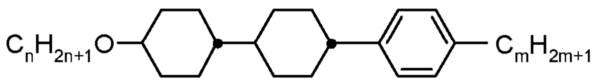

**CCP-nO-m**

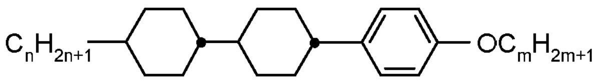

**CCP-n-Om**

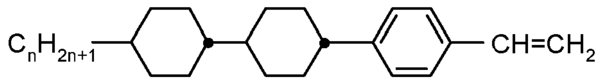

**CCP-n-V**

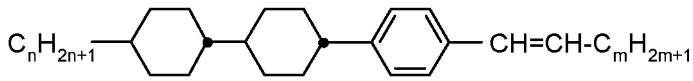

**CCP-n-Vm**

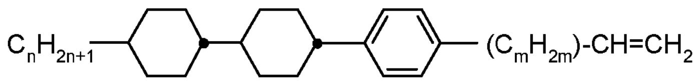

**CCP-n-mV**

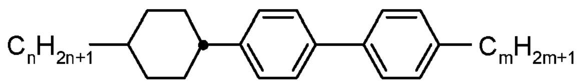

**CPP-n-m**

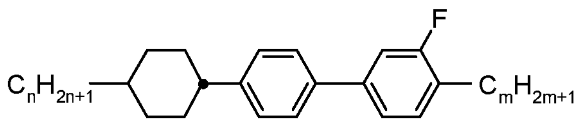

**CPG-n-m**

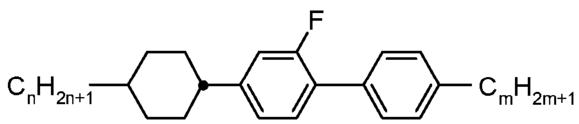

**CGP-n-m**

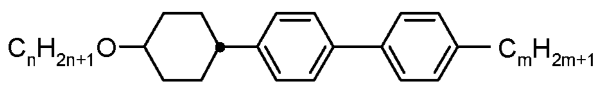

**CPP-nO-m**

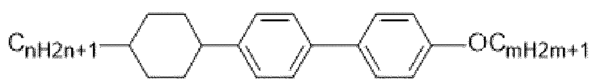

**CPP-n-Om**

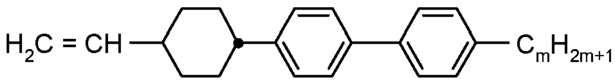

**CPP-V-m**

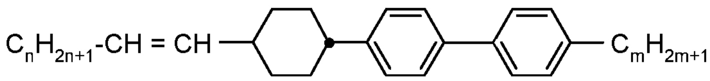

**CPP-nV-m**

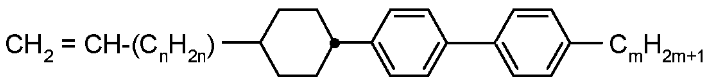

**CPP-Vn-m**

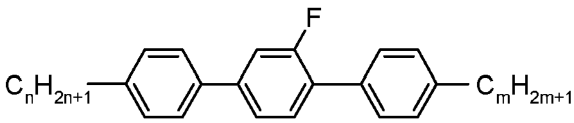

**PGP-n-m**

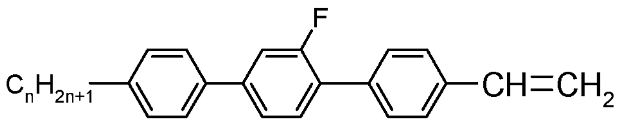

**PGP-n-V**

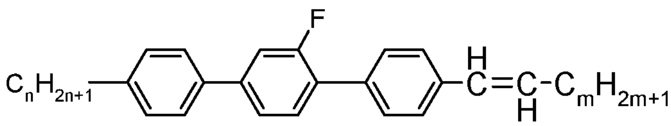

**PGP-n-Vm**

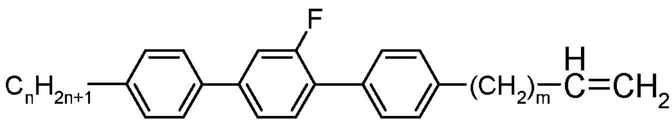

**PGP-n-mV**

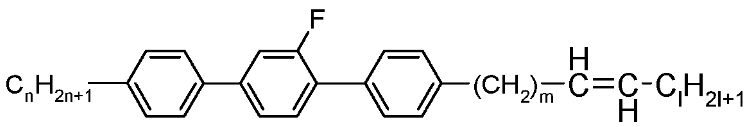

**PGP-n-mVI**

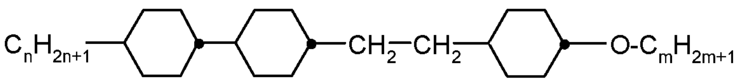

**CCEC-n-Om**

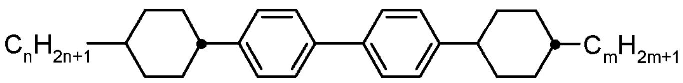

**CPPC-n-m**

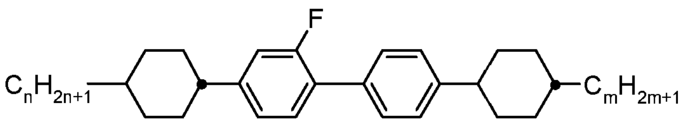

**CGPC-n-m**

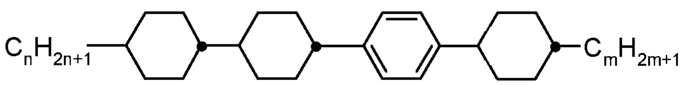

**CCPC-n-m**

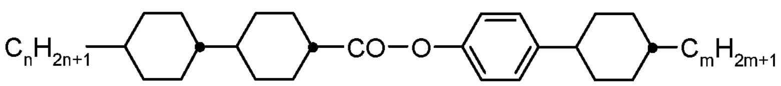

**CCZPC-n-m**

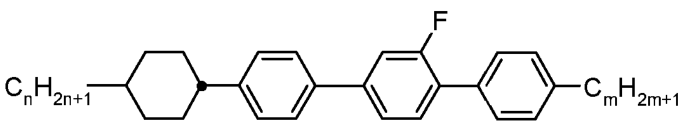

**CPGP-n-m**

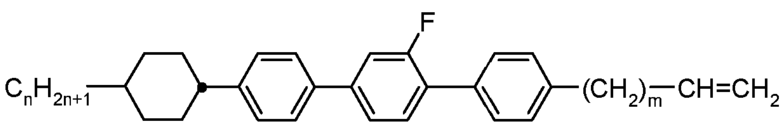

**CPGP-n-mV**

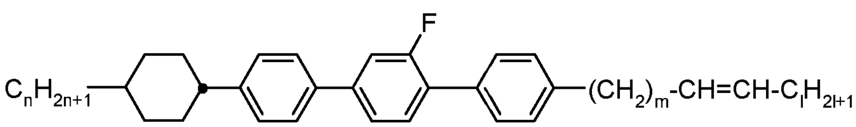

**CPGP-n-mVI**

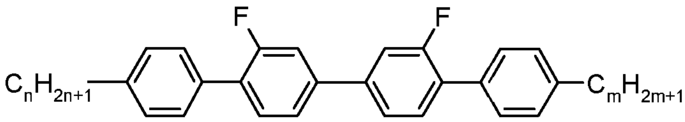

**PGIGP-n-m**

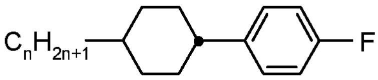

**CP-n-F**

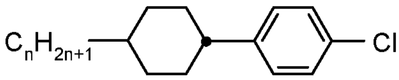

**CP-n-Cl**

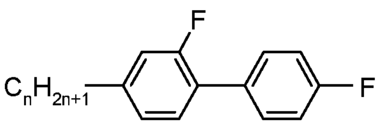

**GP-n-F**

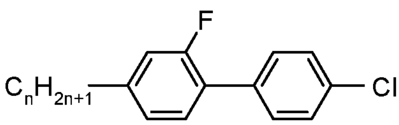

**GP-n-Cl**

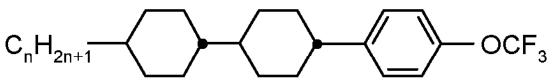

**CCP-n-OT**

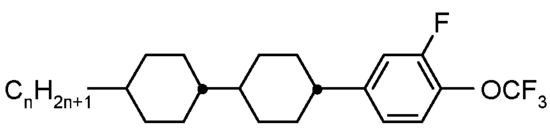

**CCG-n-OT**

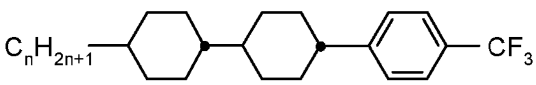

**CCP-n-T**

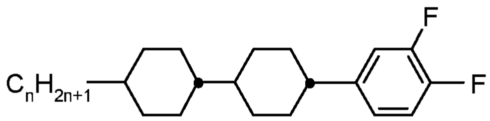

CCG-n-F

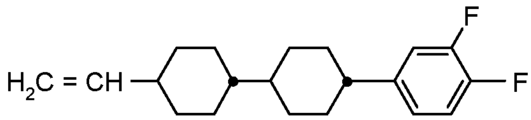

CCG-V-F

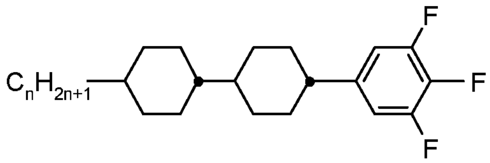

CCU-n-F

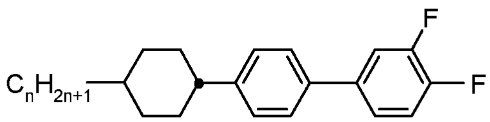

CPG-n-F

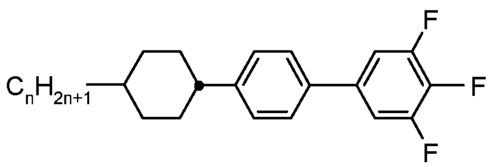

CPU-n-F

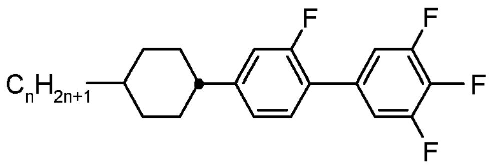

CGU-n-F

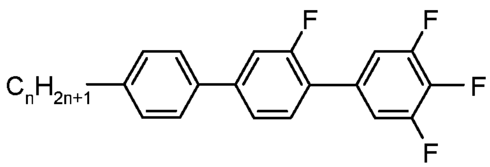

PGU-n-F

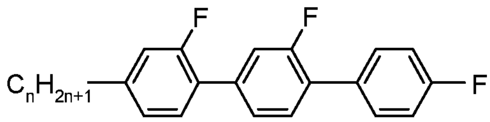

**GGP-n-F**

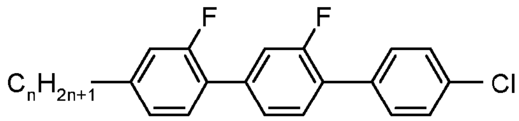

**GGP-n-Cl**

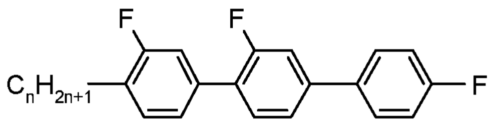

**PGIGI-n-F**

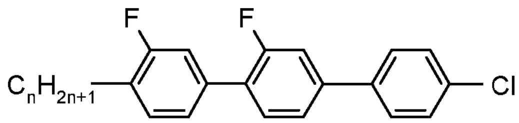

**PGIGI-n-Cl**

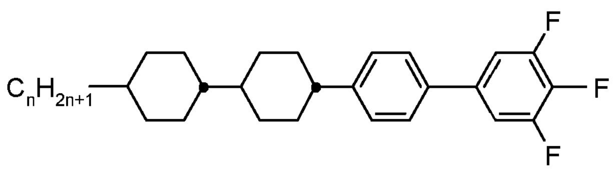

**CCPU-n-F**

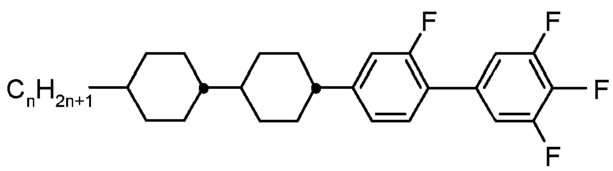

**CCGU-n-F**

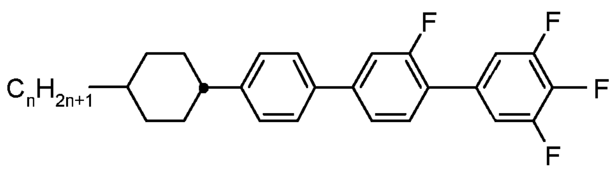

**CPGU-n-F**

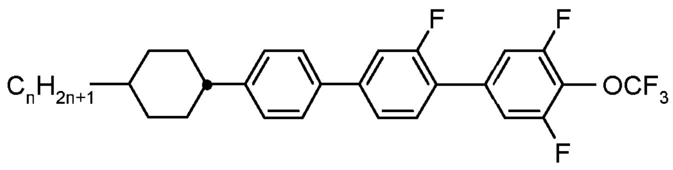

**CPGU-n-OT**

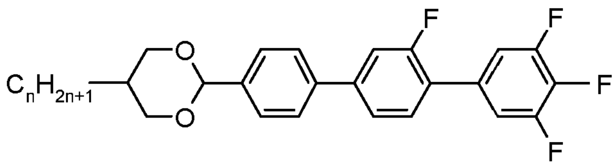

**DPGU-n-F**

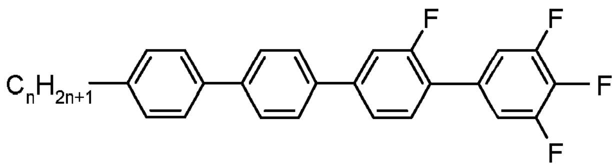

**PPGU-n-F**

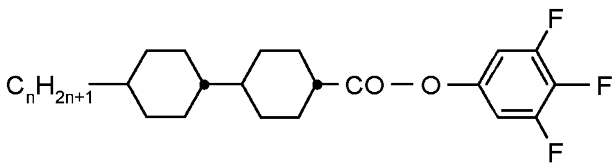

**CCZU-n-F**

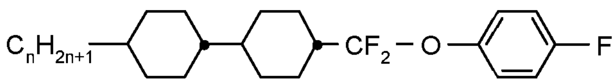

**CCQP-n-F**

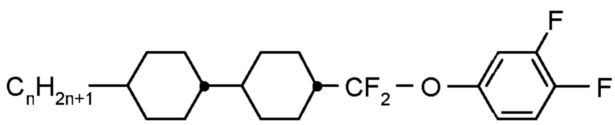

**CCQG-n-F**

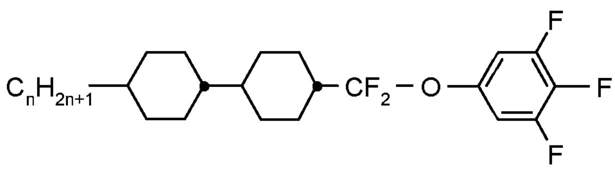

**CCQU-n-F**

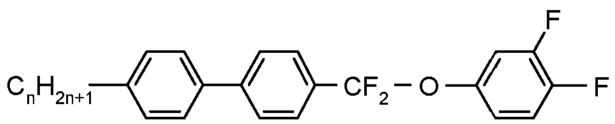

**PPQG-n-F**

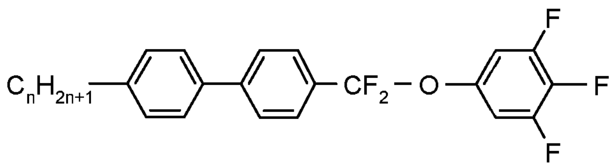

**PPQU-n-F**

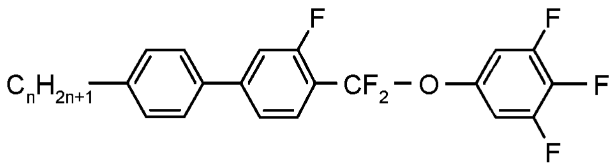

**PGQU-n-F**

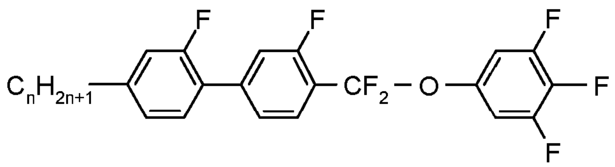

**GGQU-n-F**

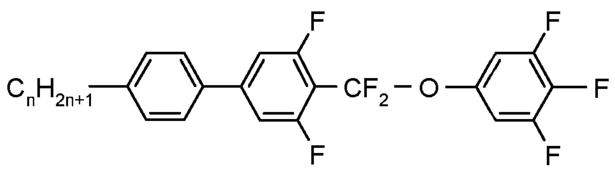

**PUQU-n-F**

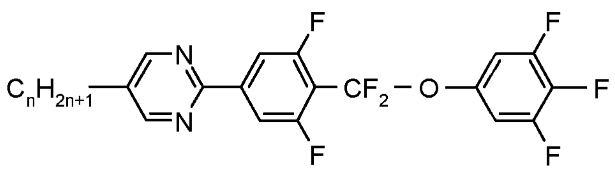

**MUQU-n-F**

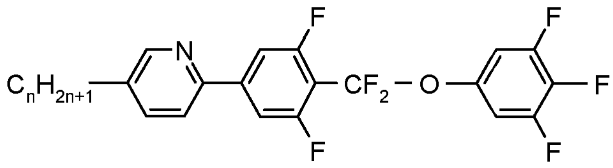

**NUQU-n-F**

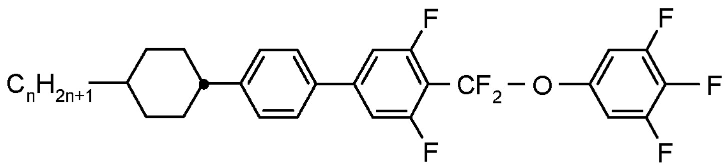

**CPUQU-n-F**

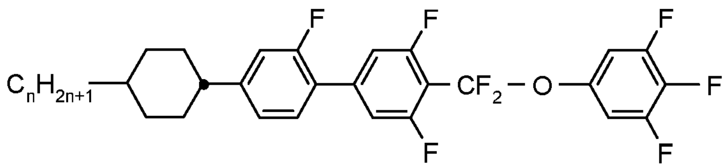

**CGUQU-n-F**

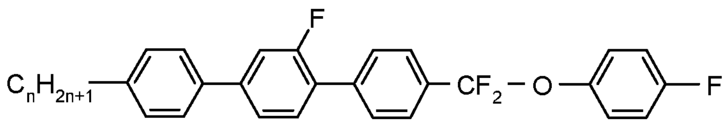

**PGPQP-n-F**

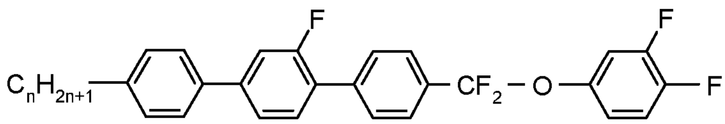

**PGPQG-n-F**

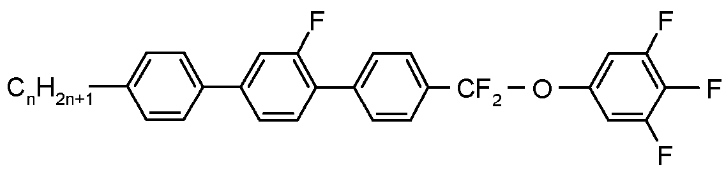

**PGPQU-n-F**

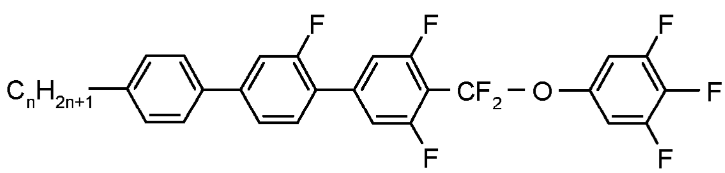

**PGUQU-n-F**

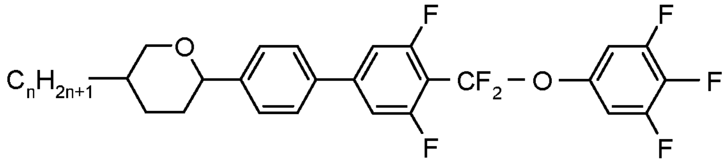

**APUQU-n-F**

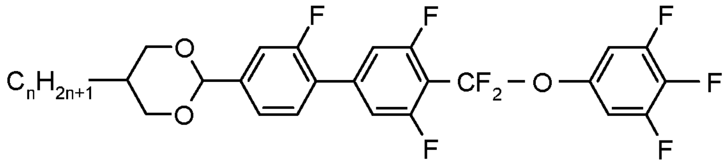

**DGUQU-n-F**

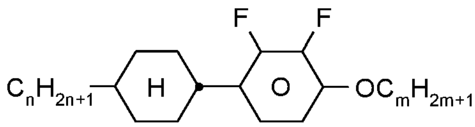

**CY-n-Om**

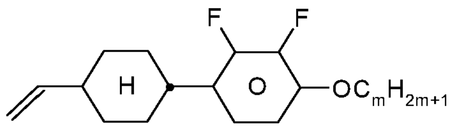

**CY-V-Om**

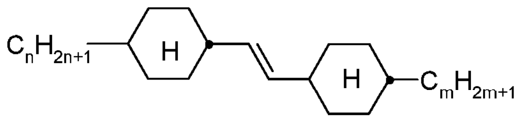

**CVC-n-m**

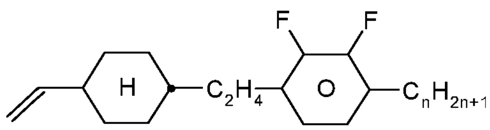

**CEY-V-m**

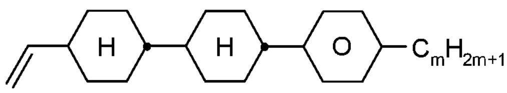

**CCP-V-m**

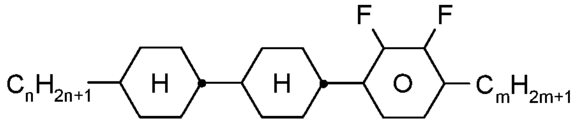

**CCY-n-m**

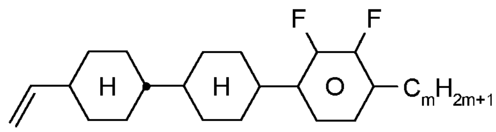

**CCY-V-m**

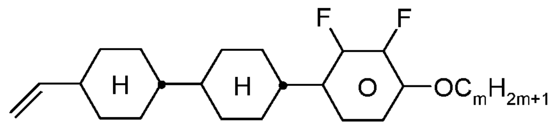

**CCY-V-Om**

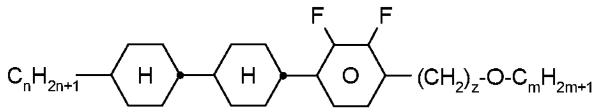

**CCY-n-zOm**

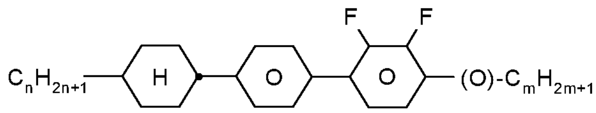

**CPY-n-(O)m**

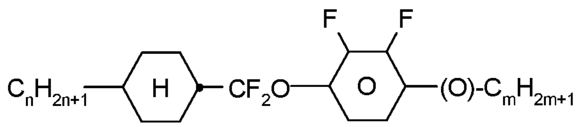

**CQY-n-(O)m**

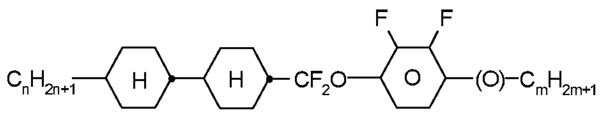

**CCQY-n-(O)m**

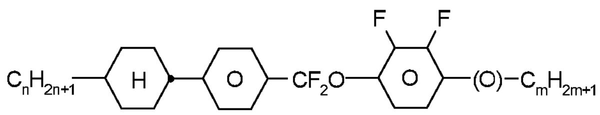

**CPQY-n-(O)m**

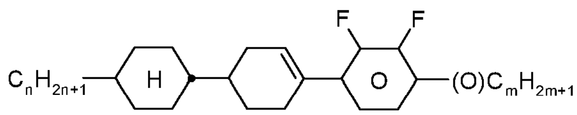

**CLY-n-(O)m**

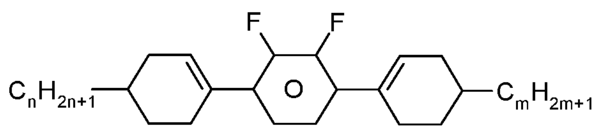

**LYLI-n-m**

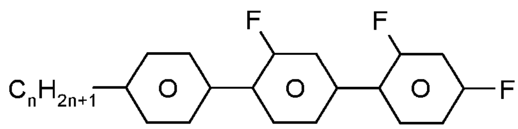

**PGIGI-n-F**

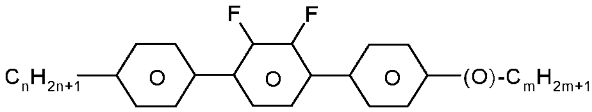

**PYP-n-(O)m**

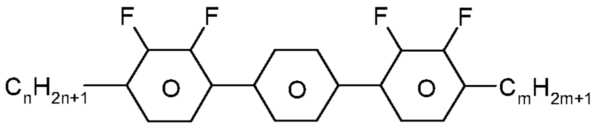

**YPY-n-m**

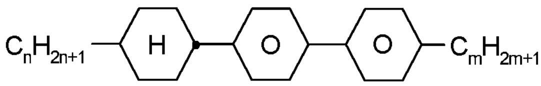

**BCH-nm**

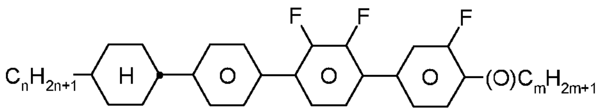

**CPYP-n-(O)m**

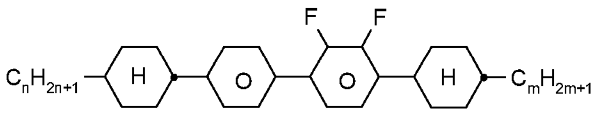

**CPYC-n-m**

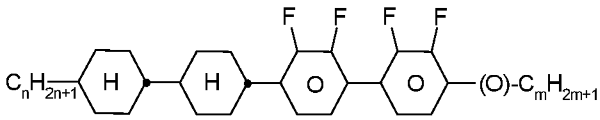

**CCYY-n-m**

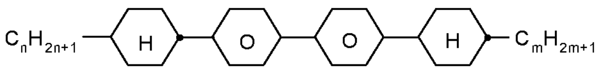

**CBC-nm**

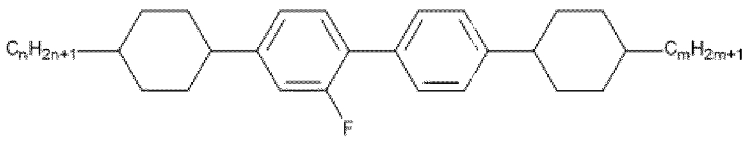

**CBC-nmF**

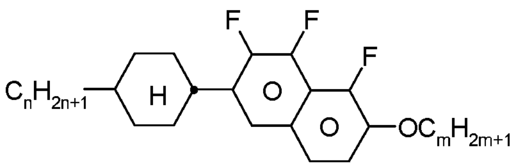

**CNap-n-Om**

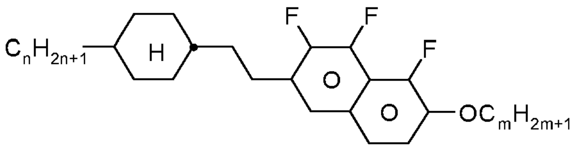

**CENap-n-Om**

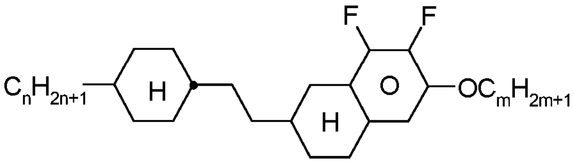

**CETNap-n-Om**

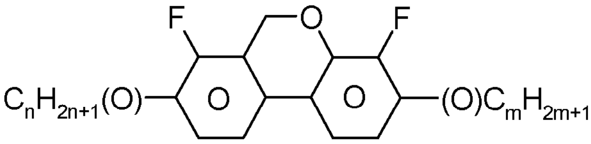

**DFDBC-n(O)-(O)m**

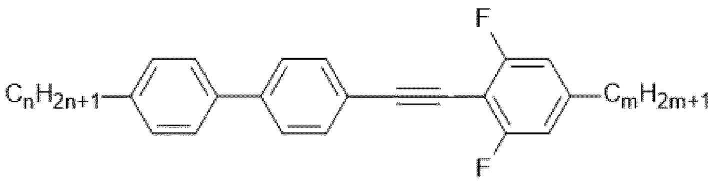

**PPTUI-n-m**

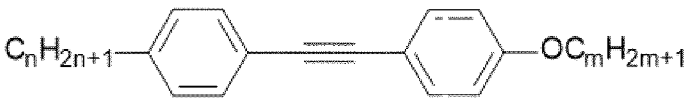

**PTP-nOm**

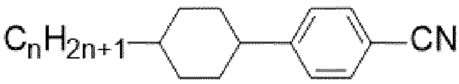

**PCH-n**

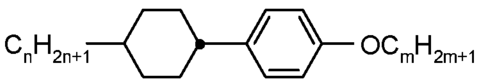

**PCH-nOm**

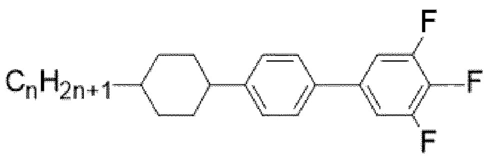

**BCH-nF.F.F**

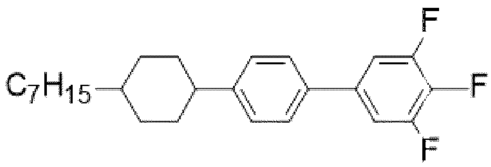

BCH-7F.F.F

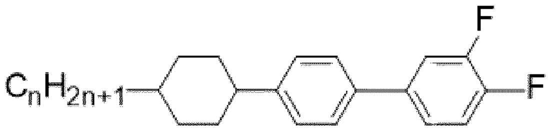

BCH-nF.F

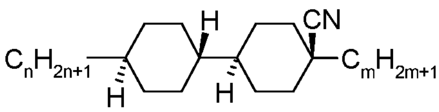

CC(CN)-n-m

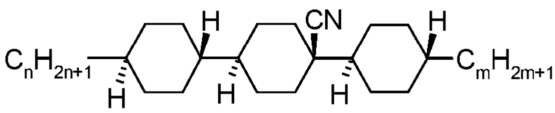

CC(CN)C-n-m

wherein n, m and l preferably, independently of one another, denote 1 to 9, more preferably 1 to 7.

The following table shows illustrative compounds which can be used as stabilizers in the media according to the present invention.

**Table E**

Table E shows possible stabilizers which can be added to the LC media according to the invention, wherein n denotes an integer from 1 to 12, preferably 1, 2, 3, 4, 5, 6, 7 or 8.

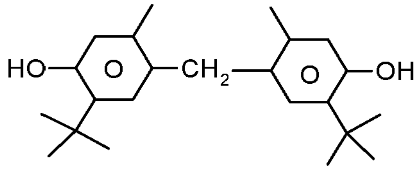

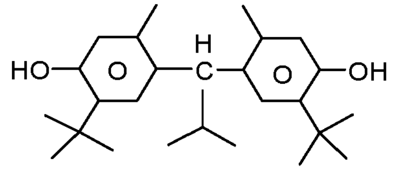

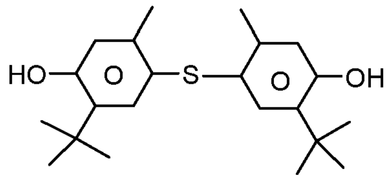

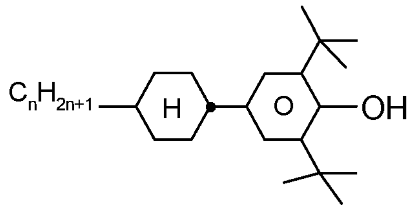

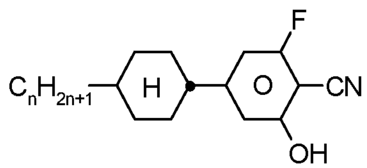

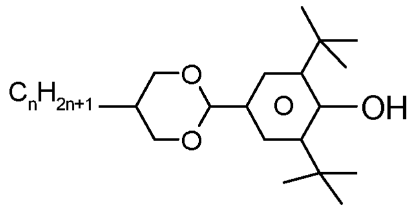

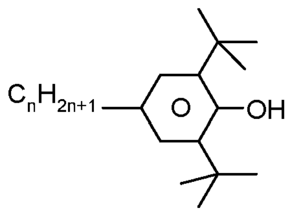

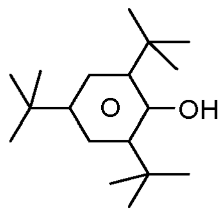

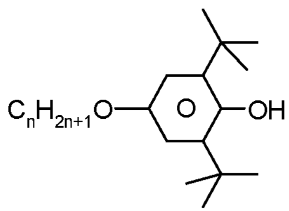

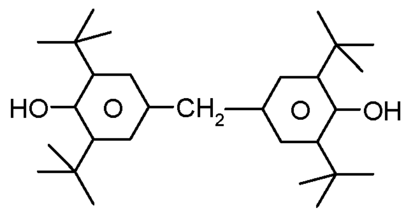

(continued)

Table E shows possible stabilizers which can be added to the LC media according to the invention, wherein n denotes an integer from 1 to 12, preferably 1, 2, 3, 4, 5, 6, 7 or 8.

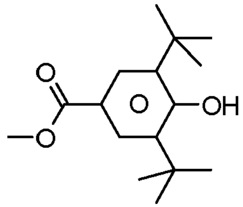

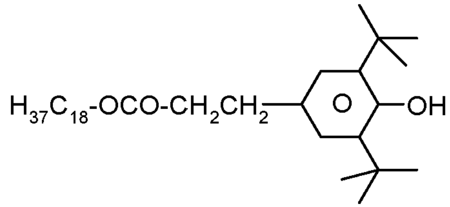

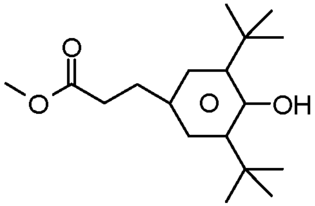

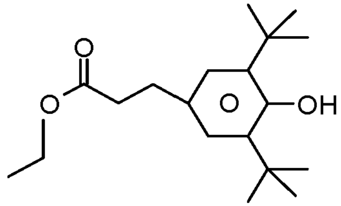

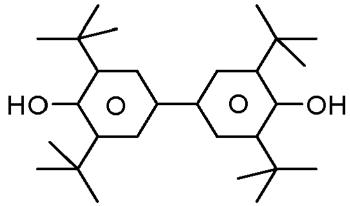

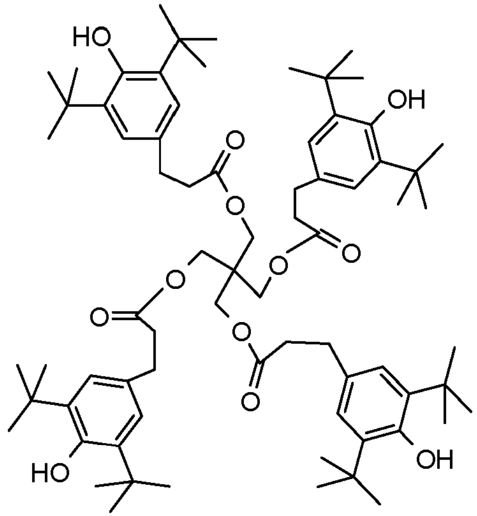

(continued)

Table E shows possible stabilizers which can be added to the LC media according to the invention, wherein n denotes an integer from 1 to 12, preferably 1, 2, 3, 4, 5, 6, 7 or 8.

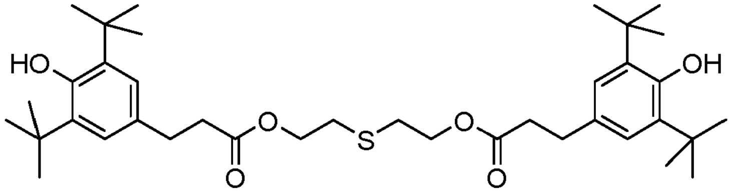

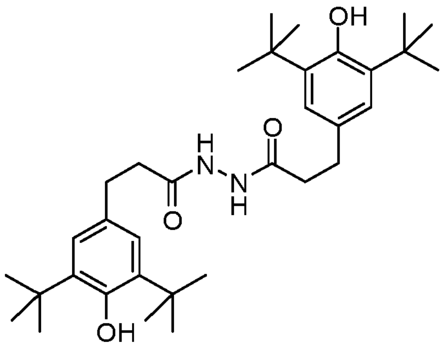

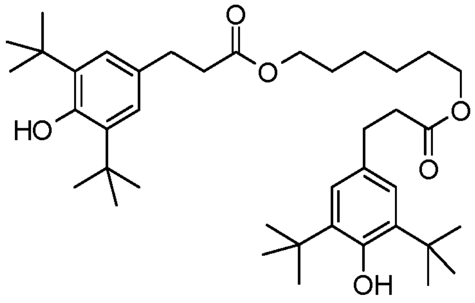

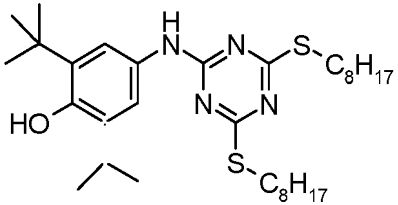

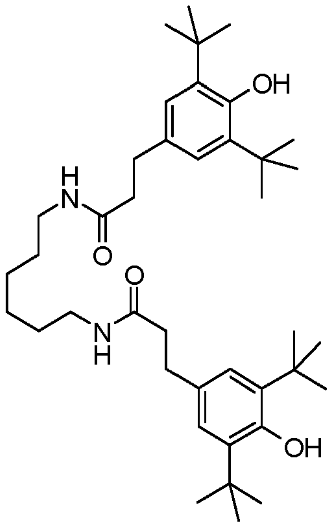

(continued)

Table E shows possible stabilizers which can be added to the LC media according to the invention, wherein n denotes an integer from 1 to 12, preferably 1, 2, 3, 4, 5, 6, 7 or 8.

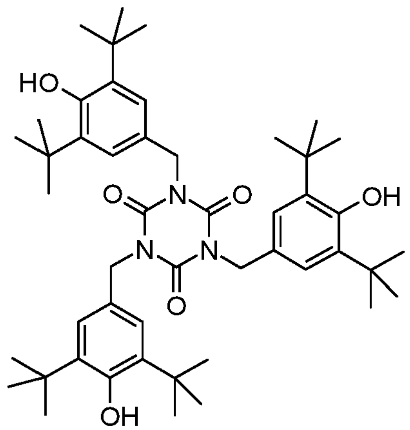

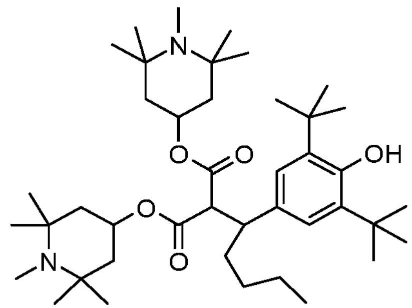

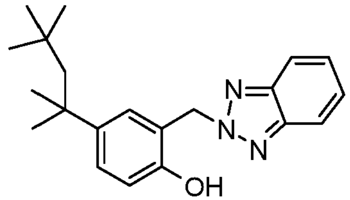

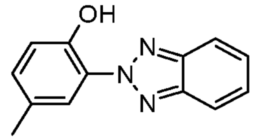

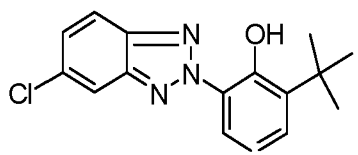

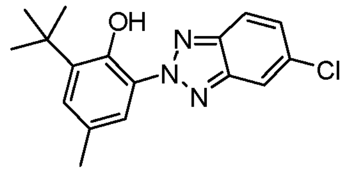

(continued)

Table E shows possible stabilizers which can be added to the LC media according to the invention, wherein n denotes an integer from 1 to 12, preferably 1, 2, 3, 4, 5, 6, 7 or 8.

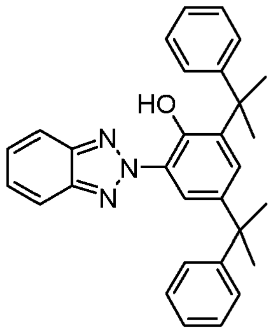

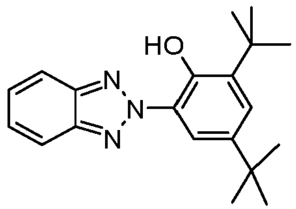

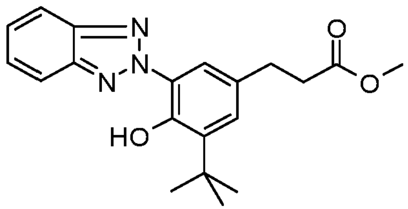

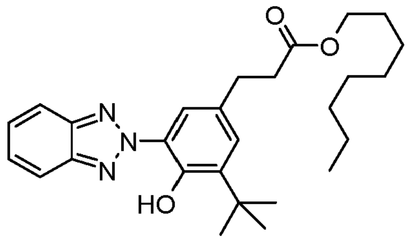

(continued)

Table E shows possible stabilizers which can be added to the LC media according to the invention, wherein n denotes an integer from 1 to 12, preferably 1, 2, 3, 4, 5, 6, 7 or 8.

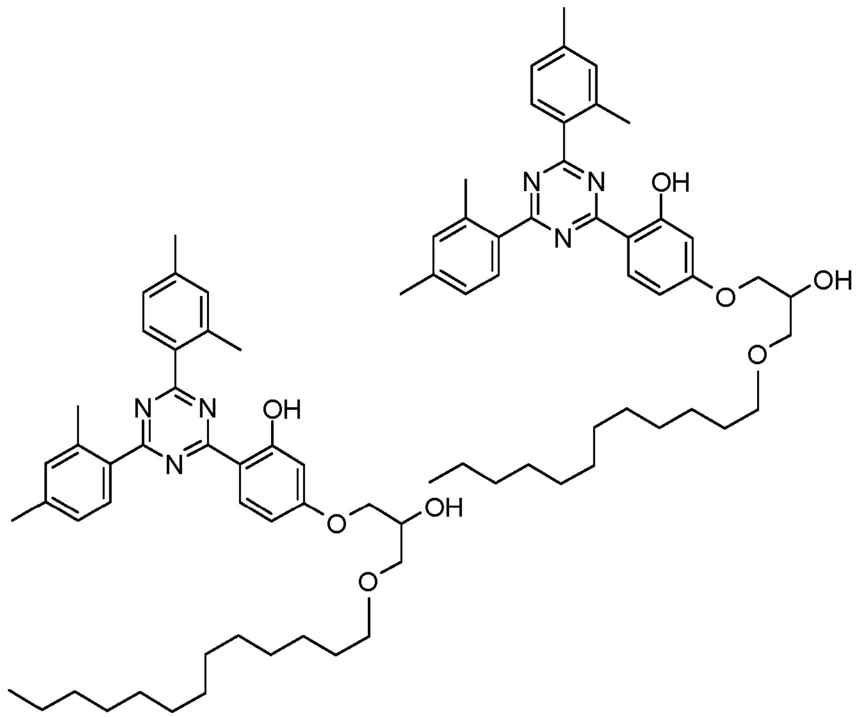

(continued)

Table E shows possible stabilizers which can be added to the LC media according to the invention, wherein n denotes an integer from 1 to 12, preferably 1, 2, 3, 4, 5, 6, 7 or 8.

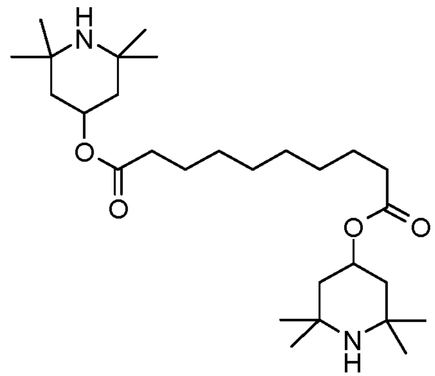

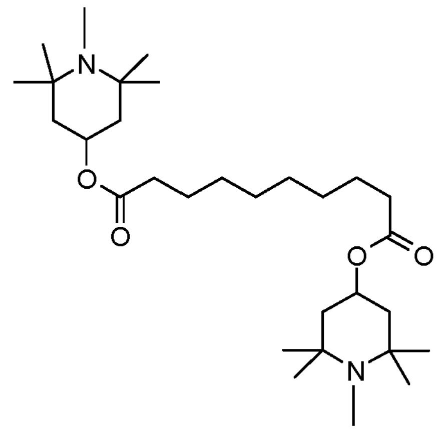

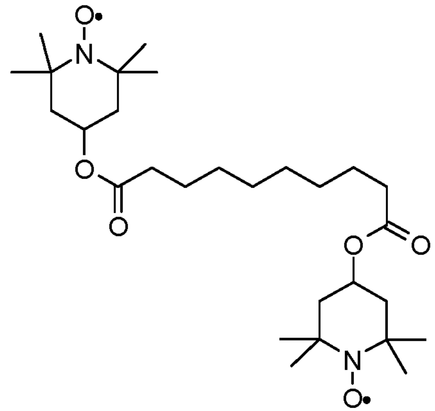

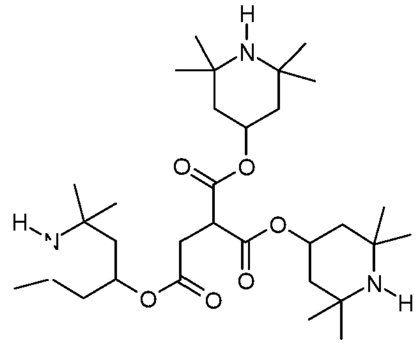

(continued)

Table E shows possible stabilizers which can be added to the LC media according to the invention, wherein n denotes an integer from 1 to 12, preferably 1, 2, 3, 4, 5, 6, 7 or 8.

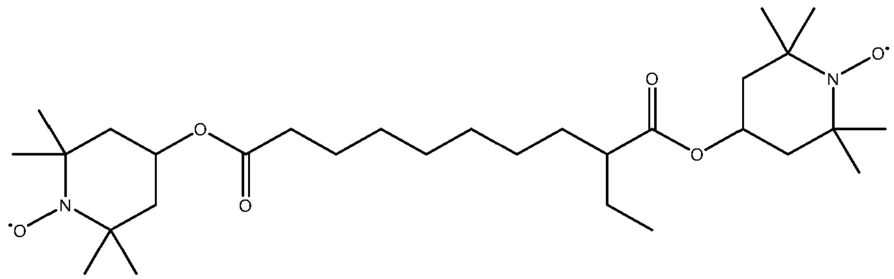

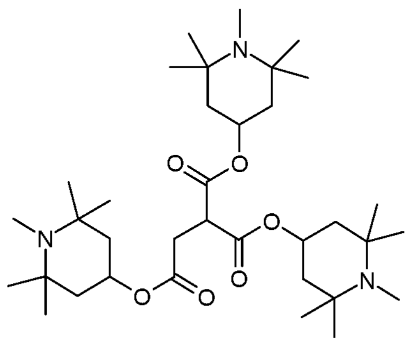

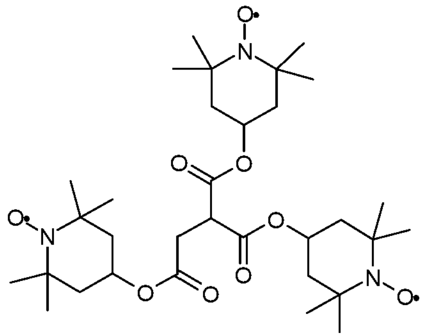

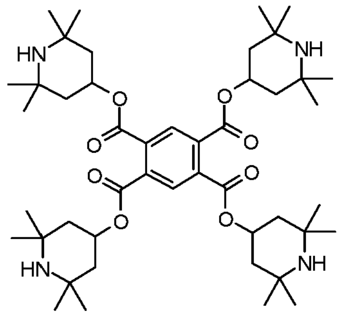

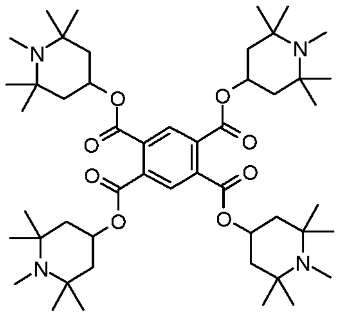

(continued)

Table E shows possible stabilizers which can be added to the LC media according to the invention, wherein n denotes an integer from 1 to 12, preferably 1, 2, 3, 4, 5, 6, 7 or 8.

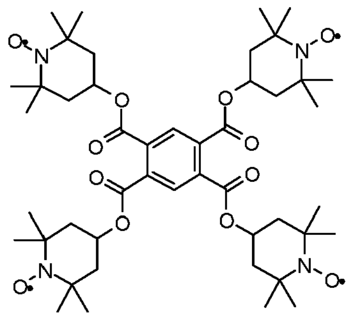

The LC media preferably comprise 0 to 10% by weight, in particular 1 ppm to 5% by weight, particularly preferably 1 ppm to 1% by weight, of stabilizers.

Table F below shows illustrative compounds which can preferably be used as chiral dopants in the mesogenic media according to the present invention.

## Table F

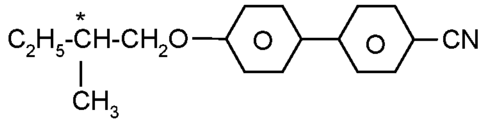

**C 15**

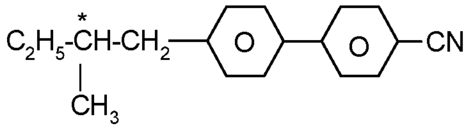

**CB 15**

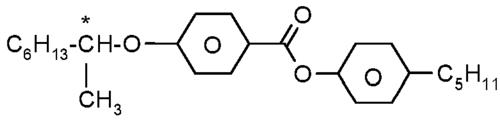

**CM 21**

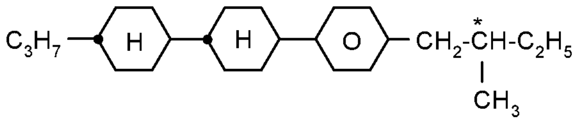

**CM 44**

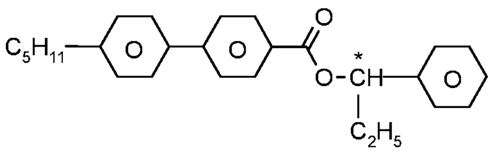

**CM 45**

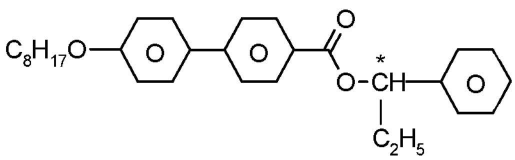

**CM 47**

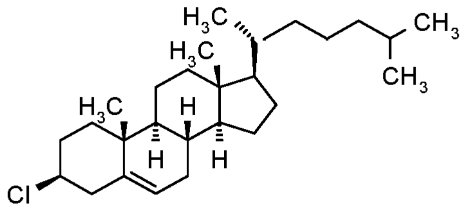

**CC**

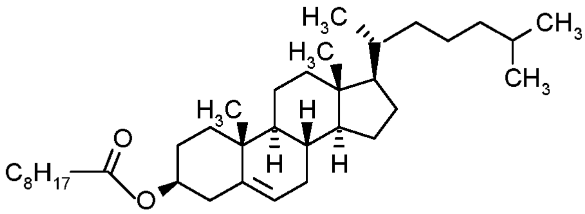

**CN**

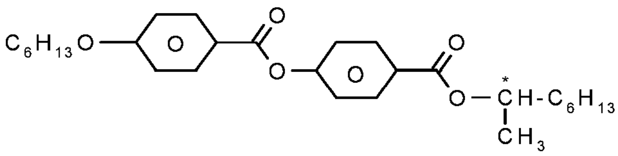

**R/S-811**

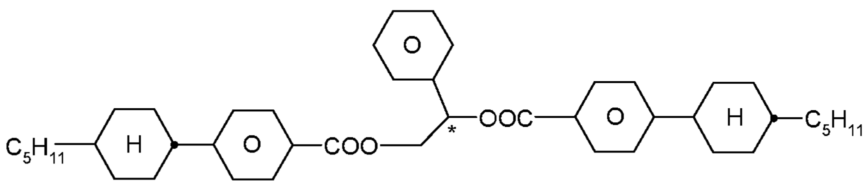

**R/S-1011**

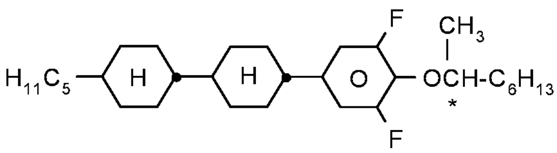

**R/S-2011**

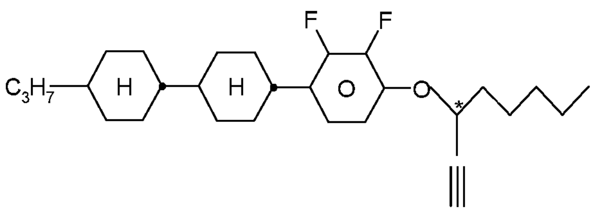

**R/S-3011**

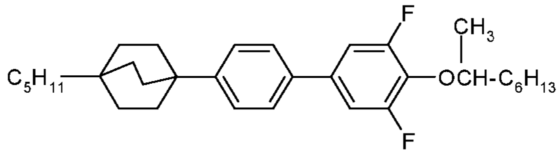

R/S-4011

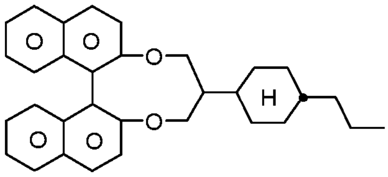

R/S-5011

In a preferred embodiment of the present invention, the mesogenic media comprise one or more compounds selected from the compounds shown in Table F.

The mesogenic media according to the present invention preferably comprise two or more, preferably four or more, compounds selected from the compounds shown in the above Tables D to F.

In an embodiment the LC media according to the present invention preferably comprise three or more, more preferably five or more compounds shown in Table D.

The liquid-crystalline media according to the present invention comprise preferably four or more, more preferably six or more, even more preferably seven or more, and particularly preferably eight or more compounds selected from the group of compounds of Table D, preferably compounds of three or more different formulae selected from the group of formulae of Table D. It is particularly preferred that the medium additionally contains one, two or more compounds selected from the group of formulae of Table E.

The following examples are merely illustrative of the present invention and they should not be considered as limiting the scope of the invention in any way. The examples and modifications or other equivalents thereof will become apparent to those skilled in the art in the light of the present disclosure.

However, the physical properties and compositions shown in the following illustrate which properties can be achieved and in which ranges they can be modified. Especially the combination of the various properties, which can be preferably achieved, is thus well defined.

Examples

In the Examples,

| | |
|---|---|
| $V_o$ | denotes threshold voltage, capacitive [V] at 20°C, |
| $n_e$ | denotes extraordinary refractive index at 20°C and 589 nm, |
| $n_o$ | denotes ordinary refractive index at 20°C and 589 nm, |
| $\Delta n$ | denotes optical anisotropy at 20°C and 589 nm, |
| $\varepsilon_\parallel$ | denotes dielectric permittivity parallel to the director at 20°C and 1 kHz, |
| $\varepsilon_\perp$ | denotes dielectric permittivity perpendicular to the director at 20°C and 1 kHz, |
| $\Delta\varepsilon$ | denotes dielectric anisotropy at 20°C and 1 kHz, |
| cl.p., T(N,I) | denotes clearing point [°C], |
| $\gamma_1$ | denotes rotational viscosity measured at 20°C [mPa·s], determined by the rotation method in a magnetic field, |
| $K_1$ | denotes elastic constant, "splay" deformation at 20°C [pN], |
| $K_2$ | denotes elastic constant, "twist" deformation at 20°C [pN], |
| $K_3$ | denotes elastic constant, "bend" deformation at 20°C [pN]. |

The term "threshold voltage" for the present invention relates to the capacitive threshold ($V_0$), unless explicitly indicated otherwise. In the Examples, as is generally usual, the optical threshold can also be indicated for 10% relative contrast ($V_{10}$).

Liquid crystal mixtures and composite systems are realized with the compositions and properties as given in the

following. Their properties and optical performance are investigated.

Reference Example 1

A liquid-crystal base mixture B-1 is prepared and characterized with respect to its general physical properties, having the composition and properties as indicated in the following table.

| | | | |
|---|---|---|---|
| CPG-3-F | 8.00% | clearing point [°C]: | 114 |
| CPG-5-F | 8.00% | Δn [589 nm, 20°C]: | 0.130 |
| CPU-5-F | 14.00% | $n_e$ [589 nm, 20°C]: | 1.62 |
| CPU-7-F | 11.00% | Δε [1 kHz, 20°C]: | 10.0 |
| CP-5-N | 18.00% | $\varepsilon_\perp$ [1 kHz, 20°C]: | 4.0 |
| CP-7-N | 13.00% | | |
| CCGU-3-F | 7.00% | | |
| CC-3-O3 | 2.00% | | |
| CBC-33F | 4.00% | | |
| CBC-53F | 4.00% | | |
| CBC-55F | 3.00% | | |
| CCZPC-3-3 | 3.00% | | |
| CCZPC-3-4 | 3.00% | | |
| CCZPC-3-5 | 2.00% | | |
| | Σ 100.00% | | |

Reference Example 2

A liquid-crystal base mixture B-2 is prepared and characterized with respect to its general physical properties, having the composition and properties as indicated in the following table.

| | | | |
|---|---|---|---|
| CC(CN)-4-7 | 14.00% | clearing point [°C]: | 114.6 |
| CC(CN)-5-5 | 14.00% | Δn [589 nm, 20°C]: | 0.045 |
| CC(CN)-3-3 | 6.00% | $n_e$ [589 nm, 20°C]: | 1.52 |
| CCZC-3-3 | 3.00% | Δε [1 kHz, 20°C]: | -5.2 |
| CCZC-3-5 | 3.00% | $\varepsilon_\perp$ [1 kHz, 20°C]: | 8.5 |
| CCZC-4-3 | 3.00% | | |
| CCZC-4-5 | 3.00% | | |
| CC-3-O1 | 11.00% | | |
| CC-5-O1 | 4.00% | | |
| CC-5-O2 | 4.00% | | |
| CC(CN)C-3-5 | 10.00% | | |
| CC(CN)C-5-5 | 12.00% | | |
| CC(CN)C-5-3 | 10.00% | | |
| CCZPC-3-3 | 3.00% | | |
| | Σ 100.00% | | |

A host mixture H-2 is prepared by mixing 99.97% of mixture B-2 with 0.03% of the compound of formula

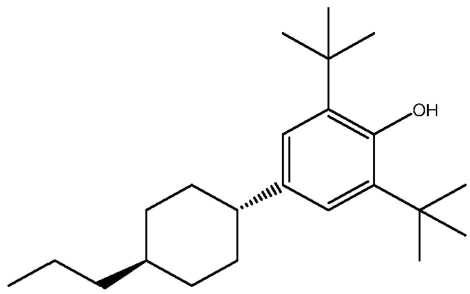

,

which in the following will be referred to as ST-1.

Comparative Example 1

A mixture M-1 is prepared by mixing 95.935% of mixture B-1 as described in Reference Example 1 with 0.050% of the compound ST-1 as shown in Reference Example 2 above, 0.070% of chiral dopant S-811 available from Merck KGaA, Darmstadt, Germany and shown in Table F above, 0.408% of compound of formula DD-1

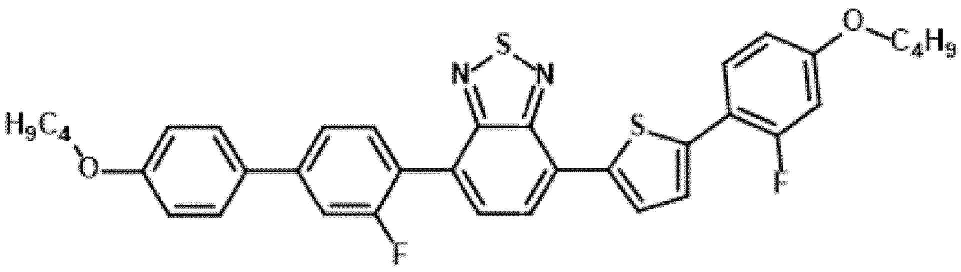

DD-1,

0.837% of compound of formula DD-2

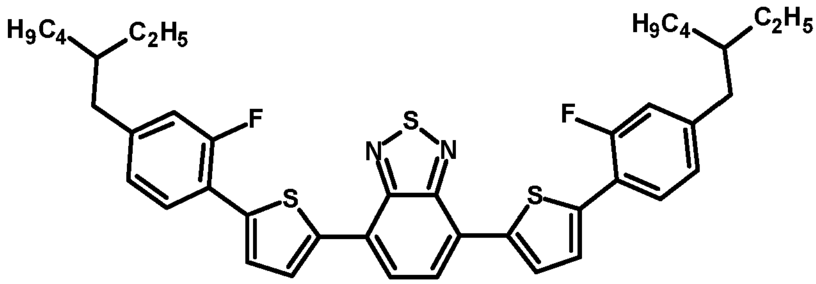

DD-2,

0.707% of compound of formula DD-3

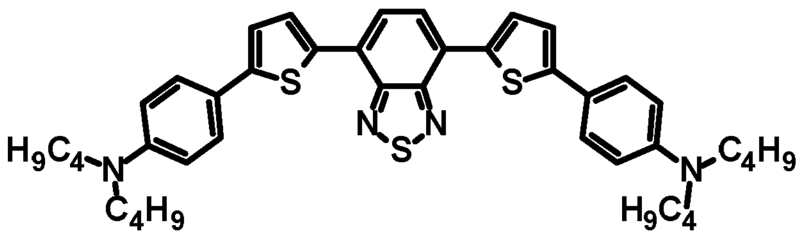

DD-3,

0.589% of compound of formula DD-4

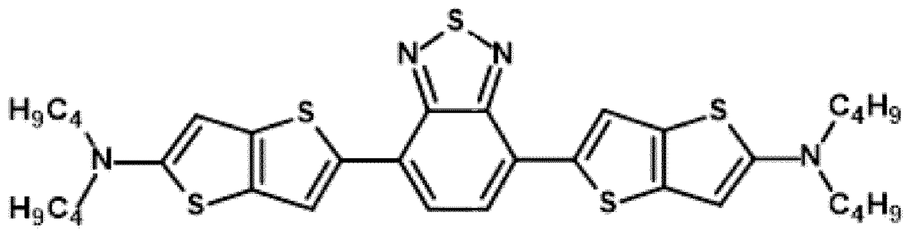

DD-4,

and 1.404% of compound of formula DD-5

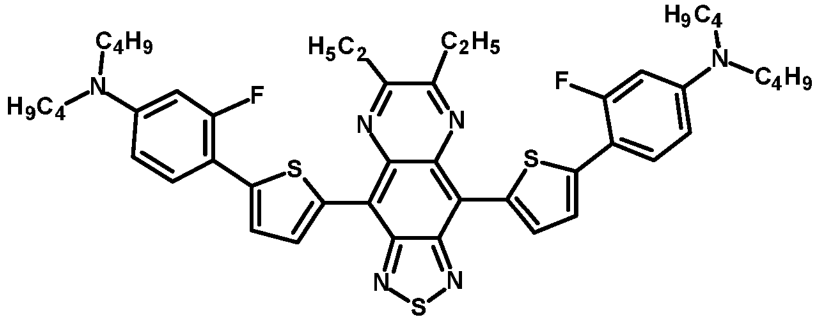

DD-5.

The mixture M-1 is filled into two TN cells each having two glass substrates (alkali-free glass, 0.7 mm thickness) with ITO electrodes (sheet resistance 100 ohms per square) as well as polyimide alignment layers (AL-1054 from Japan Synthetic Rubber, planar, TN, 90° twisting), wherein the cell gap is 7.8 $\mu$m, and the filling ports are sealed. Electrical wiring is applied to the cell by soldering.

Both TN cells have anticlockwise twisting.

The two dye-doped TN cells are arranged in series into a double cell using optically clear adhesive.

The obtained double cell having two switchable layers exhibits a dark state with 6.5% transmission and a bright state with 45.5% transmission.

Example 1

A mixture M-2 is prepared according to mixture M-1 as described in Comparative Example 1, wherein instead of S-811 0.070% of chiral dopant R-811 available from Merck KGaA, Darmstadt, Germany and shown in Table F above is used.

The mixture M-1 described in Comparative Example 1 is filled into TN cell 1 in accordance with Comparative Example 1.

TN cell 1 has anticlockwise twisting.

The mixture M-2 is filled into TN cell 2 having two alkali-freeglass substrates (0.7 mm thickness) with ITO electrodes (sheet resistance 100 ohms per square) as well as polyimide alignment layers (AL-1054 from Japan Synthetic Rubber, planar, clockwise TN), wherein the cell gap is 7.8 $\mu$m.

TN cell 2 has clockwise twisting.

The two dye-doped TN cells 1 and 2 are arranged in series into a double cell using optically clear adhesive.

The obtained double cell having two switchable layers exhibits a dark state with 5.4% transmission and a bright state with 45.5% transmission.

Compared to the double cell in Comparative Example 1, which apart from the twisting direction of the second switchable layer is the same, the double cell having two optical cells with opposite twisting directions exhibits an improved dark state.

The double cell also exhibits an excellent behaviour with respect to contrast and chromaticity coordinate for a wide range of viewing angles.

Comparative Example 2

A mixture M-3 is prepared by mixing 96.005% of mixture B-1 as described in Reference Example 1 with 0.050% of the compound ST-1 as shown in Reference Example 2 above, 0.537% of chiral dopant S-811, 0.408% of compound of formula DD-1 as shown in Comparative Example 1, 0.837% of compound of formula DD-2 as shown in Comparative Example 1, 0.707% of compound of formula DD-3 as shown in Comparative Example 1, 0.589% of compound of formula

DD-4 as shown in Comparative Example 1 and 1.404% of compound of formula DD-5 as shown in Comparative Example 1.

The mixture M-3 is filled into two STN cells (180° twisting) each having two glass substrates with ITO electrodes as well as polyimide alignment layers, wherein the cell gap is 7.7 μm.

Both STN cells have anticlockwise twisting.

The two dye-doped STN cells are arranged in series into a double cell using optically clear adhesive.

The obtained double cell having two switchable layers exhibits a dark state with 8.3% transmission and a bright state with 47.1% transmission.

Example 2

A mixture M-4 is prepared according to mixture M-3 as described in Comparative Example 2, wherein instead of S-811 0.537% of chiral dopant R-811 is used.

The mixture M-3 described in Comparative Example 2 is filled into STN cell 1 (180° twisting, cell gap 7.7 μm).

STN cell 1 has anticlockwise twisting.

The mixture M-4 is filled into STN cell 2 (180° twisting, cell gap 7.7 μm).

STN cell 2 has clockwise twisting.

The two dye-doped STN cells 1 and 2 are arranged in series into a double cell using optically clear adhesive.

The obtained double cell having two switchable layers exhibits a dark state with 5.4% transmission and a bright state with 47.1% transmission.

Compared to the double cell in Comparative Example 2, which apart from the twisting direction of the second switchable layer is the same, the double cell having two optical cells with opposite twisting directions exhibits an improved dark state.

The double cell also exhibits an excellent behaviour with respect to contrast and chromaticity coordinate for a wide range of viewing angles.

Example 3

A mixture M-5 is prepared by mixing 90.128% of mixture H-2 as described in Reference Example 2 with 1.160% of the compound of formula DD-1, 1.919% of the compound of formula DD-2, 1.800% of the compound of formula DD-3, 0.853% of the compound of formula DD-4, 0.730% of the compound of formula DD-5, 1.300% of compound of formula DD-6

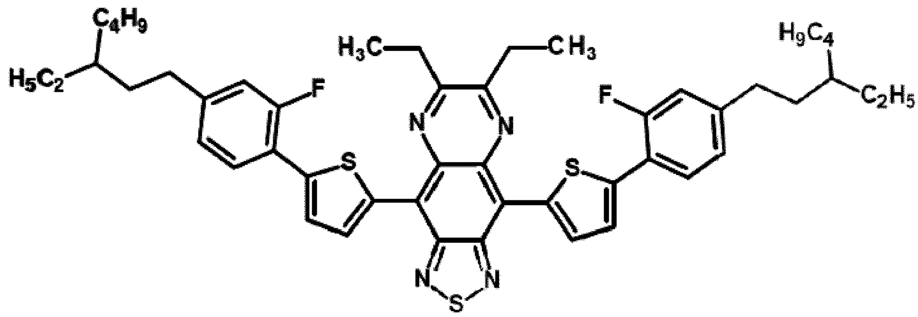

DD-6

and 2.110% of compound of formula DD-7

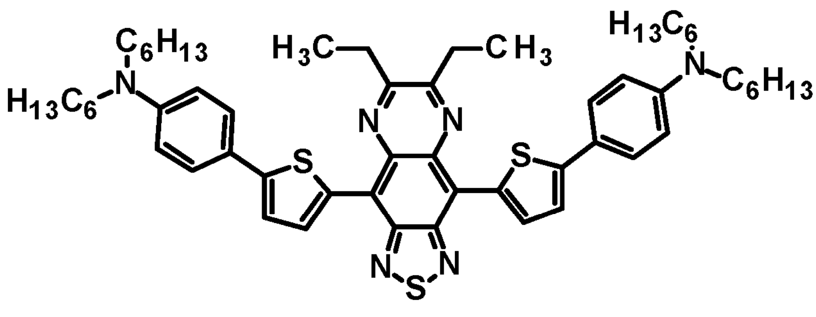

DD-7.

A mixture M-5-1 is prepared by mixing 99.236% of mixture M-5 with 0.764% of the chiral dopant S-811.

A mixture M-5-2 is prepared by mixing 99.236% of mixture M-5 with 0.764% of the chiral dopant R-811.

The mixture M-5-1 is filled into the first switchable layer and the mixture M-5-2 is filled into the second switchable layer of a VA-STN double cell. The double cell exhibits an excellent dark state, a favourable transmission range and an excellent viewing angle performance.

Example 4

A mixture M-6-1 is prepared by mixing 98.877% of mixture B-1 as described in Reference Example 1 with 0.470% of chiral dopant R-5011 available from Merck KGaA, Darmstadt, Germany and shown in Table F above, 0.129% of compound of formula DD-8

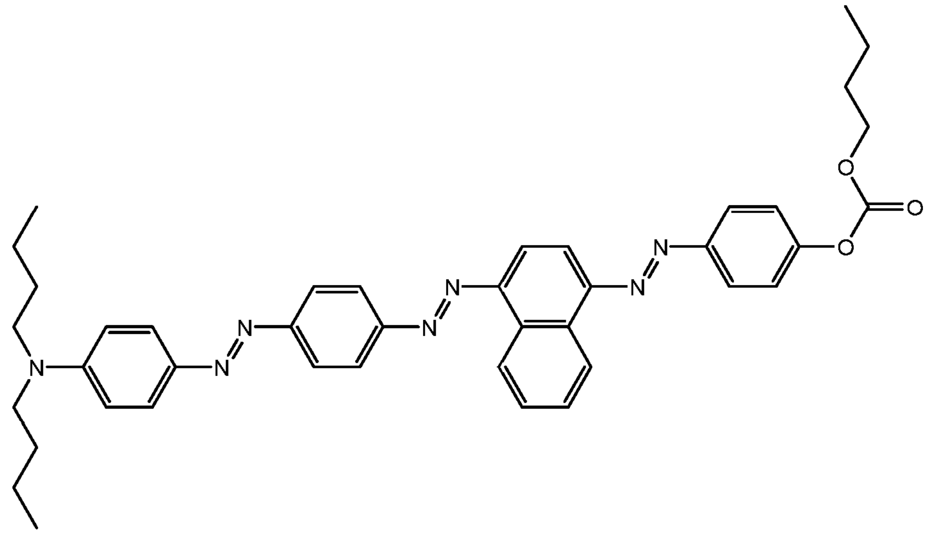

DD-8,

0.244% of compound of formula DD-9

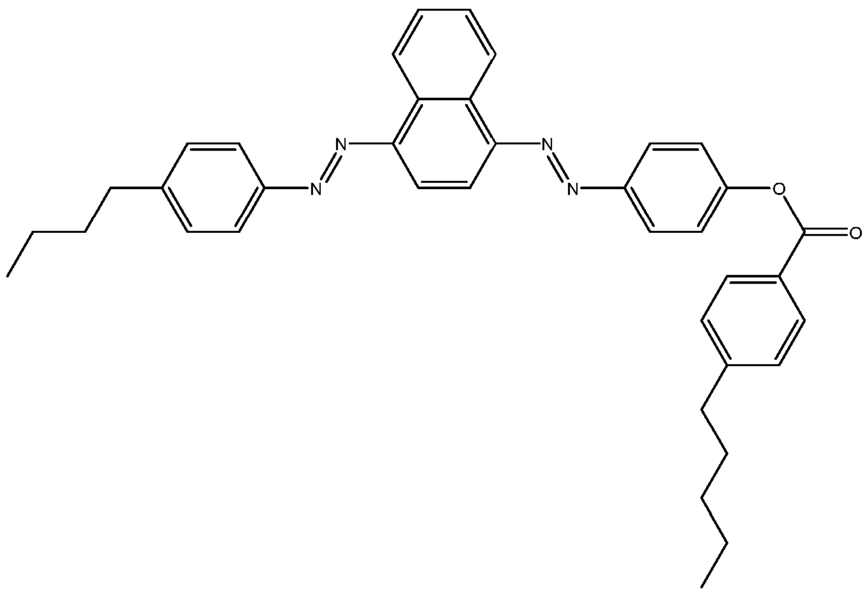

DD-9

and 0.280% of compound of formula DD-10

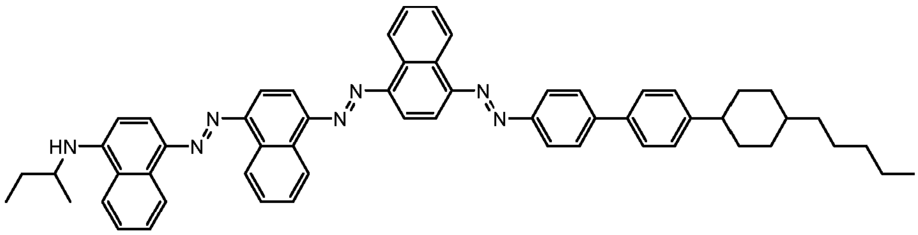

DD-10.

A mixture M-6-2 is prepared according to mixture M-6-1, wherein instead of R-5011 the chiral dopant S-5011 available from Merck KGaA, Darmstadt, Germany and shown in Table F above is used.

The set of mixtures M-6-1 and M-6-2 is used in a window element comprising a layer arrangement comprising two optical cells, wherein M-6-1 is used in the switchable layer of the first cell and M-6-2 is used in the switchable layer of the second cell.

## Claims

1. A window element, which comprises a multilayer arrangement for regulating the passage of light and which is operable in and electrically switchable between a bright state and a dark state, wherein the multilayer arrangement comprises a first switchable layer and a second switchable layer each containing a liquid-crystalline medium comprising one or more dichroic dyes and optionally one or more chiral compounds, wherein in one of the states the first switchable layer and the second switchable layer have a twisted nematic or supertwisted nematic configuration and **characterised in that** the twisting direction of one of the first and second switchable layers is clockwise and the twisting direction of the other switchable layer is anticlockwise.

2. The window element according to claim 1, wherein the liquid-crystalline medium contained in the first switchable layer and the liquid-crystalline medium contained in the second switchable layer each comprises a chiral dopant, preferably in a concentration of 0.01% by weight to 5% by weight,
wherein preferably the respective chiral dopants are stereoisomers of each other, in particular enantiomers.

3. The window element according to claim 1 or 2, wherein for each of the first and second switchable layers the following relationship applies

$$d * \Delta n < 3.0\ \mu m$$

in which d is the respective thickness of each of the switchable layers and $\Delta n$ is the optical anisotropy of the liquid-crystalline medium respectively contained in each of the switchable layers,
wherein preferably $d * \Delta n < 2.0\ \mu m$, and more preferably $d * \Delta n < 1.5\ \mu m$.

4. The window element according to one or more of claims 1 to 3, wherein the magnitude of the pitch of the first switchable layer differs from the magnitude of the pitch of the second switchable layer by 25% or less, preferably by 10% or less, and wherein most preferably the magnitude of the pitch of the first switchable layer is the same as the magnitude of the pitch of the second switchable layer.

5. The window element according to one or more of claims 1 to 4, wherein the multilayer arrangement comprises in this order

- a first transparent substrate,
- a first electrode layer,
- a first alignment layer,
- the first switchable layer,
- a second alignment layer,
- a second electrode layer,
- a second transparent substrate,
- optionally a bonding, adhesion or lamination layer,
- a third transparent substrate,
- a third electrode layer,

- a third alignment layer,
- the second switchable layer,
- a fourth alignment layer,
- a fourth electrode layer, and
- a fourth transparent substrate.

**6.** The window element according to one or more of claims 1 to 4, wherein the multilayer arrangement comprises in this order

- a first transparent substrate,
- a first electrode layer,
- a first alignment layer,
- the first switchable layer,
- a second alignment layer,
- a second electrode layer,
- a second transparent substrate,
- a third electrode layer,
- a third alignment layer,
- the second switchable layer,
- a fourth alignment layer,
- a fourth electrode layer, and
- a third transparent substrate,

wherein the second alignment layer and the second electrode layer are disposed on a first surface of the second transparent substrate and wherein the third electrode layer and the third alignment layer are disposed on a second surface of the second transparent substrate.

**7.** The window element according to claim 5 or 6, wherein the first, second, third and fourth alignment layers comprise polyimide, preferably are made of rubbed polyimide, and wherein more preferably the rubbing directions of the second alignment layer and the third alignment layer are orthogonal to each other.

**8.** The window element according to one of claims 1 to 7, wherein the liquid-crystalline medium contained in the first switchable layer and the liquid-crystalline medium contained in the second switchable layer each has a clearing point of at least 80°C.

**9.** The window element according to one of claims 1 to 8, wherein the absolute value of the dielectric anisotropy of the liquid-crystalline medium contained in the first switchable layer and the liquid-crystalline medium contained in the second switchable layer each is 2.5 or more.

**10.** The window element according to one of claims 1 to 9, wherein the liquid-crystalline medium contained in the first switchable layer and the liquid-crystalline medium contained in the second switchable layer each contains, based on the overall contents of the medium, at least 15% by weight of one or more mesogenic compounds of formula I

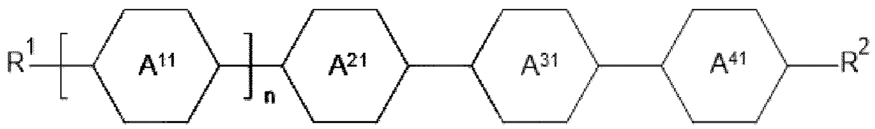
I

wherein

$R^1$ and $R^2$ denote, independently of one another, a group selected from F. Cl, $CF_3$, $OCF_3$, and straight-chain or branched alkyl or alkoxy having 1 to 15 carbon atoms or straight-chain or branched alkenyl having 2 to 15 carbon atoms which is unsubstituted, monosubstituted by CN or $CF_3$ or mono- or polysubstituted by halogen and wherein one or more $CH_2$ groups mav be. in each case indecendently of one another. replaced bv -O-, -S-, -CO-, -COO-, -OCO-, -OCOO-, -C≡C-,

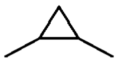, 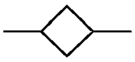, 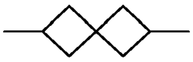, 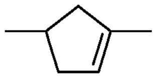 or 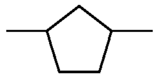

in such a manner that oxygen atoms are not linked directly to one another,
$A^{11}$ denotes

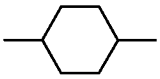, 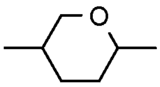, 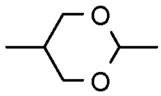,

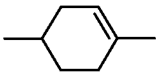, 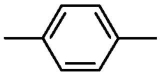, 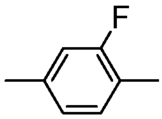,

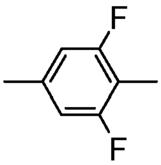, 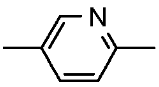 or 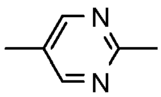,

n denotes 0 or 1, and
$A^{21}$, $A^{31}$ and $A^{41}$ denote, independently of one another,

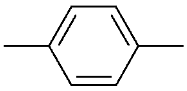, 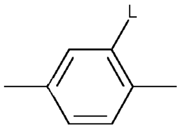, 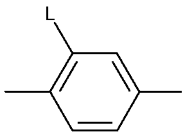,

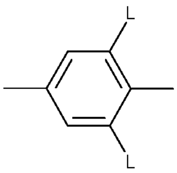, 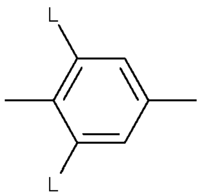, 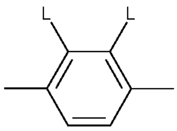,

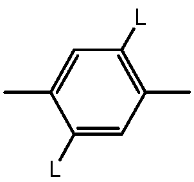, 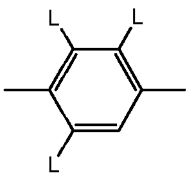 or 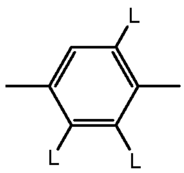

wherein L is on each occurrence, identically or differently, halogen selected from F, Cl and Br, or methyl.

**11.** The window element according to one of claims 1 to 10, wherein the liquid-crystalline medium contained in the first switchable layer and the liquid-crystalline medium contained in the second switchable layer each further comprises one or more mesogenic compounds selected from the group of compounds of formulae II and III

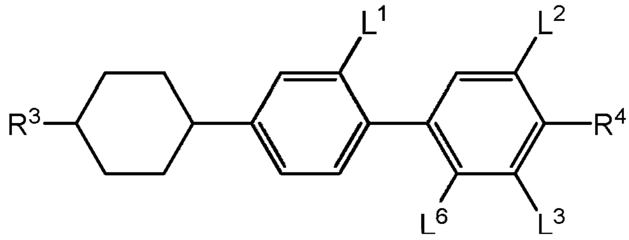

II

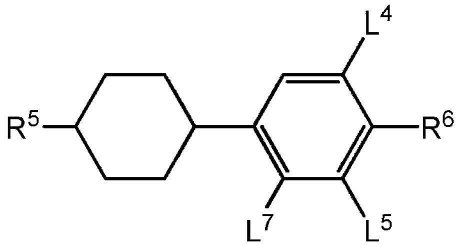

III

wherein

$R^3$, $R^4$, $R^5$ and $R^6$ denote, independently of one another, a group selected from F, $CF_3$, $OCF_3$, CN, and straight-chain or branched alkyl or alkoxy having 1 to 15 carbon atoms or straight-chain or branched alkenyl having 2 to 15 carbon atoms which is unsubstituted, monosubstituted by CN or $CF_3$ or mono- or polysubstituted by halogen and wherein one or more $CH_2$ groups may be, in each case independently of one another, replaced by -O-, -S-, -CO-, -COO-, -OCO-, -OCOO-, -C≡C-,

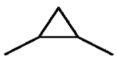, 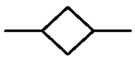, 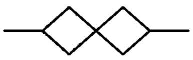, 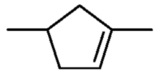 or 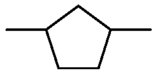

in such a manner that oxygen atoms are not linked directly to one another,
$L^1$, $L^2$, $L^3$, $L^4$ and $L^5$ denote, independently of one another, H or F, and
$L^6$ and $L^7$ denote, independently of one another, H or methyl.

**12.** The window element according to one of claims 1 to 11, wherein the thickness of the first switchable layer and the second switchable layer each is 20 μm or below, preferably 15 μm or below and in particular 10 μm or below.

**13.** The window element according to one of claims 1 to 12, wherein the one or more dichroic dyes are selected from azo dyes, anthraquinones, methine compounds, azomethine compounds, merocyanine compounds, naphthoquinones, tetrazines, pyrromethene dyes, malononitrile dyes, rylenes, in particular perylenes and terylenes, thiadiazole dyes, thienothiadiazole dyes, benzothiadiazoles, thiadiazoloquinoxalines, pyrromethenes and diketopyrrolopyrroles, preferably from azo dyes, anthraquinones, benzothiadiazoles, diketopyrrolopyrroles, rylenes and thiadiazoloquinoxalines, and more preferably from azo dyes, benzothiadiazoles and thiadiazoloquinoxalines.

**14.** The window element according to one of claims 1 to 13, wherein the window element does not include a polariser.

**15.** The window element according to one of claims 1 to 14, wherein the window element in the dark state has a degree of visible light transmission, determined in accordance with DIN EN410, of less than 10 %, preferably less than 5 %, and more preferably less than 3 %.

**16.** Use of the window element according to one of claims 1 to 15 in a window of a building or a vehicle.

## Patentansprüche

**1.** Fensterelement, das eine Mehrschichtanordnung zur Regulierung des Lichtdurchtritts umfasst und das in einem hellen Zustand und einem dunklen Zustand betreibbar und zwischen diesen elektrisch schaltbar ist, wobei die

Mehrschichtanordnung eine erste schaltbare Schicht und eine zweite schaltbare Schicht umfasst, die jeweils ein flüssigkristallines Medium enthalten, das einen oder mehrere dichroitische Farbstoffe und gegebenenfalls eine oder mehrere chirale Verbindungen enthält, wobei die erste schaltbare Schicht und die zweite schaltbare Schicht in einem der Zustände eine Twisted-Nematic- oder Supertwisted-Nematic-Konfiguration aufweisen und **dadurch gekennzeichnet, dass** die Verdrillungsrichtung von einer der ersten und zweiten schaltbaren Schichten im Uhrzeigersinn verläuft und die Verdrillungsrichtung der anderen schaltbaren Schicht gegen den Uhrzeigersinn verläuft.

**2.** Fensterelement nach Anspruch 1, wobei das in der ersten schaltbaren Schicht enthaltene flüssigkristalline Medium und das in der zweiten schaltbaren Schicht enthaltene flüssigkristalline Medium jeweils einen chiralen Dotanden enthalten, vorzugsweise in einer Konzentration von 0,01 Gew.-% bis 5 Gew.-%,
wobei die jeweiligen chiralen Dotanden vorzugsweise Stereoisomere voneinander, insbesondere Enantiomere sind.

**3.** Fensterelement nach Anspruch 1 oder 2, wobei für die ersten und zweiten schaltbaren Schichten jeweils die folgende Beziehung gilt

$$d * \Delta n < 3{,}0\ \mu m$$

worin d die jeweilige Dicke jeder der schaltbaren Schichten ist und $\Delta n$ die optische Anisotropie des flüssigkristallinen Mediums ist, das jeweils in jeder der schaltbaren Schichten enthalten ist,
wobei vorzugsweise $d * \Delta n < 2{,}0\ \mu m$ und stärker bevorzugt $d * \Delta n < 1{,}5\ \mu m$.

**4.** Fensterelement nach einem oder mehreren der Ansprüche 1 bis 3, wobei sich die Größe der Ganghöhe der ersten schaltbaren Schicht von der Größe der Ganghöhe der zweiten schaltbaren Schicht um 25 % oder weniger, vorzugsweise um 10 % oder weniger unterscheidet und wobei am stärksten bevorzugt die Größe der Ganghöhe der ersten schaltbaren Schicht die gleiche ist wie die Größe der Ganghöhe der zweiten schaltbaren Schicht.

**5.** Fensterelement nach einem oder mehreren der Ansprüche 1 bis 4, wobei die Mehrschichtanordnung in dieser Reihenfolge umfasst:

- ein erstes transparentes Substrat,
- eine erste Elektrodenschicht,
- eine erste Orientierungsschicht,
- die erste schaltbare Schicht,
- eine zweite Orientierungsschicht,
- eine zweite Elektrodenschicht,
- ein zweites transparentes Substrat,
- gegebenenfalls eine Klebe-, Haft- oder Laminierungsschicht,
- ein drittes transparentes Substrat,
- eine dritte Elektrodenschicht,
- eine dritte Orientierungsschicht,
- die zweite schaltbare Schicht,
- eine vierte Orientierungsschicht,
- eine vierte Elektrodenschicht, und
- ein viertes transparentes Substrat.

**6.** Fensterelement nach einem oder mehreren der Ansprüche 1 bis 4, wobei die Mehrschichtanordnung in dieser Reihenfolge umfasst:

- ein erstes transparentes Substrat,
- eine erste Elektrodenschicht,
- eine erste Orientierungsschicht,
- die erste schaltbare Schicht,
- eine zweite Orientierungsschicht,
- eine zweite Elektrodenschicht,
- ein zweites transparentes Substrat,
- eine dritte Elektrodenschicht,
- eine dritte Orientierungsschicht,

- die zweite schaltbare Schicht,
- eine vierte Orientierungsschicht,
- eine vierte Elektrodenschicht, und
- ein drittes transparentes Substrat,

wobei die zweite Orientierungsschicht und die zweite Elektrodenschicht auf einer ersten Oberfläche des zweiten transparenten Substrats angeordnet sind und wobei die dritte Elektrodenschicht und die dritte Orientierungsschicht auf einer zweiten Oberfläche des zweiten transparenten Substrats angeordnet sind.

**7.** Fensterelement nach Anspruch 5 oder 6, wobei die ersten, zweiten, dritten und vierten Orientierungsschichten Polyimid enthalten, vorzugsweise aus geriebenem Polyimid bestehen, und wobei stärker bevorzugt die Reibrichtungen der zweiten Orientierungsschicht und der dritten Orientierungsschicht orthogonal zueinander sind.

**8.** Fensterelement nach einem der Ansprüche 1 bis 7, wobei das in der ersten schaltbaren Schicht enthaltene flüssigkristalline Medium und das in der zweiten schaltbaren Schicht enthaltene flüssigkristalline Medium jeweils einen Klärpunkt von mindestens 80°C aufweisen.

**9.** Fensterelement nach einem der Ansprüche 1 bis 8, wobei der Betrag der dielektrischen Anisotropie des in der ersten schaltbaren Schicht enthaltenen flüssigkristallinen Mediums und des in der zweiten schaltbaren Schicht enthaltenen flüssigkristallinen Mediums jeweils 2,5 oder mehr ist.

**10.** Fensterelement nach einem der Ansprüche 1 bis 9, wobei das in der ersten Schaltschicht enthaltene flüssigkristalline Medium und das in der zweiten schaltbaren Schicht enthaltene flüssigkristalline Medium jeweils, bezogen auf den Gesamtgehalt an Medium, mindestens 15 Gew.-% von einer oder mehreren mesogenen Verbindungen der Formel I

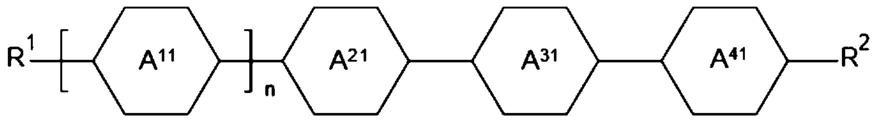 I

enthält, wobei

$R^1$ und $R^2$ unabhängig voneinander eine Gruppe bedeuten, die ausgewählt ist aus F, Cl, $CF_3$, $OCF_3$ und geradkettigem oder verzweigtem Alkyl oder Alkoxy mit 1 bis 15 Kohlenstoffatomen oder geradkettigem oder verzweigtem Alkenyl mit 2 bis 15 Kohlenstoffatomen, das unsubstituiert, einfach durch CN oder $CF_3$ substituiert oder ein- oder mehrfach durch Halogen substituiert ist und wobei eine oder mehrere $CH_2$-Gruppen jeweils unabhängig voneinander so durch -O-, -S-, -CO-, -COO-, -OCO-, -OCOO-, -C=C-,

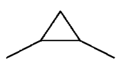,

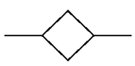, 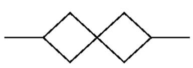, 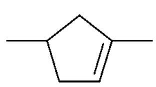 oder 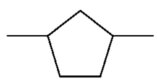

ersetzt sein können, dass Sauerstoffatome nicht direkt miteinander verknüpft sind,
$A^{11}$

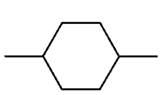, 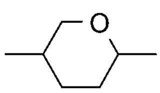, 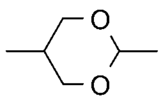,

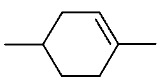, 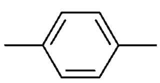, 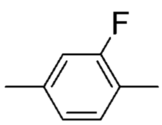,

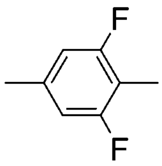 , 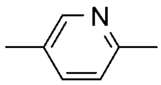 oder 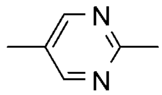

bedeutet,
n 0 oder 1 bedeutet, und
$A^{21}$, $A^{31}$ und $A^{41}$ unabhängig voneinander

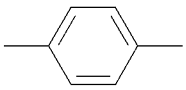 , 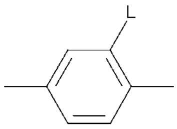 , 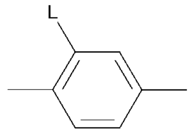 ,

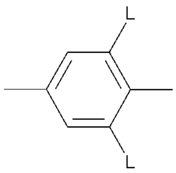 , 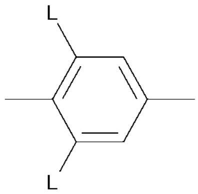 , 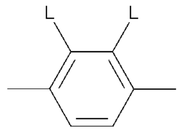 ,

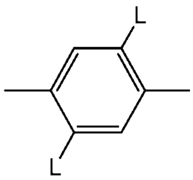 , 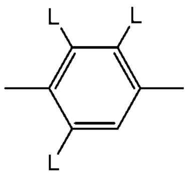 oder 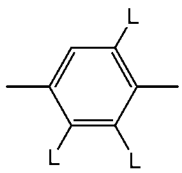

bedeuten,

wobei L bei jedem Auftreten gleich oder verschieden Halogen, das aus F, Cl und Br ausgewählt ist, oder Methyl ist.

**11.** Fensterelement nach einem der Ansprüche 1 bis 10, wobei das in der ersten schaltbaren Schicht enthaltene flüssigkristalline Medium und das in der zweiten schaltbaren Schicht enthaltene flüssigkristalline Medium ferner jeweils eine oder mehrere mesogene Verbindungen enthalten, die ausgewählt sind aus der Gruppe der Verbindungen der Formeln II und III

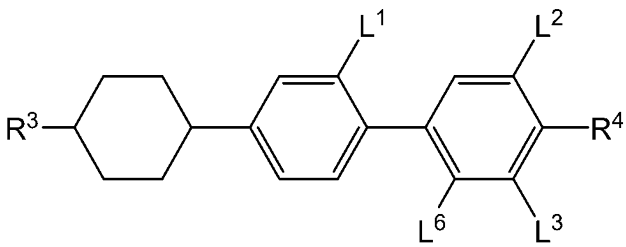 II

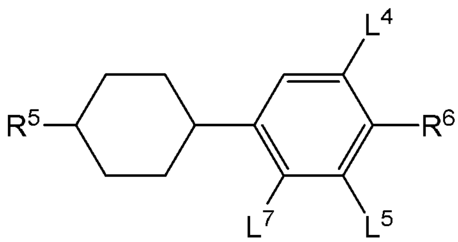 III

wobei

$R^3$, $R^4$, $R^5$ und $R^6$ unabhängig voneinander eine Gruppe bedeuten, die ausgewählt ist aus F, $CF_3$, $OCF_3$, CN und geradkettigem oder verzweigtem Alkyl oder Alkoxy mit 1 bis 15 Kohlenstoffatomen oder geradkettigem oder verzweigtem Alkenyl mit 2 bis 15 Kohlenstoffatomen, das unsubstituiert, einfach durch CN oder $CF_3$ substituiert oder ein- oder mehrfach durch Halogen substituiert ist und wobei eine oder mehrere $CH_2$-Gruppen jeweils unabhängig voneinander so durch -O-, -S-, -CO-, -COO-, -OCO-, -OCOO-, -C≡C-,

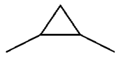,

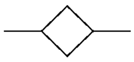, 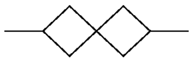, 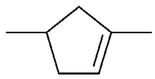 oder 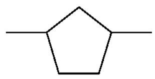

ersetzt sein können, dass Sauerstoffatome nicht direkt miteinander verknüpft sind,
$L^1$, $L^2$, $L^3$, $L^4$ und $L^5$ unabhängig voneinander H oder F bedeuten, und
$L^6$ und $L^7$ unabhängig voneinander H oder Methyl bedeuten.

**12.** Fensterelement nach einem der Ansprüche 1 bis 11, wobei die Dicke der ersten schaltbaren Schicht und der zweiten schaltbaren Schicht jeweils 20 μm oder darunter, vorzugsweise 15 μm oder darunter und insbesondere 10 μm oder darunter beträgt.

**13.** Fensterelement nach einem der Ansprüche 1 bis 12, wobei der eine oder die mehreren dichroitischen Farbstoffe ausgewählt sind aus Azofarbstoffen, Anthrachinonen, Methinverbindungen, Azomethinverbindungen, Merocyaninverbindungen, Naphthochinonen, Tetrazinen, Pyrromethenfarbstoffen, Malononitrilfarbstoffen, Rylenen, insbesondere Perylenen und Terylenen, Thiadiazolfarbstoffen, Thienothiadiazolfarbstoffen, Benzothiadiazolen, Thiadiazolochinoxalinen, Pyrromethenen und Diketopyrrolopyrrolen, vorzugsweise aus Azofarbstoffen, Anthrachinonen, Benzothiadiazolen, Diketopyrrolopyrrolen, Rylenen und Thiadiazolochinoxalinen und stärker bevorzugt aus Azofarbstoffen, Benzothiadiazolen und Thiadiazolochinoxalinen.

**14.** Fensterelement nach einem der Ansprüche 1 bis 13, wobei das Fensterelement keinen Polarisator umfasst.

**15.** Fensterelement nach einem der Ansprüche 1 bis 14, wobei das Fensterelement im dunklen Zustand einen Transmissionsgrad für sichtbares Licht, bestimmt gemäß DIN EN410, von weniger als 10 %, vorzugsweise weniger als 5 % und stärker bevorzugt weniger als 3 % aufweist.

**16.** Verwendung des Fensterelements nach einem der Ansprüche 1 bis 15 in einem Fenster eines Gebäudes oder eines Fahrzeugs.

## Revendications

**1.** Elément de fenêtre, qui comprend un agencement multicouche destiné à réguler le passage de la lumière et qui est utilisable et électriquement commutable entre un état brillant et un état sombre, où l'agencement multicouche comprend une première couche commutable et une deuxième couche commutable contenant chacune un milieu cristallin liquide comprenant un ou plusieurs colorants dichroïques et éventuellement un ou plusieurs composés chiraux, où dans l'un des états la première couche commutable et la deuxième couche commutable présentent une configuration nématique torsadée ou nématique super-torsadée et **caractérisé en ce que** le sens de torsion de l'une parmi la première et la deuxième couche commutable est dans le sens horaire et le sens de torsion de l'autre couche commutable est dans le sens antihoraire.

**2.** Elément de fenêtre selon la revendication 1, dans lequel le milieu cristallin liquide contenu dans la première couche commutable et le milieu cristallin liquide contenu dans la deuxième couche commutable comprennent chacun un dopant chiral, préférablement selon une concentration allant de 0,01% en poids à 5% en poids,
où préférablement les dopants chiraux respectifs sont des stéréoisomères l'un de l'autre, en particulier des énantiomères.

**3.** Elément de fenêtre selon la revendication 1 ou 2, dans lequel, pour chacune parmi la première et la deuxième couche commutable, la relation suivante s'applique

$$d * \Delta n < 3,0\ \mu m$$

dans laquelle d est l'épaisseur respective de chacune des couches commutables et $\Delta n$ est l'anisotropie optique du milieu cristallin liquide contenu respectivement dans chacune des couches commutables,
où préférablement $d * \Delta n < 2,0\ \mu m$, et plus préférablement $d * \Delta n < 1,5\ \mu m$.

**4.** Elément de fenêtre selon l'une ou plusieurs parmi les revendications 1 à 3, dans lequel l'amplitude du pas de la première couche commutable diffère de l'amplitude du pas de la deuxième couche commutable de 25% ou moins, préférablement de 10% ou moins, et où tout préférablement l'amplitude du pas de la première couche commutable est identique à l'amplitude du pas de la deuxième couche commutable.

**5.** Elément de fenêtre selon l'une ou plusieurs parmi les revendications 1 à 4, dans lequel l'agencement multicouche comprend, dans cet ordre,

- un premier substrat transparent,
- une première couche d'électrode,
- une première couche d'alignement,
- la première couche commutable,
- une deuxième couche d'alignement,
- une deuxième couche d'électrode,
- un deuxième substrat transparent,
- éventuellement une couche de liaison, d'adhérence ou de laminage,
- un troisième substrat transparent,
- une troisième couche d'électrode,
- une troisième couche d'alignement,
- la deuxième couche commutable,
- une quatrième couche d'alignement,
- une quatrième couche d'électrode, et
- un quatrième substrat transparent.

**6.** Elément de fenêtre selon l'une ou plusieurs parmi les revendications 1 à 4, dans lequel l'agencement multicouche comprend, dans cet ordre,

- un premier substrat transparent,
- une première couche d'électrode,
- une première couche d'alignement,
- la première couche commutable,
- une deuxième couche d'alignement,
- une deuxième couche d'électrode,
- un deuxième substrat transparent,
- une troisième couche d'électrode,
- une troisième couche d'alignement,
- la deuxième couche commutable,
- une quatrième couche d'alignement,
- une quatrième couche d'électrode, et
- un troisième substrat transparent,

où la deuxième couche d'alignement et la deuxième couche d'électrode sont disposées sur une première surface du deuxième substrat transparent et où la troisième couche d'électrode et la troisième couche d'alignement sont disposées sur une deuxième surface du deuxième substrat transparent.

**7.** Elément de fenêtre selon la revendication 5 ou 6, dans lequel la première, la deuxième, la troisième et la quatrième couche d'alignement comprennent du polyimide, préférablement sont constituée de polyimide frotté, et où plus préférablement les directions de frottement de la deuxième couche d'alignement et de la troisième couche

d'alignement sont orthogonales l'une par rapport à l'autre.

**8.** Elément de fenêtre selon l'une des revendications 1 à 7, dans lequel le milieu cristallin liquide contenu dans la première couche commutable et le milieu cristallin liquide contenu dans la deuxième couche commutable ont chacun un point de clarification d'au moins 80°C.

**9.** Elément de fenêtre selon l'une des revendications 1 à 8, dans lequel la valeur absolue de l'anisotropie diélectrique du milieu cristallin liquide contenu dans la première couche commutable et celle du milieu cristallin liquide contenu dans la deuxième couche commutable sont chacune de 2,5 ou plus.

**10.** Elément de fenêtre selon l'une des revendications 1 à 9, dans lequel le milieu cristallin liquide contenu dans la première couche commutable et le milieu cristallin liquide contenu dans la deuxième couche commutable contiennent chacun, sur la base de la teneur globale du milieu, au moins 15% en poids d'un ou plusieurs composés mésogènes de formule I

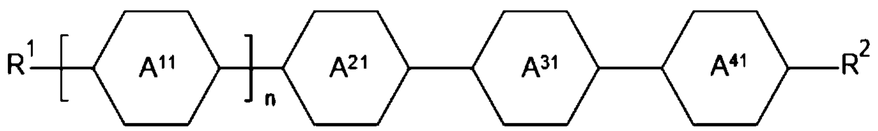 I

dans laquelle

$R^1$ et $R^2$ désignent, indépendamment l'un de l'autre, un groupement choisi parmi F, Cl, $CF_3$, $OCF_3$, et alkyle ou alcoxy à chaîne linéaire ou ramifiée ayant de 1 à 15 atomes de carbone ou alcényle à chaîne linéaire ou ramifiée ayant de 2 à 15 atomes de carbone qui est non substitué, monosubstitué par CN ou $CF_3$ ou mono- ou polysubstitué par halogène et où un ou plusieurs groupements $CH_2$ peuvent être, dans chaque cas indépendamment les uns des autres, remplacés par -O-, -S-, -CO-, -COO-, -OCO-, -OCOO-, -C=C-,

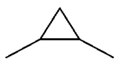, 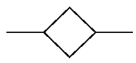, 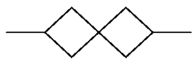, 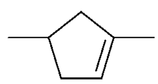 ou 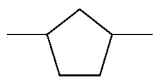

de telle sorte que les atomes de O ne soient pas liés directement les uns aux autres,
$A^{11}$ désigne

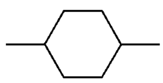, 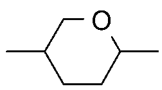, 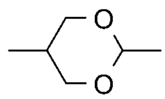,

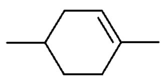, 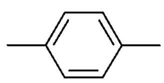, 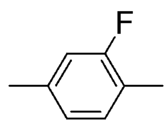,

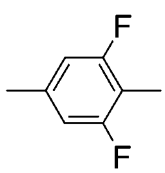, 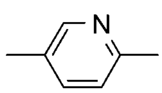 ou 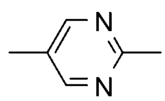,

n désigne 0 ou 1, et
$A^{21}$, $A^{31}$ et $A^{41}$ désignent, indépendamment les uns des autres,

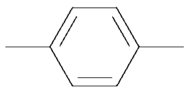 , 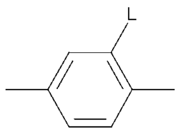 , 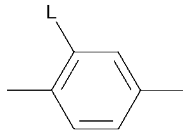 ,

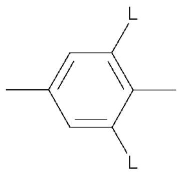 , 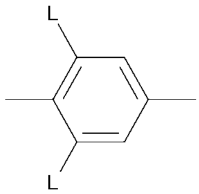 , 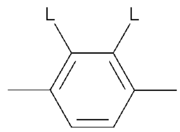 ,

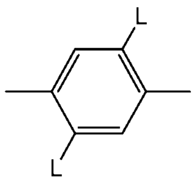 , 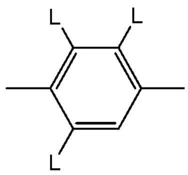 ou 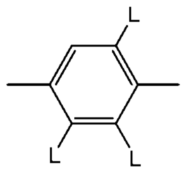

où L est à chaque occurrence, de manière identique ou différente, halogène choisi parmi F, Cl et Br, ou méthyle.

**11.** Elément de fenêtre selon l'une des revendications 1 à 10, dans lequel le milieu cristallin liquide contenu dans la première couche commutable et le milieu cristallin liquide contenu dans la deuxième couche commutable comprennent en outre chacun un ou plusieurs composés mésogènes choisis dans le groupe constitué par les composés de formules II et III

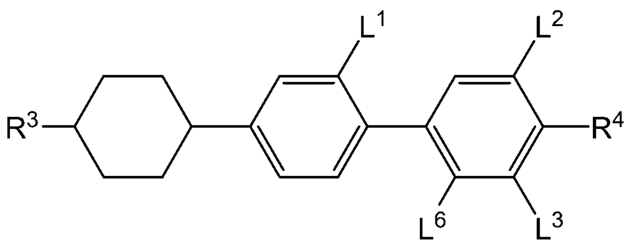 II

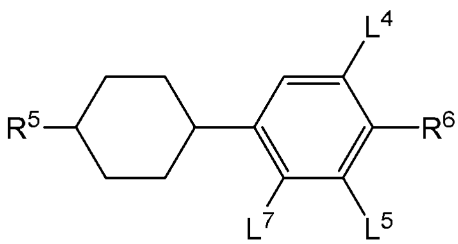 III

dans lesquelles

$R^3$, $R^4$, $R^5$ et $R^6$ désignent, indépendamment les uns des autres, un groupement choisi parmi F, $CF_3$, $OCF_3$, CN, et alkyle ou alcoxy à chaîne linéaire ou ramifiée ayant de 1 à 15 atomes de carbone ou alcényle à chaîne linéaire ou ramifiée ayant de 2 à 15 atomes de carbone qui est non substitué, monosubstitué par CN ou $CF_3$ ou mono- ou polysubstitué par halogène et où un ou plusieurs groupements $CH_2$ peuvent être, dans chaque cas indépendamment les uns des autres, remplacés par -O-, -S-, -CO-, -COO-, -OCO-, -OCOO-, -C≡C-,

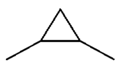 , 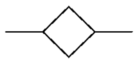 , 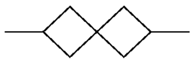 , 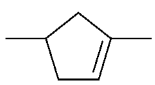

ou

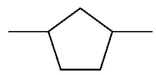

de telle sorte que les atomes de O ne soient pas liés directement les uns aux autres,
$L^1$, $L^2$, $L^3$, $L^4$ et $L^5$ désignent, indépendamment les uns des autres, H ou F, et
$L^6$ et $L^7$ désignent, indépendamment l'un de l'autre, H ou méthyle.

**12.** Elément de fenêtre selon l'une des revendications 1 à 11, dans lequel l'épaisseur de la première couche commutable et de la deuxième couche commutable sont chacune de 20 μm ou moins, préférablement de 15 μm ou moins et en particulier de 10 μm ou moins.

**13.** Elément de fenêtre selon l'une des revendications 1 à 12, dans lequel les ou plusieurs colorants dichroïques sont choisis parmi les colorants azoïques, les anthraquinones, les composés de méthine, les composés d'azométhine, les composés de mérocyanine, les naphtoquinones, les tétrazines, les colorants de type pyrrométhène, les colorants de type malononitrile, les rylènes, en particulier les pérylènes et les térylènes, les colorants de type thiadiazole, les colorants de type thiénothiadiazole, les benzothiadiazoles, les thiadiazoloquinoxalines, les pyrrométhènes et les dicétopyrrolopyrroles, préférablement parmi les colorants azoïques, les anthraquinones, les benzothiadiazoles, les dicétopyrrolopyrroles, les rylènes et les thiadiazoloquinoxalines, et plus préférablement parmi les colorants azoïques, les benzothiadiazoles et les thiadiazoloquinoxalines.

**14.** Elément de fenêtre selon l'une des revendications 1 à 13, l'élément de fenêtre ne comportant pas de polariseur.

**15.** Elément de fenêtre selon l'une des revendications 1 à 14, l'élément de fenêtre à l'état sombre présentant un degré de transmission de la lumière visible, déterminé conformément à la norme DIN EN410, inférieur à 10%, préférablement inférieur à 5%, et plus préférablement inférieur à 3%.

**16.** Utilisation de l'élément de fenêtre selon l'une des revendications 1 à 15, dans une fenêtre d'un bâtiment ou d'un véhicule.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017118465 A1
- WO 2014180525 A1
- WO 2014187529 A
- WO 2015090497 A
- WO 2014090373 A
- WO 2016177449 A
- DE 3425503
- DE 3534777
- DE 3534778
- DE 3534779
- DE 3534780
- DE 4342280
- EP 01038941 A
- DE 19541820
- WO 9800428 A
- GB 2328207 A
- WO 0294805 A
- WO 0234739 A
- WO 0206265 A
- WO 0206196 A
- WO 0206195 A
- EP 1378557 A1
- JP 7181439 A
- EP 0667555 A
- EP 0673986 A
- DE 19509410
- DE 19528106
- DE 19528107
- WO 9623851 A
- WO 9628521 A
- WO 2012079676 A


### Non-patent literature cited in the description


- **R. BAETENS et al.** Properties, requirements and possibilities of smart windows for dynamic daylight and solar energy control in buildings: A state-of-the-art review. *Solar Energy Materials & Solar Cells*, 2010, vol. 94, 87-105
- Dichroic Liquid Crystal Displays. Liquid Crystals: Applications and Uses. World Scientific, 1992, vol. 1-3
- Merck Liquid Crystals, Physical Properties of Liquid Crystals. Merck KGaA, November 1997
- **COWLING, STEPHEN J.** Liquid Crystal Dyes, in: Handbook of Liquid Crystals. Wiley-VCH Verlag GmbH & Co. KGaA, 2014
- **SUMIO TOKITA**. Colour Chemistry. Maruzen Company, Limited, 1982
- Introduction to Colorimetry. Walter de Gruyter & Co, 1981
- **B. BAHADUR**. Liquid Crystals - Applications and Uses. World Scientific Publishing, 1992, vol. 3
- **HOUBEN-WEYL**. Methoden der Organischen Chemie [Methods of Organic Chemistry. Georg-Thieme-Verlag
- **S. MATSUMOTO et al.** *Liquid Crystals*, 1989, vol. 5, 1320
- **K. NIWA et al.** *Proc. SID Conference, San Francisco*, June 1984, 304
- **T. JACOB** ; **U. FINKENZELLER**. *Merck Liquid Crystals - Physical Properties of Liquid Crystals*, 1997